# FASCICULE DE BREVET EUROPEEN

(11) **EP 2 951 436 B1**
(45) Date de publication et mention de la délivrance du brevet: **07.12.2016**
(21) Numéro de dépôt: 14708602.9
(22) Date de dépôt: 31.01.2014
(51) Int. Cl.: F04B 1/047, F03C 1/047, F03C 1/26, F16H 61/40, F16H 39/04, B60K 17/10, F16H 39/00, F16H 39/40

(54) **MOTEUR POMPE HYDRAULIQUE A CYLINDRÉE FIXE OU VARIABLE**
HYDRAULISCHE MOTOR-PUMPENEINHEIT MIT FESTEM ODER VARIABLEM HUBRAUM
HYDRAULIC MOTOR-PUMP UNIT WITH FIXED OR VARIABLE DISPLACEMENT

(30) Priorité: 04.02.2013 FR 1350949; 22.05.2013 FR 1354562
(43) Date de publication de la demande: 09.12.2015
(73) Titulaire: Rabhi, Vianney, 69006 Lyon (FR)
(72) Inventeur: Rabhi, Vianney, 69006 Lyon (FR)
(74) Mandataire: Godard, Xavier
(86) Numéro de dépôt international: PCT/FR2014/050182
(87) Numéro de publication internationale: WO 2014/118477

(56) Documents cités:
- EP-A2- 1 884 688
- FR-A1- 2 940 671
- US-A- 5 234 321
- US-B1- 6 536 212

## Description

La présente invention est relative à un moteur-pompe hydraulique à cylindrée fixe ou variable.

Des pompes hydrauliques, moteur-pompes hydrauliques et moteurs hydrauliques sont mis en oeuvre dans de nombreuses applications industrielles et domestiques et pourraient, sous certaines conditions, être également utilisés comme moyen de transmission de la puissance entre le moteur thermique ou électrique des véhicules automobiles et les roues desdits véhicules. Diverses applications industrielles et domestiques pourraient ainsi tirer un bénéfice substantiel d'un moteur-pompe hydraulique offrant un rendement élevé pour un coût modéré. C'est toutefois dans le domaine de la propulsion automobile que les conséquences positives d'ordre environnemental, énergétique et économique d'un tel moteur-pompe hydraulique seraient les plus évidentes. Des ensembles moteur-pompe hydraulique à cylindrée fixe ou variable utilisables pour des boîtes de vitesses ou des transmissions sont par exemple connus des documents FR 2 940 671 A ou EP 1 884 688 A2.

La grande majorite des véhicules automobiles circulant dans le monde est propulsée par un moteur thermique à combustion interne alternatif fonctionnant principalement avec des carburants dérivés du pétrole. Pour des raisons à la fois environnementales, énergétiques et économiques, réduire la consommation de carburant des automobiles et les émissions de dioxyde de carbone associées figure parmi les priorités de la plupart des pays du monde. En conséquence, les moteurs automobiles à combustion interne alternatifs font l'objet de constantes améliorations pour en augmenter le rendement, particulièrement en utilisation courante.

Les progrès ne s'en limitent cependant pas au moteur thermique lui-même : la réduction du poids des automobiles, de leur traînée aérodynamique et de la résistance au roulement de leurs pneumatiques contribue également à réduire la consommation de carburant kilométrique desdites automobiles, en réduisant le travail que doit fournir leur moteur thermique pour les propulser. Le recours à des équipements embarqués à haut rendement énergétique participe également à la réduction de la consommation de carburant des véhicules automobiles, que lesdits équipements soient dédiés à la climatisation de l'habitacle, à l'assistance de la direction, à l'éclairage, ou encore, à l'information et à la communication.

En dehors du moteur thermique lui-même, au moins quatre autres stratégies permettent d'améliorer notablement le rendement énergétique d'un véhicule automobile :
- La réduction des pertes par frottement produites par les organes qui transmettent aux roues dudit véhicule le travail mécanique produit par son moteur thermique ;
- L'optimisation permanente du rapport de la transmission reliant ledit moteur thermique aux roues motrices dudit véhicule de sorte que ledit moteur travaille toujours au plus proche de son point de fonctionnement offrant le meilleur rendement énergétique ;
- Le stockage temporaire de tout ou partie du travail mécanique que produit le moteur thermique lorsque son rendement est élevé, ledit travail étant ensuite déstocké aux fins de mouvoir le véhicule automobile dans les plages de puissance où le rendement dudit moteur est ordinairement faible, de sorte à éviter d'utiliser ledit moteur dans lesdites plages ;
- La récupération de la plus grande part possible de l'énergie cinétique du véhicule automobile lors de son freinage ou de sa décélération, en remplaçant autant que possible l'usage des freins à frottement qui dissipent en pure perte ladite énergie sous forme de chaleur, par le stockage de ladite énergie sous une forme réutilisable en phase de ré accélération dudit véhicule, le dispositif de stockage de ladite énergie devant offrir le meilleur rendement possible tant au stockage qu'au déstockage, et devant avoir une puissance de stockage et de déstockage telle que le maximum d'énergie cinétique du véhicule puisse être récupérée, puis restituée.

Ces quatre stratégies se retrouvent de façon isolée ou combinées entre elles dans divers types de transmissions combinables avec divers dispositifs d'hybridation thermique-électrique, thermique-pneumatique ou thermique-hydraulique, chaque configuration constituant un compromis entre divers avantages et divers inconvénients sans qu'aucune ne soit en pratique pleinement satisfaisante.

Au moins deux types de transmission sont utilisés dans le cadre de la propulsion automobile : les transmissions à rapports discrets basées sur des trains d'engrenages, et celles à variation continue principalement basées sur des courroies, des galets ou des moteurs-pompes hydrauliques à cylindrée variable. Les transmissions à rapports discrets peuvent être à commande manuelle ou automatique, tandis que les transmissions à variation continue sont en général à commande automatique.

Les transmissions classiques à engrenages possèdent un rendement élevé car le travail qu'elles transmettent passe par un nombre réduit de couples de pignons taillés en développante de cercle. En outre, lesdites transmissions sont couplées avec le moteur thermique au moyen d'un embrayage à disque sec qui ne dissipe de l'énergie qu'au moment des changements de rapport, et en faible quantité. Ces transmissions sont en général actionnées par le conducteur qui en sélectionne les rapports manuellement, selon sa libre appréciation. Lesdites transmissions à engrenages sont connues sous l'appellation de « boîte de vitesses manuelle ». Elles sont encore majoritaires dans la production automobile mondiale car elles offrent le meilleur rendement mécanique toutes transmissions confondues, et sont peu coûteuses à produire.

Il est possible d'optimiser l'utilisation des rapports de transmission des boîtes de vitesses classiques à engrenages sur un critère de rendement maximal ou de puissance maximale du moteur thermique. Ceci peut être réalisé en confiant le choix du rapport engagé à un logiciel opéré par un micro processeur. En ce cas, un automate se substitue au conducteur dont la pédale d'embrayage et le levier de vitesses sont remplacés par des actionneurs électromécaniques, électro-hydrauliques ou électropneumatiques agissant directement sur l'embrayage et sur les fourchettes de sélection des rapports de la boîte de vitesses. Ces transmissions dites « boîte de vitesses mécanique robotisée » offrent à la fois un excellent rendement mécanique et une bonne optimisation des points de fonctionnement du moteur.

Le principal inconvénient de cette configuration est une relative lenteur dans le changement des rapports de transmission qui conduit - pour le conducteur du véhicule - à une sensation désagréable de perte de continuité dans la transmission de la puissance. Ce problème est fortement atténué voire pratiquement éliminé si des actionneurs rapides sont utilisés, qui coopèrent avec des bagues de synchronisation également rapides. Le problème de ces dernières solutions est leur coût qui les cantonne à des transmissions pour véhicules haut-de-gamme et à hautes performances.

Il est possible de bénéficier simultanément du rendement mécanique élevé d'une transmission manuelle robotisée et d'un passage rapide des rapports de transmission en imbriquant deux boîtes de vitesses l'une dans l'autre et dans le même carter. Selon cette configuration, la première boîte de vitesses comporte les rapports pairs, tandis que la seconde comporte les rapports impairs. Ces transmissions dites « boîte de vitesses à double embrayage » assurent une excellente continuité de transmission de la puissance lors des changements de rapports car le rapport qui suit le rapport courant est pré engagé. Ainsi, grader ou rétrograder les rapports de transmission fait alternativement appel à l'embrayage qui correspond à la première boîte de vitesses puis à celui correspondante à la deuxième boîte de vitesses, les deux embrayages n'étant jamais en prise simultanément. Cependant, les transmissions à double embrayage restent plus lourdes, plus chères et plus encombrantes que les boîtes de vitesses manuelles classiques.

Une grande part du marché automobile mondial est équipée de boîtes de vitesses dites « boîte de vitesses automatiques ». Ces boîtes de vitesses majoritairement commercialisées en Amérique du nord sont en général raccordées au moteur thermique au moyen d'un coupleur hydraulique ou d'un convertisseur hydro cinétique aussi appelés « convertisseur de couple ». En alternative au convertisseur de couple, lesdites boîtes peuvent être raccordées au moteur thermique au moyen d'un embrayage robotisé classique à sec ou à bain d'huile. Les boîtes de vitesses automatiques intègrent une succession de trains épicycloïdaux dont les couronnes peuvent être bloquées en rotation par des freins, lesdites couronnes ainsi bloquées transmettant alors le couple produit par le moteur thermique aux roues du véhicule. Les boîtes de vitesses automatiques présentent l'avantage d'une excellente progressivité dans le passage des rapports et d'une bonne continuité de transmission de la puissance. En revanche, leur rendement reste médiocre car elles impliquent de nombreuses pertes énergétiques que ce soit à cause du convertisseur de couple, de l'éventuel embrayage de pontage dit « lock-up », des embrayages de sélection des rapports, et des divers pompe(s) et actionneurs qu'elles comportent.

Une autre famille de transmissions est dite «boîte de vitesses à variation continue » ou « Continuously Variable Transmission » suivant le terme anglo-saxon consacré correspondant à l'acronyme « CVT ». Les boîtes de vitesses à variation continue offrent une infinité de rapports entre deux rapports extrêmes et transmettent en général le travail produit par le moteur thermique aux roues du véhicule via le frottement entre une courroie trapézoïdale et des poulies à flancs coniques, ou via le frottement entre des galets de différentes formes tels que trouvés dans la transmission dite « toroïdale » produite par la société « Torotrak© » ou la transmission dite « Extroïd© » produite par la société « Nissan© ». Si le plus petit rapport de transmission de ladite boîte de vitesses est non nul, il est ordinairement nécessaire de lui adjoindre un embrayage ou un convertisseur de couple placé entre le moteur thermique et ladite boîte pour lancer le véhicule. Sauf à coûter très voire trop cher à produire, les boîtes de vitesses à variation continue ont en général un rendement mécanique inférieur à celui des boîtes de vitesses manuelles à engrenages en développante de cercle. En revanche, lesdites boîtes offrant une parfaite continuité de transmission et une infinité de rapports de transmission, elles permettent de faire fonctionner le moteur thermique au plus proche de son meilleur rendement en situation ordinaire de conduite du véhicule, ou sur son point de puissance maximale lorsque le conducteur sollicite son véhicule pour en obtenir une accélération ou une vitesse maximales.

Il existe également des boîtes de vitesses à variation continue hydrauliques comprenant au moins une pompe hydraulique émettrice à cylindrée variable ou à cylindrée fixe et au moins un moteur-pompe hydraulique récepteur à cylindrée variable ou à cylindrée fixe, la pompe émettrice ou au moins le ou lesdits moteur-pompes devant être à cylindrée variable. Les pompes émettrices et/ou moteur-pompes récepteurs utilisés sont en général basées sur des pistons axiaux ou sur un système d'engrenage intérieur ou extérieur.

Le rapport entre la cylindrée de la pompe émettrice et celle du moteur-pompe hydraulique récepteur définit le rapport de transmission, corrigé du rendement volumétrique de ces deux organes. Les boîtes de vitesses à variation continue hydrauliques offrent une infinité de rapport de transmission en partant d'un rapport nul si la plus petite cylindrée qu'offre la pompe émettrice est nulle. En ce cas, aucun embrayage ou convertisseur de couple n'est nécessaire. En outre, Il est possible de prévoir plusieurs moteur-pompes hydrauliques récepteurs pour une même pompe hydraulique émettrice. Toutefois, les boîtes de vitesses à variation continue hydrauliques s'accommodent mal des régimes de rotation élevés et présentent l'inconvénient d'un faible rendement moyen, ledit rendement variant fortement en fonction du régime et du couple à transmettre. Pour cette raison, les boîtes de vitesses à variation continue hydrauliques sont en général prévues sur des véhicules lents comme les engins de travaux publics et les machines agricoles car elles sont compactes et flexibles, la pompe émettrice et le ou les moteur(s) hydraulique(s) récepteurs pouvant être reliés entre eux par des conduits rigides ou souples.

Quel qu'en soit le type, les transmissions peuvent éventuellement coopérer avec un ou plusieurs moyens de stockage d'énergie secondaire, c'est à dire d'énergie préalablement convertie en travail mécanique par le moteur thermique du véhicule. Lesdits moyens de stockage permettent d'une part, de faire fonctionner ledit moteur au plus proche de son meilleur rendement et d'autre part, de récupérer une partie de l'énergie cinétique du véhicule lors de sa décélération ou de son freinage, ou une partie de l'énergie gravitationnelle qu'a accumulée ledit véhicule lorsqu'il descend une pente. Une fois stockée, ladite énergie secondaire peut être ultérieurement utilisée pour ré accélérer ledit véhicule ou pour en maintenir la vitesse lorsqu'il est en mouvement quel que soit le profil de la voie sur laquelle il circule. Lesdits moyens de stockage d'énergie secondaire peuvent être notamment constitués d'un accumulateur électrochimique ou électrostatique d'électricité cette dernière étant ensuite réutilisable par un moteur électrique, d'un volant d'inertie stockant de l'énergie cinétique récupérable via une transmission mécanique ou via un générateur d'électricité alimentant un moteur électrique, ou d'un réservoir de fluide ou de gaz sous pression utilisable pour entraîner un moteur hydraulique ou pneumatique récepteur.

La capacité énergétique, le rendement, la puissance, et le nombre de cycles de stockage-déstockage qu'ils permettent sur leur durée de vie sont les principales caractéristiques qui déterminent la pertinence et l'intérêt des différents moyens de stockage d'énergie secondaire. En outre, la pérennité du stockage qu'offrent lesdits moyens rend ces derniers plus ou moins efficaces à réduire la consommation énergétique des véhicules automobiles en fonction de la fréquence et du type de parcours qu'ils effectuent. Le coût par kilowattheure d'énergie stockée et/ou par kilowatt de puissance et la densité énergétique massique et volumique desdits moyens de stockage d'énergie secondaire les rendent également plus ou moins adaptés à la propulsion automobile laquelle en appelle à une large commercialisation desdits moyens de stockage pour réduire significativement ses émissions de dioxyde de carbone au niveau mondial.

La forme de stockage d'énergie secondaire la plus communément utilisée est l'électricité. Ce stockage est mis en oeuvre sur des véhicules dits « hybrides thermique-électrique », que ces derniers soient de type série ou parallèle, et qu'ils soient de type rechargeable ou non. L'électricité présente l'avantage d'un rendement relativement élevé de toute sa chaîne de production, de stockage, et de restitution, qu'il s'agisse du générateur qui produit ladite électricité à partir du travail mécanique que délivre le moteur thermique ou à partir de la décélération du véhicule, des accumulateurs qui la stockent, ou du moteur électrique qui la retransforme en travail mécanique. Les accumulateurs électrochimiques ordinairement utilisés dans ce contexte peuvent aisément stocker l'énergie nécessaire au véhicule pour parcourir plusieurs kilomètres voire plusieurs dizaines de kilomètres.

Utilisée comme moyen de stockage d'énergie secondaire, l'électricité pose néanmoins divers problèmes parmi lesquels figure la puissance de charge limitée des accumulateurs électrochimiques. Ceux-ci ne permettent en effet de stocker qu'une fraction limitée de l'énergie cinétique du véhicule lors de son freinage, particulièrement s'agissant des freinages à forte décélération. Autre problème : la durée de vie des accumulateurs électrochimiques est réduite à un nombre limité de cycles de charge-décharge tandis que les freinages opérés durant la vie d'un véhicule automobile sont très nombreux. Ces deux problèmes peuvent être résolus par l'emploi d'accumulateurs électrostatiques - appelés aussi « super capacités » - mais ces derniers sont trop chers pour être utilisés à large échelle en automobile. Bien que plus abordables, les accumulateurs électrochimiques n'en restent pas moins également chers et font appel à des matériaux rares, tandis que leur fabrication et leur recyclage pose potentiellement divers problèmes environnementaux. En outre, plus le rendement des composants électriques que comporte le système de propulsion d'un véhicule automobile hybride thermique-électrique est élevé, plus le prix de revient en fabrication desdits composants est élevé.

L'utilisation d'un volant d'inertie pour stocker de l'énergie secondaire est connue sous l'acronyme « SREC », ce qui signifie « Système de Récupération de l'Energie Cinétique », plus connu sous l'appellation anglaise « KERS » pour « Kinetic Energy Recovery System ». Ces dispositifs principalement utilisés en Formule 1 sont constitués d'un volant d'inertie tournant à vitesse élevée dans un carter porté à très basse pression, proche du vide d'air. Ledit volant peut être temporairement relié à la transmission du véhicule de façon mécanique au moyen d'une transmission à variation continue, ou indirectement par l'intermédiaire d'un générateur et d'un moteur électrique. Les « SREC » présentent l'avantage d'une forte puissance de stockage et de déstockage d'énergie, en revanche, ils sont chers, potentiellement dangereux, génèrent des effets gyroscopiques indésirables, et ne stockent de l'énergie que pour un temps limité.

Le stockage d'énergie secondaire au moyen d'au moins un accumulateur de pression est mis en oeuvre par diverses sociétés telles que « Artemis Intelligent Power© », « INNAS© », « Bosch Rexroth© » ou « Eaton© » connu pour son système de démarrage assisté « NLA® » (Hydraulic Launch Assist™), ces deux dernières sociétés se focalisant particulièrement sur des applications pour poids-lourds ou pour engins de travaux publics. Les véhicules ainsi équipés répondent en général à la dénomination de « hybride hydraulique », qu'ils soient de type série ou parallèle. A la demande, l'accumulateur de pression mis en oeuvre est mis en relation soit avec un moteur-pompe hydraulique émetteur lorsque le système fonctionne en mode stockage, soit avec au moins un moteur-pompe hydraulique récepteur, en mode déstockage. Le stockage d'énergie secondaire par accumulateur de pression est difficilement applicable à l'automobile du fait des régimes de rotation élevés des moteurs thermiques qu'on y emploie, lesdits régimes étant difficilement compatibles avec les moteur-pompes hydrauliques à pistons axiaux ou à pistons radiaux selon l'état de l'art, seuls capables des niveaux de pression et performances énergétiques nécessaires. En outre, la pression de fonctionnement desdits moteur-pompes reste relativement faible, inférieure à 500 bar, ce qui nécessite des accumulateurs de pression lourds et encombrants pour stocker l'énergie secondaire nécessaire à optimisation énergétique du véhicule, de tels accumulateurs étant difficilement logeables dans un véhicule de tourisme.

En théorie pourtant, la réduction de consommation de carburant la plus importante est trouvée en recourant à l'hybridation hydraulique du fait de sa puissance, de sa longévité et de son rendement élevé de stockage-déstockage. En pratique, lorsqu'ils sont utilisés pour transmettre du travail mécanique, le rendement des moteur-pompes hydrauliques est faible comparativement à celui des engrenages en développante de cercle. Ainsi, la configuration la plus courante est l'hybride hydraulique parallèle qui comprend au moins une pompe hydraulique, un moteur-pompe hydraulique et des moyens de stockage-déstockage hydrauliques accolés à une transmission conventionnelle à engrenages. Ce type de configuration est généralement trouvée sur des véhicules poids-lourds opérant à faibles vitesses et subissant de fréquents arrêts et redémarrages comme les bennes à ordures et les camions de livraison urbaine. Toutefois, on note que la société « Peugeot-Citroën » a présenté un prototype de véhicule hybride thermique-hydraulique nommé « Hybrid Air » et basé sur la même architecture, c'est à dire, avec le montage en parallèle d'une boîte de vitesses automatique et de pompes hydrauliques de stockage-déstockage d'énergie au freinage. Les pressions de stockage restant relativement faibles, les accumulateurs restent encombrants et occupent une grande part du soubassement du véhicule tout en ne stockant que peu d'énergie. Malgré cela, le concept « Hybrid Air » permet à « Peugeot-Citroën » d'annoncer des consommations de carburant en net recul par rapport à l'état de l'art.

Dans ces domaines d'application, bien qu'existent notamment des pompes à engrenages intérieurs ou extérieurs ou des pompes à palettes, ce sont les pompes hydrauliques à pistons axiaux ou radiaux qui offrent le meilleur rendement. En outre, il est possible de faire varier la cylindrée de ces pompes à pistons par exemple au moyen d'un plateau qui peut être plus ou moins incliné, ou d'une cage qui peut être plus ou moins excentrée. Pour s'accommoder des conditions continument variables d'utilisation des véhicules automobiles, lesdites pompes doivent pouvoir fonctionner à vitesse, pression et cylindrée continument variables tout en conservant un rendement élevé ce qui, en l'état actuel de l'art et de la technique, n'est pas possible. En effet, selon l'état actuel de la technique, les pompes hydrauliques à pistons ont un rendement optimal pour une vitesse, une pression et une cylindrée donnée. Lorsqu'on s'écarte de ces conditions optimales de fonctionnement, le rendement desdites pompes diminue rapidement au point que dans le cadre d'une application automobile, le bénéfice de la variation continue du rapport de transmission et celui de la récupération de l'énergie cinétique et gravitationnelle du véhicule est faible voire nul, et même, possiblement négatif.

Le rendement des pompes hydrauliques est notamment déterminé par leur étanchéité qui, étant non-parfaite, implique l'existence de fuites par exemple au niveau des pistons et du distributeur desdites pompes. Le rendement des pompes hydrauliques est également réduit d'une part, par les frottements survenant dans les zones de contact entre les pièces mobiles et/ou entre les pièces mobiles et les pièces fixes constituant lesdites pompes et d'autre part, par les pertes de charge intervenant dans les conduits desdites pompes.

Le recours aux pompes hydrauliques souffre de divers écueils et contradictions. En effet, une pression élevée est favorable au rendement des pompes hydrauliques car elle en réduit les pertes de charge pour une même définition de conduits. Toutefois, ladite pression élevée réduit le rendement volumétrique desdites pompes car non seulement les débits de fuite de ces dernières s'en trouvent augmentés pour une même étanchéité, mais lesdits débits sont plus grands relativement au débit desdites pompes. De même, à iso pression, plus on réduit la cylindrée d'une pompe hydraulique pour répondre aux besoins instantanés d'usage d'une transmission, plus ses pertes par frottement et ses pertes d'étanchéité deviennent grandes relativement au travail utile transmis par ladite pompe.

Pourtant, réaliser une transmission hydraulique avec stockage d'énergie secondaire destinée à l'automobile plaide en faveur de pressions élevées pour favoriser autant que possible le rendement final de ladite transmission d'une part, et pour minimiser la dimension des organes de stockage d'énergie secondaire d'autre part, tandis qu'il est impératif dans ce contexte de disposer d'une pompe hydraulique délivrant un rendement élevé à faible cylindrée, les automobiles étant le plus souvent utilisées à faibles vitesses et à faibles puissances.

On note qu'outre la nécessité de disposer de hauts rendements subsistent notamment des enjeux de contrôlabilité de la cylindrée des diverses pompes et/ou moteur-pompes hydrauliques mis en oeuvre, des enjeux de continuité de la transmission de puissance qui ne doit pas être affectée par les pulsations propres aux pompes hydrauliques émettrices et au(x) moteur-pompe(s) hydraulique(s) récepteur(s), et des enjeux acoustiques et d'érosion par cavitation, les hautes pressions opérationnelles induisant de fortes sollicitations mécaniques et potentiellement, de violentes détentes de fluide hydraulique.

C'est pourquoi on remarque que les pompes hydrauliques à pistons ont fait l'objet de nombreux développements pour en améliorer les performances fonctionnelles et énergétiques. Parmi les réalisations les plus pertinentes, on trouve celle de la société « Artemis Intelligent Power© » qui a réalisé une pompe à pistons présentant d'excellents niveaux d'étanchéité et de faibles pertes par frottement grâce à des électrovannes rapides qui règlent les entrées-sorties de fluide hydraulique et la cylindrée effective de plusieurs cylindres de pompe placés radialement autour d'un excentrique. Ces électrovannes et les éléments électroniques qui les commandent constituent le concept « Digital Displacement© ^{»} lequel se substitue avantageusement aux distributeurs mécaniques habituels qui génèrent des fuites non-négligeables et des pertes par frottement importantes. En outre, la pompe hydraulique de « Artemis Intelligent Power© » limite considérablement les efforts radiaux auxquels sont soumis ses pistons ce qui en limite les pertes énergétiques associées dans les mêmes proportions, lesdits pistons opérant dans des cylindres articulés dans des chambres sphériques qui en obturent l'extrémité.

Toutefois, la pompe de « Artemis Intelligent Power© » offre un fonctionnement d'autant plus pulsé que la cylindrée de ladite pompe est faible, la réduction de ladite cylindrée s'opérant par troncature de la course utile des pistons. Ceci est d'autant plus sensible que - pour des raisons de coût et d'encombrement - ladite pompe ne peut comporter qu'un nombre de cylindres limité notamment dans le cadre d'une transmission à usage automobile. Quelle que soit l'hypothèse retenue, la pompe hydraulique de «Artemis Intelligent Power© » reste relativement chère à fabriquer et la fiabilité et la consommation électrique de ses électrovannes d'entrée-sortie sollicitées à chaque tour restent des points critiques.

Similairement, la société « INNAS© » a développé son concept « Floating Cup » dont il résulte une pompe à pistons à cylindrée variable à haut rendement de crête et générant de faibles pulsations. Cette pompe est notamment prévue pour propulser un véhicule automobile suivant le concept d'hybridation hydraulique dit « Hydrid » revendiqué par ladite société. Bien qu'efficace dans certaines conditions d'utilisation, la pompe « Floating Cup » présente de nombreux passages de fuite et son rendement volumétrique s'en trouve fortement diminué, particulièrement à cylindrées partielles. Ceci est contradictoire avec le cahier des charges d'une pompe hydraulique destinée à propulser un véhicule automobile. Malgré les enjeux qui viennent d'être exposés et les défis afférents à ces enjeux, il y aurait un avantage décisif à disposer d'un moteur-pompe hydraulique à cylindrée fixe ou variable suffisamment peu cher à fabriquer et à haut rendement énergétique pour toutes applications industrielles, domestiques ou automobiles. Un tel moteur-pompe permettrait notamment de réaliser des boîtes de vitesses hydrauliques à variation continue avec récupération d'énergie au freinage, suffisamment efficaces, compactes et bon marché pour être applicables à l'automobile. Outre être utilisées pour transmettre le travail produit par des moteurs à combustion interne alternatifs, de telles transmissions rendraient possible l'emploi de moteurs thermiques non-alternatifs comme les turbomoteurs, ces derniers nécessitant une grande flexibilité de réglage du rapport de transmission instantané, une assistance motrice au lancement du véhicule pour compenser le temps de réponse desdits turbomoteurs, et la récupération de l'énergie cinétique rotative des turbines constitutives desdits turbomoteurs lors de leur ralentissement ou de leur arrêt en rotation.

C'est pour résoudre différents problèmes liés aux pompes et moteurs hydrauliques en général et aux boîtes de vitesses manuelles ou robotisées, aux boîtes de vitesses automatiques, ou aux boîtes à vitesses à variation continue, que ces boîtes soient couplées ou non à un dispositif de stockage d'énergie secondaire électrique, inertiel ou à accumulation de pression, que le moteur-pompe hydraulique à cylindrée fixe ou variable selon l'invention propose selon le mode de réalisation retenu :
- Une compatibilité avec les très hautes pressions de fonctionnement, possiblement jusqu'à deux mille bar et plus, et avec les fluides hydrauliques à faible viscosité ;
- Une parfaite réversibilité permettant d'utiliser ledit moteur-pompe hydraulique indifféremment comme pompe hydraulique et comme moteur hydraulique, avec un rendement similaire en mode « pompe » et en mode « moteur » ;
- Une configuration mécanique à haut rendement avec notamment des pistons hydrauliques qui ne sont soumis à aucun effort radial, et avec une reprise de la majorité des efforts par des liaisons à roulement ;
- Un distributeur d'entrée-sortie présentant des fuites hydrauliques et des pertes par frottement faibles ;
- Une bonne contrôlabilité, en continu, de la cylindrée dudit moteur-pompe hydraulique depuis une cylindrée nulle jusqu'à une cylindrée maximale ;
- Une relative facilité à prévoir un nombre élevé de pistons angulairement répartis de sorte à limiter les variations de pression et de débit en entrée ou en sortie dudit moteur-pompe hydraulique ;
- Une bonne compatibilité avec les régimes de rotation relativement élevés des moteurs thermiques automobiles ;
- Un prix de revient modéré.

Dans le cadre spécifique de la transmission automobile, le moteur-pompe hydraulique à cylindrée fixe ou variable selon l'invention prévoit :
- Un rendement de transmission hydraulique élevé, proche de celui des boîtes de vitesses manuelles à engrenages en développante de cercle, et ceci, sur une plage de régime et de charge étendue et compatible avec tous les usages d'un véhicule automobile ;
- Un décollage des véhicules depuis l'arrêt sans embrayage ni convertisseur de couple ces deux dispositifs étant dissipateurs d'énergie, avec la possibilité d'un rapport de transmission nul suivi d'une infinité de rapports de transmission depuis ce rapport nul jusqu'à un rapport de transmission maximal ;
- Un système de stockage d'énergie secondaire compact, puissant, robuste, à haut rendement, offrant un nombre de cycles de stockage-déstockage compatible avec l'entièreté de la durée de vie d'un véhicule automobile, et capable de conserver la grande majorité de ladite énergie secondaire sur de longues périodes de temps lorsque ledit véhicule est à l'arrêt.

Résultant de ces premières caractéristiques, le moteur-pompe hydraulique à cylindrée fixe ou variable selon l'invention permet notamment :
- De faire travailler les moteur thermiques et notamment ceux utilisés pour propulser les automobiles au plus proche de leur meilleur rendement, en adaptant en permanence le rapport de transmission entre lesdits moteurs et les roues desdites automobiles ;
- De stocker tout ou partie du travail mécanique produit par les moteurs thermiques qui sont utilisés pour propulser les automobiles lorsque lesdits moteurs offrent un rendement élevé, pour ensuite restituer ledit travail dans des conditions de conduite desdites automobiles où il est préférable d'éviter d'utiliser lesdits moteurs du fait de leur trop faible rendement, ledit stockage et ladite restitution s'opérant à rendement élevé ;
- De récupérer une part importante de l'énergie cinétique des véhicules automobiles lors de leur freinage ou de leur décélération, et/ou de l'énergie gravitationnelle desdits véhicules lors de leur descente de pentes, puis de restituer ladite énergie sous forme de travail mécanique lors de la ré-accélération desdits véhicules, pour assurer la propulsion desdits véhicules.

Outre ces avantages, le moteur-pompe hydraulique à cylindrée fixe ou variable selon l'invention prévoit, selon divers modes de réalisation
- De pouvoir charger artificiellement les moteurs thermiques alternatifs en démarrage à froid, c'est à dire de demander auxdits moteurs plus de puissance que nécessaire à la propulsion du véhicule, cette puissance excédentaire induisant d'une part, une production de chaleur accrue à l'échappement desdits moteurs laquelle accélère la montée en température de leur dispositif de post-traitement des polluants, et étant convertie d'autre part, en chaleur à l'intérieur desdits moteurs pour accélérer la montée en température de ces derniers ;
- D'assurer la fonction « stop and start » qui prévoit d'arrêter les moteurs thermiques des véhicules automobiles lorsque ces derniers sont à l'arrêt, tout en offrant un redémarrage particulièrement rapide et puissant desdits moteurs propice à une bonne longévité de leurs paliers hydrodynamiques, ladite fonction « stop and start » n'induisant pas - selon l'invention - de baisse de tension significative dans l'alimentation électrique desdits véhicules ;
- D'assurer la propulsion des véhicules automobiles sur des distances de quelques mètres ou dizaines de mètres sans utiliser leur moteur thermique lorsque ce dernier a été arrêté par la fonction « stop and start », cette particularité réduisant le nombre de redémarrages dudit moteur ;
- D'assister les moteurs thermiques lors du décollage des véhicules automobiles depuis l'arrêt, de sorte à palier au possible manque de couple desdits moteurs dû à leur cylindrée faible et/ou au temps de réponse élevé de leur suralimentation ;
- De faciliter la réduction de la cylindrée des moteurs thermiques des véhicules automobiles - stratégie destinée à réduire la consommation de carburant desdits véhicules connue de l'homme de l'art sous le terme anglo-saxon de « downsizing » - notamment en simplifiant l'adaptation d'une suralimentation sur lesdits moteurs, que ladite suralimentation soit constituée ou non d'un ou de plusieurs turbocompresseur(s) et/ou compresseur(s) mécanique(s) ;
- D'assister les moteurs thermiques lors de fortes demandes en puissance des véhicules, de sorte à améliorer les performances desdits véhicules ;
- D'entraîner en rotation un ou plusieurs auxiliaires installés à bord des véhicules automobiles tels que compresseur de climatisation, alternateur, compresseur mécanique de suralimentation, pompe ou tout autre organe consommateur de travail mécanique et ceci, moteur thermique en marche ou à l'arrët ;
- De filtrer les variations de couple en sortie de vilebrequin des moteurs à combustion interne alternatifs afin de réduire les nuisances acoustiques et vibratoires générées par lesdites variations ;
- D'assister la mise en rotation de l'arbre reliant la turbine au compresseur du turbocompresseur des moteurs à combustion interne alternatifs de sorte à accélérer la montée en régime dudit turbocompresseur afin d'en réduire le temps de réponse ;
- De limiter les conséquences du temps de réponse de la suralimentation par turbocompresseur des moteurs à combustion interne alternatifs, en assistant ces derniers pour propulser les véhicules lorsque ladite suralimentation ne permet pas auxdits moteurs de délivrer le couple souhaité en un temps suffisamment court, et en autorisant lesdits moteurs à monter rapidement en régime pour délivrer la puissance demandée et lancer la turbine dudit turbocompresseur.

Ainsi le moteur-pompe hydraulique à cylindrée fixe ou variable selon l'invention permet :
- De réduire fortement la consommation de carburant et les émissions polluantes des véhicules automobiles particulièrement lorsqu'ils sont utilisés en usage urbain, notamment :
   - En exploitant leur moteur thermique au plus proche de son meilleur rendement énergétique ou de sa puissance maximale quelles que soient les conditions de conduite ;
      - En accélérant le réchauffement en démarrage à froid de leur moteur thermique et celui de leur catalyseur deux voies ou trois voies de sorte d'une part, à réduire les pertes par frottement internes dudit moteur par réduction rapide de la viscosité de son huile de lubrification et d'autre part, à réduire le temps d'amorçage dudit catalyseur ;
   - En autorisant, le cas échéant, la régénération de leur filtre à particules en toutes circonstances et/ou en améliorant le fonctionnement de leur système de réduction catalytique sélective à l'urée des oxydes d'azote, ces dispositifs étant le plus souvent prévus pour dépolluer les gaz d'échappement des véhicules à moteur Diesel ;
- D'augmenter les performances en accélération des véhicules automobiles sans en changer ni le moteur thermique ni les caractéristiques de masse ou de résistance à l'avancement, en permettant audit moteur - lors de ladite accélération - de fonctionner continûment à puissance maximale d'une part, et de ne pas subir les discontinuités de transmission propres aux boîtes de vitesses à engrenages manuelles ou automatiques d'autre part ;
- De rendre moins indispensable la réduction du poids des véhicules automobiles pour en augmenter les performances et/ou en réduire la consommation de carburant, l'effet dudit poids sur lesdites performances et sur ladite consommation étant amoindri par la récupération d'énergie cinétique et gravitationnelle et la possibilité de faire fonctionner les moteurs thermiques à l'optimum de leur rendement ou de leur puissance, ceci permettant - à même performances dynamiques et énergétiques - d'augmenter le niveau d'équipement de confort et de sécurité et/ou de réduire le prix de revient des véhicules automobiles ;
- D'augmenter le confort des passagers des véhicules automobiles en accélérant le réchauffage de l'habitacle desdits véhicules tout en rendant possible la suppression des dispositifs de chauffage auxiliaires d'habitacle tels que parfois prévus sur les véhicules Diesel ;
- De fortement diminuer la sollicitation des freins conventionnels à friction des véhicules automobiles, ce qui en réduit l'usure et en espace les opérations de maintenance, avec pour corollaire la réduction des coûts de maintenance et de la pollution particulaire qu'engendrent lesdits freins ;
- De supprimer la puissance électrique additionnelle nécessaire à la fonction « stop & start » ordinairement confiée à un démarreur électrique ;
- De remplacer le pont différentiel des véhicules automobiles par des moyens autorisant un contrôle dynamique du couple appliqué à chacune des roues motrices desdits véhicules.
le moteur-pompe hydraulique à cylindrée fixe ou variable selon l'invention permet en outre, selon divers modes de réalisation :
- D'offrir aux conducteurs de tout véhicule automobile le choix entre différents modes de pilotage de la transmission dudit véhicule, notamment pour reproduire les conditions de conduite propres aux boîtes de vitesses à simple embrayage manuelles ou robotisées, automatiques à double embrayage, automatiques à convertisseur de couple, ou automatiques à variation continue, lesdits conducteurs disposant d'une infinité de comportements et d'étagements des rapports de transmission, préprogrammés ou programmables et combinables via toutes interfaces homme-machine connues de l'homme de l'art, et ledit moteur-pompe hydraulique à cylindrée fixe ou variable selon l'invention étant pilotable par tout moyen - levier, palette, bouton ou pédale - fixe ou enfichable, interchangeable ou escamotable ;
- De conférer à tout véhicule automobile un frein moteur accru et réglable à la convenance de leur conducteur de sorte à améliorer le confort de conduite dudit conducteur et à économiser les freins dudit véhicule tout en réduisant les risques de surchauffe desdits freins, de sorte à améliorer la sécurité dudit conducteur et de ses passagers ;
- De donner un caractère plus dynamique aux moteurs thermiques en les assistant lors de leurs montées en régime et en les freinant lors de leurs descentes en régimes.

En outre, le moteur-pompe hydraulique à cylindrée fixe ou variable selon l'invention autorise l'emploi d'une ou plusieurs turbines pour propulser les véhicules automobiles en alternative au moteur à combustion interne alternatif, particulièrement selon la configuration décrite dans la demande de brevet français N° FR 12 59827 en date du 15 octobre 2012 et appartenant au demandeur. Cette association de moyens est attendue pour réduire de façon drastique la consommation de carburant des véhicules automobiles et les émissions de dioxyde de carbone qui en découlent bas par rapport aux meilleures références dans ce domaine. Cette association est également attendue pour réduire les émissions polluantes, acoustiques et vibratoires desdits véhicules dans des conditions économiques particulièrement favorables.

Il est entendu qu'outre son application aux systèmes de transmission automobiles, le moteur-pompe hydraulique à cylindrée fixe ou variable selon l'invention peut être appliqué à de nombreux domaines industriels et/ou domestiques.

Les autres caractéristiques de la présente invention ont été décrites dans la description et dans les revendications secondaires dépendantes directement ou indirectement de la revendication principale.

Le moteur-pompe hydraulique à cylindrée fixe ou variable suivant la présente invention comprend :
- Au moins un rotor central de moteur-pompe qui comporte une prise de force de rotor central et qui est logé sur ou dans un bâti de moteur-pompe, ledit rotor pouvant tourner dans au moins un palier de rotor central que comprend ledit bâti tout en restant en contact le plus étanche possible avec au moins un distributeur d'entrée-sortie maintenu approximativement fixe par rapport audit bâti, ledit distributeur pouvant relier au moins un cylindre hydraulique aménagé radialement ou tangentiellement dans ledit rotor avec au moins un conduit interne d'entrée-sortie et au moins un conduit externe d'entrée-sortie via respectivement un canal interne d'entrée-sortie de rotor central et un orifice d'entrée-sortie de rotor central aménagés dans le rotor central de moteur-pompe, l'une des extrémités desdits conduits étant arrimée directement ou indirectement et de façon étanche dans le bâti de moteur-pompe tandis que l'autre extrémité desdits conduits est arrimée de façon étanche dans le distributeur d'entrée-sortie ;
- Au moins un piston hydraulique pouvant se mouvoir en translation dans le cylindre hydraulique et pouvant pousser un poussoir guidé de piston hydraulique ou pouvant être poussé par ce dernier, ledit poussoir étant guidé en translation par un guide de poussoir aménagé radialement ou tangentiellement dans le rotor central de moteur-pompe ;
- Au moins un bras tangentiel dont l'une des extrémités est articulée dans le rotor central de moteur-pompe tandis que l'autre extrémité comporte une face d'appui de bras tangentiel sur poussoir qui peut exercer un effort sur une ligne d'action de poussoir sur bras tangentiel que comporte le poussoir guidé de piston hydraulique, la direction dudit effort étant approximativement tangentielle à l'axe de rotation dudit bras ;
- Au moins un rotor périphérique de moteur-pompe constitué d'au moins un carter cylindrique de rotor périphérique dont l'une des extrémités au moins est terminée par un flasque de rotor périphérique, ledit rotor périphérique pouvant tourner dans au moins un palier de rotor périphérique porté par un stator de rotor périphérique qui est directement ou indirectement solidaire du bâti de moteur pompe, le rotor central de moteur pompe étant en tout ou partie logé à l'intérieur dudit rotor périphérique;
- Au moins des moyens antifriction que comporte le bras tangentiel sur sa face située à l'opposé de la face d'appui de bras tangentiel sur poussoir lesdits moyens prenant appui sur la surface interne du carter cylindrique de rotor périphérique.

Le moteur-pompe hydraulique à cylindrée fixe ou variable suivant la présente Invention comprend un rotor périphérique de moteur pompe qui est forcé à tourner à la même vitesse que le rotor central de moteur-pompe par une couronne de synchronisation angulaire de rotor périphérique rendue solidaire en rotation d'une couronne de synchronisation angulaire de rotor central que comporte le rotor central de moteur pompe par au moins un pignon de synchronisation angulaire tournant autour d'au moins un axe de pignon de synchronisation angulaire que comprend le bâti de moteur pompe.

Le moteur-pompe hydraulique à cylindrée fixe ou variable suivant la présente invention comprend des moyens antifriction qui sont constitués d'au moins un rouleau antifriction de bras tangentiel qui peut rouler d'une part, sur une piste de roulement de bras tangentiel que comporte le bras tangentiel sur sa face située à l'opposé de la face d'appui de bras tangentiel sur poussoir et d'autre part, sur une piste de roulement de rotor périphérique que comporte la surface interne du carter cylindrique de rotor périphérique, ledit rouleau étant limité dans son déplacement simultanément par rapport à la piste de roulement de bras tangentiel et par rapport à la piste de roulement de rotor périphérique par au moins une crémaillère de rouleau de bras tangentiel que comporte la piste de roulement de bras tangentiel et par au moins une couronne de rouleau de rotor périphérique que comporte la piste de roulement de rotor périphérique, ladite crémaillère et ladite couronne coopérant simultanément avec au moins un pignon de rouleau que comporte ledit rouleau.

Le moteur-pompe hydraulique à cylindrée fixe ou variable suivant la présente invention comprend des moyens antifriction qui sont constitués d'au moins un patin de friction de bras tangentiel que comporte le bras tangentiel sur sa face située à l'opposé de la face d'appui de bras tangentiel sur poussoir, ledit patin pouvant entrer en contact avec une piste de friction de rotor périphérique que comporte la surface interne du carter cylindrique de rotor périphérique.

Le moteur-pompe hydraulique à cylindrée fixe ou variable suivant la présente invention comprend un piston hydraulique qui comprend une rotule d'appui de poussoir sur piston hydraulique sur sa face circulaire qui est la plus éloignée du rotor central de moteur-pompe, ladite rotule étant constituée d'une forme troncosphérique en creux ou en relief qui coopère avec une rotule d'appui de piston hydraulique sur poussoir que comprend le poussoir guidé de piston hydraulique ladite rotule étant également constituée d'une forme troncosphérique en creux ou en relief, tandis que les deux formes troncosphériques sont complémentaires et constituent une liaison rotule entre ledit piston et ledit poussoir.

Le moteur-pompe hydraulique à cylindrée fixe ou variable suivant la présente invention comprend un poussoir guidé de piston hydraulique qui comprend une jambe de force placée dans le prolongement du piston hydraulique, et une traverse de force montée solidairement de ladite jambe et perpendiculairement à cette dernière, ladite traverse portant la ligne d'action de poussoir sur bras tangentiel tandis que chacune de ses deux extrémités peut coulisser dans le guide de poussoir.

Le moteur-pompe hydraulique à cylindrée fixe ou variable suivant la présente invention comprend un rotor central de moteur-pompe qui comporte un logement cylindrique d'axe dans le quel est logé un axe de bras tangentiel tandis que le bras tangentiel est traversé par ledit axe afin de s'articuler dans le rotor central de moteur-pompe.

Le moteur-pompe hydraulique à cylindrée fixe ou variable suivant la présente invention comprend un rotor central de moteur-pompe qui comporte un ressort de rappel de bras tangentiel qui prend appui d'une part, sur ledit rotor et d'autre part, sur le bras tangentiel.

Le moteur-pompe hydraulique à cylindrée fixe ou variable suivant la présente invention comprend une piste de roulement de rotor périphérique qui comporte au moins un rail de guidage en creux ou en saillie qui coopère avec au moins une gorge de guidage en creux ou en saillie que comporte le rouleau antifriction de bras tangentiel.

Le moteur-pompe hydraulique à cylindrée fixe ou variable suivant la présente invention comprend un palier de rotor central qui comprend d'une part, une piste intérieure de palier de rotor central munie d'au moins une couronne intérieure de palier de rotor central ladite piste étant solidaire du rotor central de moteur-pompe et d'autre part, une piste extérieure de palier de rotor central munie d'au moins une couronne extérieure de palier de rotor central ladite piste étant solidaire du bâti de moteur-pompe, tandis qu'au moins trois rouleaux de palier de rotor central peuvent rouler simultanément sur la piste intérieure de palier de rotor central et sur la piste extérieure de palier de rotor central et restent à distance constante les uns par rapport aux autres grâce à au moins un pignon de rouleau que comporte chaque rouleau de palier de rotor central et qui coopère avec lesdites couronnes intérieure et extérieure.

Le moteur-pompe hydraulique à cylindrée fixe ou variable suivant la présente invention comprend une piste intérieure de palier de rotor central et/ou une piste extérieure de palier de rotor central qui comporte au moins un rail de guidage en creux ou en saillie qui coopère avec au moins une gorge de guidage en creux ou en saillie que comportent les rouleaux de palier de rotor central.

Le moteur-pompe hydraulique à cylindrée fixe ou variable suivant la présente invention comprend un palier de rotor périphérique qui comprend d'une part, une piste intérieure de palier de rotor périphérique munie d'au moins une couronne intérieure de palier de rotor périphérique ladite piste étant solidaire du rotor périphérique de moteur-pompe et d'autre part, une piste extérieure de palier de rotor périphérique munie d'au moins une couronne extérieure de palier de rotor périphérique ladite piste étant solidaire du stator de rotor périphérique, tandis qu'au moins trois rouleaux de palier de rotor périphérique peuvent rouler simultanément sur la piste intérieure de palier de rotor périphérique et sur la piste extérieure de palier de rotor périphérique et restent à distance constante les uns par rapport aux autres grâce à au moins un pignon de rouleau que comporte chaque rouleau de palier de rotor périphérique et qui coopère avec lesdites couronnes intérieure et extérieure.

Le moteur-pompe hydraulique à cylindrée fixe ou variable suivant la présente invention comprend une piste intérieure de palier de rotor périphérique et/ou une piste extérieure de palier de rotor périphérique qui comporte au moins un rail de guidage en creux ou en saillie qui coopère avec au moins une gorge de guidage en creux ou en saillie que comportent les rouleaux de palier de rotor périphérique.

Le moteur-pompe hydraulique à cylindrée fixe ou variable suivant la présente invention comprend un distributeur d'entrée-sortie qui est empêché de tourner avec le rotor central de moteur-pompe et est maintenu en rotation par rapport au bâti de moteur-pompe par au moins un ergot ou biellette directement ou indirectement fixé au bâti de moteur-pompe.

Le moteur-pompe hydraulique à cylindrée fixe ou variable suivant la présente invention comprend un distributeur d'entrée-sortie qui est un stator cylindrique logé avec un faible jeu dans un cylindre de stator aménagé au centre du rotor central de moteur-pompe et coaxialement à ce dernier, ledit stator renfermant une chambre de conduit interne qui communique d'une part, avec le conduit interne d'entrée-sortie et d'autre part, avec un collecteur angulaire entrée-sortie de conduit interne que comporte ledit stator en sa périphérie via un canal interne d'entrée-sortie de distributeur, tandis que ledit stator renferme également une chambre de conduit externe qui communique d'une part, avec le conduit externe d'entrée-sortie et d'autre part, avec un collecteur angulaire entrée-sortie de conduit externe que comporte également ledit stator en sa périphérie via un autre canal interne d'entrée-sortie de distributeur.

Le moteur-pompe hydraulique à cylindrée fixe ou variable suivant la présente invention comprend un stator cylindrique qui comporte, à côté du collecteur angulaire entrée-sortie de conduit interne, au moins une gorge d'équilibrage d'effort radial de conduit externe qui communique avec la chambre de conduit externe via un canal interne d'équilibrage de distributeur tandis que ledit stator comporte également au moins une gorge d'équilibrage d'effort radial de conduit interne qui communique avec la chambre de conduit interne via un autre canal interne d'équilibrage de distributeur, ladite gorge étant située à côté du collecteur angulaire entrée-sortie de conduit externe.

Le moteur-pompe hydraulique à cylindrée fixe ou variable suivant la présente invention comprend un stator cylindrique qui comporte une gorge d'étanchéité axiale à proximité de l'une au moins de ses extrémités axiales.

Le moteur-pompe hydraulique à cylindrée fixe ou variable suivant la présente invention comprend un distributeur d'entrée-sortie qui est un stator axial constitué d'un flasque de distribution et d'un flasque d'équilibrage placés axialement de part et d'autre du rotor central de moteur-pompe en regard respectivement d'une face de distribution et d'une face d'équilibrage aménagées sur ledit rotor lesdits flasques étant mécaniquement reliés entre eux par un moyeu central de stator axial qui traverse axialement ledit rotor central via un cylindre de stator aménagé au centre dudit rotor central et coaxialement à ce dernier, ledit stator renfermant une chambre de conduit interne qui communique d'une part, avec le conduit interne d'entrée-sortie et d'autre part, avec un collecteur angulaire entrée-sortie de conduit interne aménagé axialement sur la face interne du flasque de distribution via un canal interne d'entrée-sortie de distributeur, tandis que ledit stator renferme également une chambre de conduit externe qui communique d'une part, avec le conduit externe d'entrée-sortie et d'autre part, avec un collecteur angulaire entrée-sortie de conduit externe également aménagé axialement sur la face interne du flasque de distribution via un autre canal interne d'entrée-sortie de distributeur.

Le moteur-pompe hydraulique à cylindrée fixe ou variable suivant la présente invention comprend une chambre de conduit interne qui communique avec une gorge d'équilibrage d'effort axial de conduit interne aménagée axialement sur la face interne du flasque d'équilibrage via un canal interne d'équilibrage de distributeur, tandis que la chambre de conduit externe communique avec une gorge d'équilibrage d'effort axial de conduit externe également aménagée axialement sur la face interne du flasque d'équilibrage via un autre canal interne d'équilibrage de distributeur.

Le moteur-pompe hydraulique à cylindrée fixe ou variable suivant la présente invention comprend un flasque de distribution et/ou un flasque d'équilibrage qui comporte une gorge d'étanchéité radiale à l'une au moins de ses extrémités radiales.

Le moteur-pompe hydraulique à cylindrée fixe ou variable suivant la présente invention comprend un moyeu central de stator axial qui comporte une gorge d'étanchéité axiale à l'une au moins de ses extrémités axiales ou en un point quelconque de sa longueur.

Le moteur-pompe hydraulique à cylindrée fixe ou variable suivant la présente invention comprend tout ou partie du collecteur angulaire entrée-sortie de conduit interne, du collecteur angulaire entrée-sortie de conduit externe, de la gorge d'équilibrage d'effort radial de conduit externe, de la gorge d'équilibrage d'effort radial de conduit interne, de la gorge d'étanchéité axiale, de la gorge d'équilibrage d'effort axial de conduit interne, de la gorge d'équilibrage d'effort axial de conduit externe ou de la gorge d'étanchéité radiale, qui est muni d'un segment de gorge de distributeur.

Le moteur-pompe hydraulique à cylindrée fixe ou variable suivant la présente invention comprend un segment de gorge de distributeur qui présente au moins un flanc de segment qui établit latéralement une étanchéité avec le stator cylindrique ou le stator axial, et au moins une ligne de contact de segment qui d'une part, entre en contact avec le rotor central de moteur-pompe pour former une étanchéité et qui d'autre part, est soumise à un effort qui tend à la plaquer sur ledit rotor du fait de la poussée exercée par une huile de moteur-pompe sous pression que contient le stator cylindrique ou le stator axial sur le segment de gorge de distributeur, ledit effort étant limité du fait d'une faible surface projetée soumise à la pression de ladite huile qu'offre ledit segment qui résulte d'un épaulement de reprise d'effort de segment que comporte ledit segment qui coopère avec un autre épaulement aménagé dans le stator cylindrique ou dans le stator axial.

Le moteur-pompe hydraulique à cylindrée fixe ou variable suivant la présente invention comprend un segment de gorge de distributeur qui est maintenu en contact avec le rotor central de moteur-pompe par un ressort de fond de gorge de segment.

Le moteur-pompe hydraulique à cylindrée fixe ou variable suivant la présente invention comprend un segment de gorge de distributeur qui est constitué de deux demi-segments qui présentent chacun au moins un flanc de segment maintenu en contact avec le stator cylindrique ou avec le stator axial par un ressort écarteur de segment.

Le moteur-pompe hydraulique à cylindrée fixe ou variable suivant la présente invention comprend un conduit interne d'entrée-sortie qui est arrimé dans le distributeur d'entrée-sortie et/ou dans le bâti de moteur-pompe par l'une ou l'autre des extrémités dudit conduit au moyen d'au moins une rotule obturatrice fixe de conduit et/ou d'au moins une rotule obturatrice glissante de conduit, ladite rotule présentant une portée de rotule obturatrice qui peut reposer sur un siège de rotule obturatrice.

Le moteur-pompe hydraulique à cylindrée fixe ou variable suivant la présente invention comprend une rotule obturatrice fixe de conduit qui est maintenue en contact avec son siège de rotule obturatrice par un ressort de rotule obturatrice qui prend appui d'une part, sur le distributeur d'entrée-sortie ou sur le bâti de moteur-pompe ou sur une rotule obturatrice glissante de conduit, et d'autre part, directement ou non sur ladite rotule obturatrice fixe.

Le moteur-pompe hydraulique à cylindrée fixe ou variable suivant la présente invention comprend une rotule obturatrice glissante de conduit qui est constituée d'au moins une demi-rotule obturatrice glissante traversée axialement par le conduit interne d'entrée-sortie ladite demi-rotule pouvant translater axialement et de façon étanche par rapport audit conduit interne, tandis que ladite demi-rotule est maintenue au contact de son siège de rotule obturatrice par un ressort de rotule obturatrice qui prend appui d'une part, sur le distributeur d'entrée-sortie ou sur le bâti de moteur-pompe ou sur une autre demi-rotule obturatrice glissante et d'autre part, directement ou non sur ladite demi-rotule obturatrice glissante.

Le moteur-pompe hydraulique à cylindrée fixe ou variable suivant la présente invention comprend un conduit externe d'entrée-sortie qui est arrimé dans le distributeur d'entrée-sortie et/ou dans le bâti de moteur-pompe par l'une ou l'autre des extrémités dudit conduit au moyen d'au moins une rotule obturatrice fixe de conduit, ladite rotule présentant une portée de rotule obturatrice qui peut reposer sur un siège de rotule obturatrice.

Le moteur-pompe hydraulique à cylindrée fixe ou variable suivant la présente invention comprend une chambre de conduit interne qui est fermée par un bouchon de conduit interne.

Le moteur-pompe hydraulique à cylindrée fixe ou variable suivant la présente invention comprend une chambre de conduit externe qui est fermée par un bouchon de conduit externe lequel est traversé par le conduit externe d'entrée-sortie.

Le moteur-pompe hydraulique à cylindrée fixe ou variable suivant la présente invention comprend un conduit interne d'entrée-sortie qui est logé en tout ou partie à l'intérieur du conduit externe d'entrée-sortie.

Le moteur-pompe hydraulique à cylindrée fixe ou variable suivant la présente invention comprend un bâti de moteur-pompe qui comprend un satellite de raccordement dans lequel sont arrimés le conduit interne d'entrée-sortie et/ou le conduit externe d'entrée-sortie.

Le moteur-pompe hydraulique à cylindrée fixe ou variable suivant la présente invention comprend un stator de rotor périphérique qui s'articule sur l'axe de pignon de synchronisation angulaire autour duquel il peut tourner sous l'action d'un servomoteur de variation de cylindrée.

Le moteur-pompe hydraulique à cylindrée fixe ou variable suivant la présente invention comprend un servomoteur de variation de cylindrée qui est un moteur électrique rotatif de servomoteur qui peut faire tourner - dans un sens ou dans un autre et par l'intermédiaire d'un réducteur de servomoteur - un pignon d'attaque de couronne de variation de cylindrée, ledit pignon pouvant tourner dans un palier aménagé dans le bâti de moteur-pompe et pouvant entraîner en rotation une couronne de variation de cylindrée solidaire du stator de rotor périphérique, le cercle primitif de ladite couronne étant centré sur l'axe de pignon de synchronisation angulaire.

Le moteur-pompe hydraulique à cylindrée fixe ou variable suivant la présente invention comprend des moyens de re-phasage qui sont intercalés entre la couronne de synchronisation angulaire de rotor périphérique et la couronne de synchronisation angulaire de rotor central.

Le moteur-pompe hydraulique à cylindrée fixe ou variable suivant la présente invention comprend des moyens de re-phasage qui sont constitués d'au moins un engrenage intermédiaire de re-phasage comportant au moins une roue dentée de re-phasage tournant autour d'au moins un axe de re-phasage solidaire du stator de rotor périphérique, ledit engrenage étant intercalé entre la couronne de synchronisation angulaire de rotor périphérique et le pignon de synchronisation angulaire.

Le moteur-pompe hydraulique à cylindrée fixe ou variable suivant la présente invention comprend un conduit interne d'entrée-sortie et un conduit externe d'entrée-sortie qui sont respectivement reliés avec l'entrée ou la sortie d'au moins un deuxième moteur-pompe hydraulique à cylindrée fixe ou variable, le moteur-pompe hydraulique à cylindrée fixe ou variable et le deuxième moteur-pompe hydraulique à cylindrée fixe ou variable constituant communément un dispositif de transmission hydraulique.

Le moteur-pompe hydraulique à cylindrée fixe ou variable suivant la présente invention comprend une prise de force de rotor central du moteur-pompe à cylindrée fixe ou variable qui est mécaniquement reliée à au moins un moteur de propulsion que comporte un véhicule automobile tandis que le deuxième moteur-pompe hydraulique à cylindrée fixe ou variable est mécaniquement relié à au moins une roue ou chenille motrice que comporte ledit véhicule, ou inversement.

Le moteur-pompe hydraulique à cylindrée fixe ou variable suivant la présente invention comprend un conduit interne d'entrée-sortie qui peut être mis en relation avec au moins un accumulateur haute-pression par au moins une vanne d'accumulateur haute-pression de conduit interne.

Le moteur-pompe hydraulique à cylindrée fixe ou variable suivant la présente invention comprend un conduit externe d'entrée-sortie qui peut être mis en relation avec au moins un accumulateur haute-pression par au moins une vanne d'accumulateur haute-pression de conduit externe.

Le moteur-pompe hydraulique à cylindrée fixe ou variable suivant la présente invention comprend un conduit interne d'entrée-sortie qui peut être mis en relation avec au moins un accumulateur basse-pression par au moins une vanne d'accumulateur basse-pression de conduit interne.

Le moteur-pompe hydraulique à cylindrée fixe ou variable suivant la présente invention comprend un conduit externe d'entrée-sortie qui peut être mis en relation avec au moins un accumulateur basse-pression par au moins une vanne d'accumulateur basse-pression de conduit externe.

Le moteur-pompe hydraulique à cylindrée fixe ou variable suivant la présente invention comprend un accumulateur haute-pression et/ou un accumulateur basse-pression qui comprend au moins un piston séparateur d'accumulateur pouvant se déplacer de façon étanche dans un cylindre borgne d'accumulateur, ledit piston délimitant avec ledit cylindre un compartiment à gaz contenant un gaz sous pression et un compartiment à huile contenant une huile de moteur-pompe, ce dernier compartiment pouvant être mis en relation avec le conduit interne d'entrée-sortie et/ou le conduit externe d'entrée-sortie.

Le moteur-pompe hydraulique à cylindrée fixe ou variable suivant la présente invention comprend un compartiment à huile qui comporte un clapet de fermeture d'accumulateur que le piston séparateur d'accumulateur peut plaquer sur un siège de clapet d'accumulateur en poussant sur un ressort de clapet à forte raideur interposé entre ledit piston et ledit clapet, de sorte à isoler de façon étanche ledit compartiment du conduit interne d'entrée-sortie et/ou du conduit externe d'entrée-sortie, ledit clapet coopérant - à l'opposé du ressort de clapet à forte raideur - avec un ressort de clapet à faible raideur qui tend à éloigner ledit clapet dudit siège.

Le moteur-pompe hydraulique à cylindrée fixe ou variable suivant la présente invention comprend un piston séparateur d'accumulateur qui peut pousser sur le ressort de clapet à forte raideur par l'intermédiaire d'un poussoir de ressort à forte raideur qui est guidé en translation longitudinale par un guide de clapet et poussoir solidaire de l'accumulateur haute-pression et/ou de l'accumulateur basse-pression, ledit guide de clapet guidant également le clapet de fermeture d'accumulateur et comportant une butée d'arrêt de poussoir qui détermine le déplacement maximal du poussoir de ressort à forte raideur en direction du piston séparateur d'accumulateur.

Le moteur-pompe hydraulique à cylindrée fixe ou variable suivant la présente invention comprend un guide de clapet et poussoir qui comporte au moins un orifice radial de guide de clapet qui relie le compartiment à huile avec le siège de clapet d'accumulateur de sorte à permettre à l'huile de moteur-pompe de circuler entre le conduit interne d'entrée-sortie et/ou le conduit externe d'entrée-sortie et ledit compartiment à huile.

Le moteur-pompe hydraulique à cylindrée fixe ou variable suivant la présente invention comprend un accumulateur haute-pression et/ou un accumulateur basse-pression qui est relié au conduit interne d'entrée-sortie et/ou au conduit externe d'entrée-sortie par l'intermédiaire d'une vanne de verrouillage d'accumulateur qui peut isoler de façon étanche ledit accumulateur dudit conduit interne et/ou dudit conduit externe.

Le moteur-pompe hydraulique à cylindrée fixe ou variable suivant la présente invention comprend un accumulateur basse-pression qui est alimenté avec une huile de moteur-pompe par au moins une pompe basse-pression entraînée par un moteur de pompe basse-pression, le conduit d'admission de ladite pompe étant relié à un réservoir d'huile de moteur-pompe tandis que son conduit de refoulement est relié avec ledit accumulateur.

Le moteur-pompe hydraulique à cylindrée fixe ou variable suivant la présente invention comprend un conduit interne d'entrée-sortie qui peut être mis en relation par une vanne d'échangeur-dissipateur de conduit interne avec au moins un conduit interne d'échangeur-dissipateur que comporte un échangeur-dissipateur à pertes de charge, ledit conduit comprenant au moins une surface externe d'échange thermique de dissipateur qui est en contact avec un gaz de refroidissement ou un liquide refroidissement.

Le moteur-pompe hydraulique à cylindrée fixe ou variable suivant la présente invention comprend un conduit externe d'entrée-sortie qui peut être mis en relation par une vanne d'échangeur-dissipateur de conduit externe avec au moins un conduit interne d'échangeur-dissipateur que comporte un échangeur-dissipateur à pertes de charge, ledit conduit comprenant au moins une surface externe d'échange thermique de dissipateur qui est en contact avec un gaz de refroidissement ou un liquide refroidissement.

Le moteur-pompe hydraulique à cylindrée fixe ou variable suivant la présente invention comprend un conduit interne d'entrée-sortie qui peut être mis en relation avec un moteur hydraulique d'accessoire par une vanne de moteur d'accessoire de conduit interne.

Le moteur-pompe hydraulique à cylindrée fixe ou variable suivant la présente invention comprend un conduit externe d'entrée-sortie qui peut être mis en relation avec un moteur hydraulique d'accessoire par une vanne de moteur d'accessoire de conduit externe.

Le moteur-pompe hydraulique à cylindrée fixe ou variable suivant la présente invention comprend un moteur hydraulique d'accessoire qui est constitué d'au moins une turbine hydraulique montée sur un arbre de turbine hydraulique qui comporte au moins une aube de turbine hydraulique sur laquelle au moins un injecteur de turbine hydraulique peut projeter axialement et/ou radialement un jet d'une huile de moteur-pompe.

Le moteur-pompe hydraulique à cylindrée fixe ou variable suivant la présente invention comprend un calculateur de gestion de moteur-pompe qui commande le servomoteur de variation de cylindrée pour piloter la cylindrée du moteur-pompe hydraulique à cylindrée fixe ou variable y-compris celui constitutif du dispositif de transmission hydraulique que ce dernier soit intégré au véhicule automobile ou non, ledit calculateur pouvant également commander la vanne d'accumulateur haute-pression de conduit interne, et/ou la vanne d'accumulateur haute-pression de conduit externe, et/ou la vanne d'accumulateur basse-pression de conduit interne, et/ou la vanne d'accumulateur basse-pression de conduit externe, et/ou la vanne de verrouillage d'accumulateur et/ou le moteur de pompe basse-pression et/ou la vanne d'échangeur-dissipateur de conduit interne et/ou la vanne d'échangeur-dissipateur de conduit externe et/ou la vanne de moteur d'accessoire de conduit interne et/ou la vanne de moteur d'accessoire de conduit externe.

Le moteur-pompe hydraulique à cylindrée fixe ou variable suivant la présente invention comprend un calculateur de gestion de moteur-pompe qui est relié par des moyens de transmission de l'information filaires, lumineux ou électromagnétiques à au moins un levier de passage de vitesses et/ou au moins une palette de passage de vitesses et/ou au moins un bouton de passage de vitesses et/ou une pédale d'embrayage et/ou une pédale de frein et/ou une pédale d'accélérateur que comporte un poste de conduite que comprend le véhicule automobile.

Le moteur-pompe hydraulique à cylindrée fixe ou variable suivant la présente invention comprend un calculateur de gestion de moteur-pompe qui est relié par des moyens de transmission de l'information filaires, lumineux ou électromagnétiques à au moins un bouton ou molette de configuration de transmission et/ou un écran de configuration de transmission et/ou un microphone de configuration de transmission et/ou un haut-parleur de configuration de transmission que comporte un poste de conduite que comprend le véhicule automobile.

La description qui va suivre en regard des dessins annexés et donnés à titre d'exemples non limitatifs permettra de mieux comprendre l'invention, les caractéristiques qu'elle présente, et les avantages qu'elle est susceptible de procurer :
Figures 1 et 2 sont des vues tridimensionnelles du moteur-pompe hydraulique à cylindrée fixe ou variable suivant l'invention, respectivement en vue de face avant et de face arrière.
Figure 3 est une vue éclatée du moteur-pompe hydraulique à cylindrée fixe ou variable suivant l'invention.
Figure 4 est une vue en écorché du moteur-pompe hydraulique à cylindrée fixe ou variable suivant l'invention.
Figures 5 et 6 sont des vues en coupe tridimensionnelle respectivement à cylindrée nulle et à cylindrée maximale du moteur-pompe hydraulique à cylindrée fixe ou variable suivant l'invention, sans le bâti de moteur-pompe de ce dernier.
Figure 7 est une vue éclatée du rotor central de moteur-pompe du moteur-pompe hydraulique à cylindrée fixe ou variable suivant l'invention, et des principaux composants avec lesquels il coopère.
Figure 8 est une vue éclatée du rotor périphérique de moteur-pompe du moteur-pompe hydraulique à cylindrée fixe ou variable suivant l'invention, et des principaux composants avec lesquels il coopère.
Figure 9 est une vue éclatée du palier de rotor périphérique de moteur-pompe du moteur-pompe hydraulique à cylindrée fixe ou variable suivant l'invention.
Figure 10 est une vue éclatée du distributeur d'entrée-sortie du moteur-pompe hydraulique à cylindrée fixe ou variable suivant l'invention, ledit distributeur étant constitué d'un stator cylindrique.
Figure 11 est une vue en écorché du distributeur d'entrée-sortie du moteur-pompe hydraulique à cylindrée fixe ou variable suivant l'invention, ledit distributeur étant constitué d'un stator cylindrique.
Figures 12 et 13 sont des vues respectivement en coupe schématique et tridimensionnelle du segment de gorge de distributeur du moteur-pompe hydraulique à cylindrée fixe ou variable suivant l'invention.
Figures 14 à 17 montrent schématiquement la surface développée du stator cylindrique du moteur-pompe hydraulique à cylindrée fixe ou variable suivant l'invention, lesdites figures étant organisées en séquence de sorte à illustrer le déplacement et les différentes positions qui en découlent des orifices d'entrée-sortie de rotor central par rapport au collecteur angulaire entrée-sortie de conduit interne et au collecteur angulaire entrée-sortie de conduit externe que comporte ladite surface.
Figures 18 et 19 sont des vues éclatées respectivement en vue latérale droite et latérale gauche du rotor central de moteur-pompe et de sa prise de force de rotor central du moteur-pompe hydraulique à cylindrée fixe ou variable suivant l'invention, et du distributeur d'entrée-sortie dudit moteur-pompe, ledit distributeur étant constitué d'un stator axial.
Figures 20 et 21 sont des vues schématiques illustrant le fonctionnement de l'engrenage intermédiaire de re-phasage intercalé entre la couronne de synchronisation angulaire de rotor périphérique et le pignon de synchronisation angulaire.
Figure 22 est une coupe schématique du moteur-pompe hydraulique à cylindrée fixe ou variable suivant l'invention dont les bras tangentiels sont pourvus d'un patin de friction de bras tangentiel qui coopère avec une piste de friction de rotor périphérique.
Figure 23 illustre le schéma de principe du moteur-pompe hydraulique à cylindrée fixe ou variable suivant l'invention réalisant - avec un deuxième moteur-pompe hydraulique à cylindrée fixe ou variable - un dispositif de transmission hydraulique permettant d'une part, à un moteur de propulsion de propulser un véhicule automobiles et d'autre part, de stocker-déstocker une part de l'énergie cinétique et/ou gravitationnelle dudit véhicule dans un accumulateur haute-pression.
Figure 24 est une coupe schématique de l'accumulateur haute-pression et/ou basse-pression que comporte le dispositif de transmission hydraulique que prévoit le moteur-pompe hydraulique à cylindrée fixe ou variable suivant l'invention.
Figures 25, 26 et 27 sont des coupes schématiques qui illustrent le fonctionnement du clapet de fermeture d'accumulateur de l'accumulateur haute-pression et/ou basse-pression que comporte le dispositif de transmission hydraulique tel que prévu par le moteur-pompe hydraulique à cylindrée fixe ou variable suivant l'invention.
Figure 28 est une vue schématique d'un véhicule automobile équipé d'une part, d'un moteur à combustion interne alternatif monté longitudinalement, et d'autre part, d'un dispositif de transmission hydraulique que constitue - avec un deuxième moteur-pompe hydraulique à cylindrée fixe ou variable - le moteur-pompe hydraulique à cylindrée fixe ou variable suivant l'invention, ledit deuxième moteur-pompe entraînant les roues motrices arrières dudit véhicule via un arbre de transmission et un pont différentiel.
Figure 29 est une vue schématique d'un véhicule automobile équipé d'une part, d'un moteur à combustion interne alternatif monté transversalement, et d'autre part, d'un dispositif de transmission hydraulique que constitue - avec deux deuxièmes moteur-pompes hydrauliques à cylindrée fixe ou variable - le moteur-pompe hydraulique à cylindrée fixe ou variable suivant l'invention, lesdits deuxièmes moteur-pompes entraînant chacun une roue motrice arrière dudit véhicule.
Figure 30 est une vue schématique d'un véhicule automobile équipé d'une part, d'un moteur à combustion interne alternatif monté transversalement, et d'autre part, d'un dispositif de transmission hydraulique que constitue - avec deux deuxièmes moteur-pompes hydrauliques à cylindrée fixe ou variable - le moteur-pompe hydraulique à cylindrée fixe ou variable suivant l'invention, lesdits deuxièmes moteur-pompes entraînant chacun une roue motrice avant dudit véhicule.

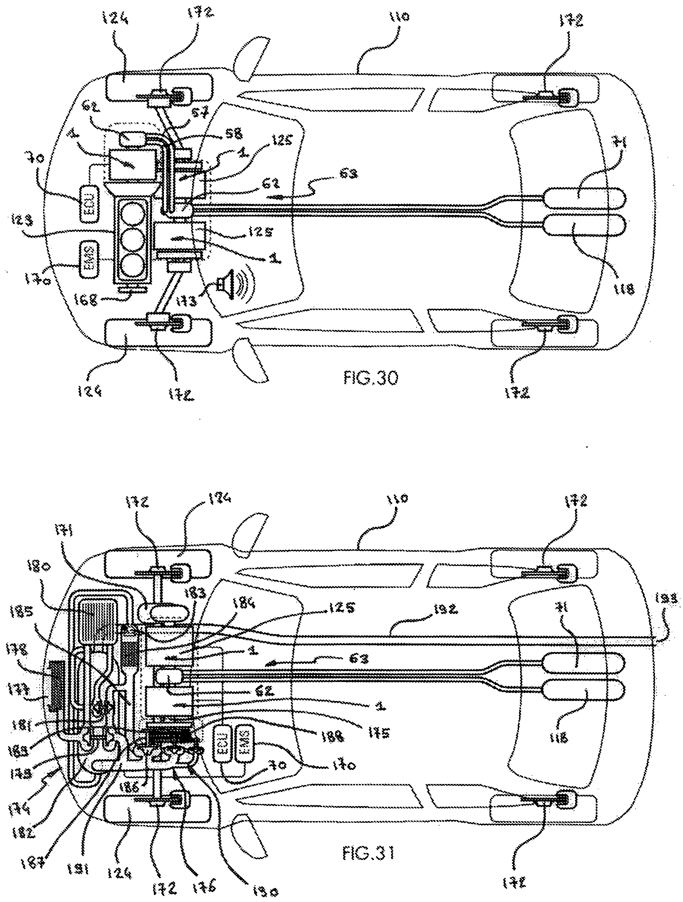

Figure 31 est une vue schématique d'un véhicule automobile équipé d'une part, d'un turbomoteur basse-pression à combustion interne selon la configuration décrite dans la demande de brevet français N° FR 12 59827 appartenant au demandeur, et d'autre part, d'un dispositif de transmission hydraulique que constitue - avec un deuxième moteur-pompe hydraulique à cylindrée fixe ou variable - le moteur-pompe hydraulique à cylindrée fixe ou variable suivant l'invention, ledit deuxième moteur-pompe entraînant les roues motrices avant dudit véhicule via un réducteur, un pont différentiel, et des arbres de transmission.
Figure 32 est une vue schématique d'un poste de conduite que comporte un véhicule automobile propulsé par le dispositif de transmission hydraulique tel que prévu par le moteur-pompe hydraulique à cylindrée fixe ou variable suivant l'invention.
Figure 33 est une vue en coupe schématique d'un moteur hydraulique d'accessoire que comporte le dispositif de transmission hydraulique tel que prévu par le moteur-pompe hydraulique à cylindrée fixe ou variable suivant l'invention, ledit moteur hydraulique d'accessoire étant constitué d'une turbine hydraulique.

### DESCRIPTION DE L'INVENTION :

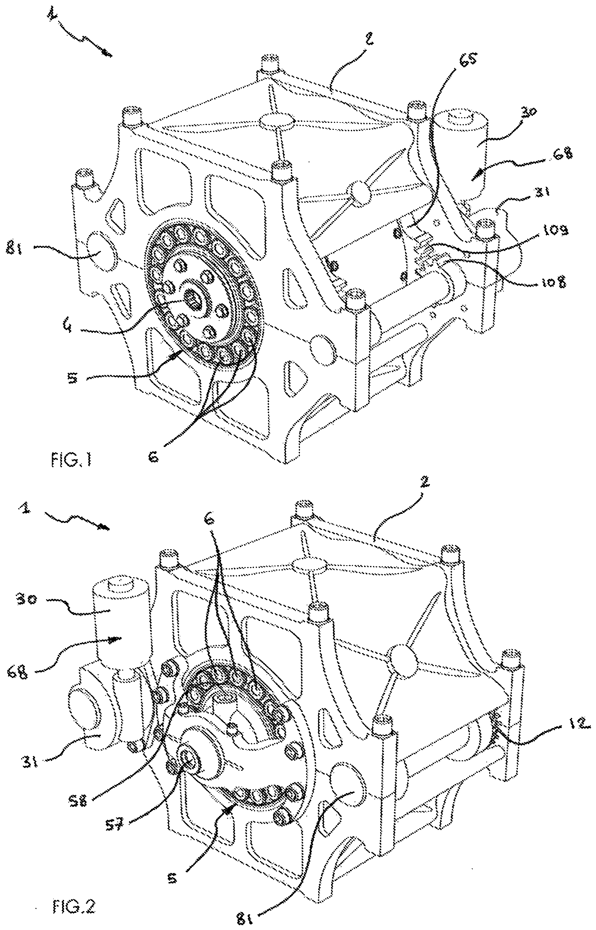

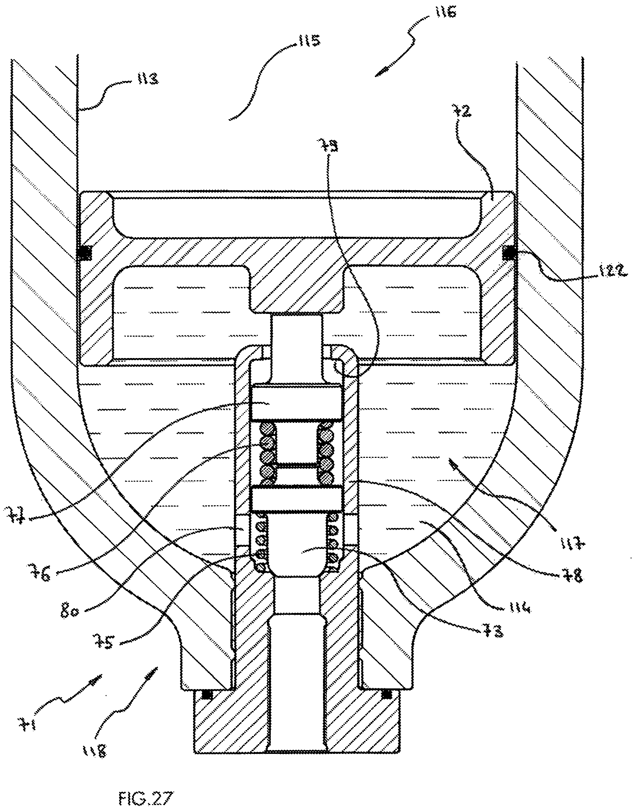

On a montré en figures 1 à 33 le moteur-pompe hydraulique 1 à cylindrée fixe ou variable, divers détails de ses composants, ses variantes, et ses accessoires.

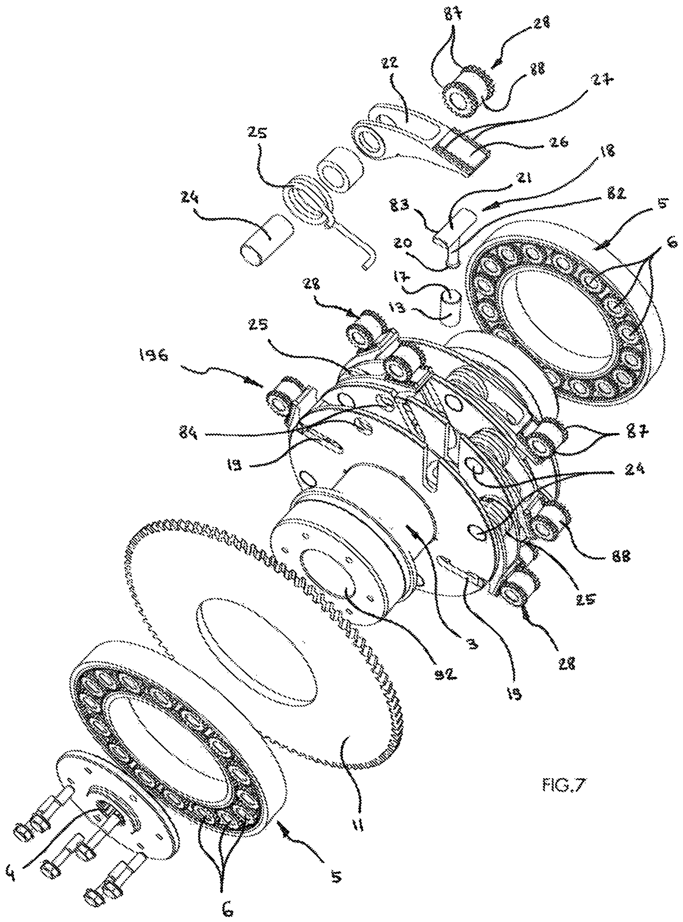

Le moteur-pompe hydraulique 1 suivant l'invention comprend au moins un rotor central de moteur-pompe 3 dont on voit le détail en figure 7, qui comporte une prise de force de rotor central 4 et qui est logé sur ou dans un bâti de moteur pompe 2, ledit rotor 3 pouvant tourner dans au moins un palier de rotor central 5 que comprend ledit bâti 2 tout en restant en contact le plus étanche possible avec au moins un distributeur d'entrée-sortie 43 maintenu approximativement fixe par rapport audit bâti 2, ledit distributeur 43 pouvant relier au moins un cylindre hydraulique 14 aménagé radialement ou tangentiellement dans ledit rotor 3 avec au moins un conduit interne d'entrée-sortie 57 et au moins un conduit externe d'entrée-sortie 58 via respectivement un canal interne d'entrée sortie de rotor central 15 et un orifice d'entrée-sortie de rotor central 16 aménagés dans le rotor central de moteur-pompe 3, l'une des extrémités desdits conduits 57, 58 étant arrimée directement ou indirectement et de façon étanche dans le bâti de moteur pompe 2 tandis que l'autre extrémité desdits conduits 57, 58 est arrimée de façon étanche dans le distributeur d'entrée sortie 43.

Selon le moteur-pompe hydraulique 1 suivant l'invention, le palier de rotor central 5 peut être constitué d'un palier hydrodynamique ou hydrostatique, d'un roulement à billes ou à rouleaux quel qu'en soit le type, d'un palier à gaz ou magnétique ou de tout autre palier connu de l'homme de l'art. On note que le bâti de moteur pompe 2 peut faire office de carter de moteur-pompe ou coopérer avec un carter de moteur-pompe rapporté sur ou autour dudit bâti 2 qui protège les principaux composants du moteur-pompe hydraulique 1 de l'environnement extérieur, tout en protégeant tedit environnement des projections notamment d'une huile de moteur-pompe 114 que contient ledit moteur-pompe 1. En outre, ledit carter de moteur pompe peut en tout ou partie former un réservoir d'huile de moteur pompe 121 dans lequel est stockée une partie au moins d'une huile de moteur pompe 114 dont le moteur-pompe hydraulique 1 a besoin pour fonctionner, tandis que les différents organes mécaniques dudit moteur pompe 1 peuvent être notamment lubrifiés par barbotage dans ladite huile 114.

On note que selon un mode particulier de réalisation du moteur-pompe hydraulique 1 suivant l'invention, le conduit interne d'entrée-sortie 57 et/ou le conduit externe d'entrée-sortie 58 peut comporter un clapet anti-retour ne laissant aller l'huile de moteur-pompe 114 qui circule dans lesdits conduits 57, 58 que dans un seul sens, tandis que ces derniers peuvent - en plus ou à la place dudit clapet - comporter une vanne d'obturation. En outre, le conduit interne d'entrée-sortie 57 et/ou le conduit externe d'entrée-sortie 58 peut comporter un amortisseur de pulses constitué par exemple d'un accumulateur hydraulique de faible capacité. La prise de force de rotor central 4 peut quant à elle faire corps avec le rotor central de moteur-pompe 3 ou être fixée sur ce dernier, et être constituée d'un tripode ou multipode, d'un axe cannelé mâle ou femelle, d'un joint de cardan, d'un joint homocinétique, d'une bride métallique ou non, et de manière générale, de tout dispositif d'accouplement permettant de transmettre un mouvement de rotation d'une pièce à une autre.

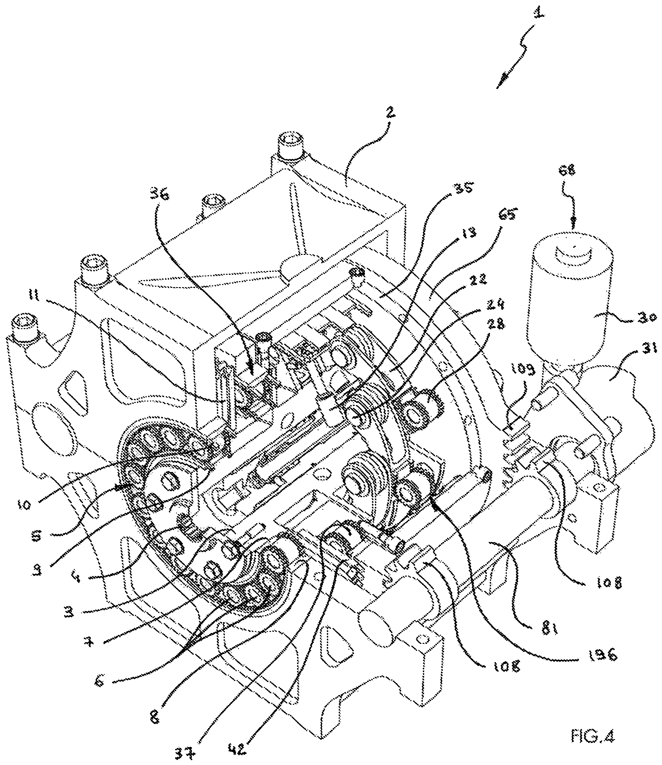

En outre, comme montré en figures 4 à 7, le moteur-pompe hydraulique 1 suivant l'invention comprend au moins un piston hydraulique 13 pouvant se mouvoir en translation dans le cylindre hydraulique 14 et pouvant pousser un poussoir guidé de piston hydraulique 18 ou pouvant être poussé par ce dernier, ledit poussoir 18 étant guidé en translation par un guide de poussoir 19 aménagé radialement ou tangentiellement dans le rotor central de moteur pompe 3, ledit piston hydraulique 13 faisant circuler - lors de son mouvement de va-et-vient - une huile de moteur pompe 114 entre le conduit interne d'entrée-sortie 57 et le conduit externe d'entrée-sortie 58, et pouvant notamment comporter en sa périphérie un ou plusieurs segment(s) d'étanchéité quel qu'en soit le type connu de l'homme de l'art, et/ou des motifs réalisant une perte de charge.

Le moteur-pompe hydraulique 1 suivant l'invention comprend aussi au moins un bras tangentiel 22 particulièrement visible en figures 4 à 7 dont l'une des extrémités est articulée dans le rotor central de moteur-pompe 3 tandis que l'autre extrémité comporte une face d'appui de bras tangentiel sur poussoir 23 qui peut exercer un effort sur une ligne d'action de poussoir sur bras tangentiel 21 que comporte le poussoir guidé de piston hydraulique 18, la direction dudit effort étant approximativement tangentielle à l'axe de rotation dudit bras 22, le profil de la face d'appui de bras tangentiel sur poussoir 23 et celui de la ligne d'action de poussoir sur bras tangentiel 21 étant calculés pour que d'une part, la pression de Hertz à laquelle sont soumises ces deux surfaces en contact 23, 21 soit la plus faible possible et pour que d'autre part, le mouvement relatif de ladite face 23 par rapport à ladite ligne 21 soit le plus faible possible de sorte à réduire les pertes par frottement générées au niveau du contact entre ladite face 23 et ladite ligne 21.

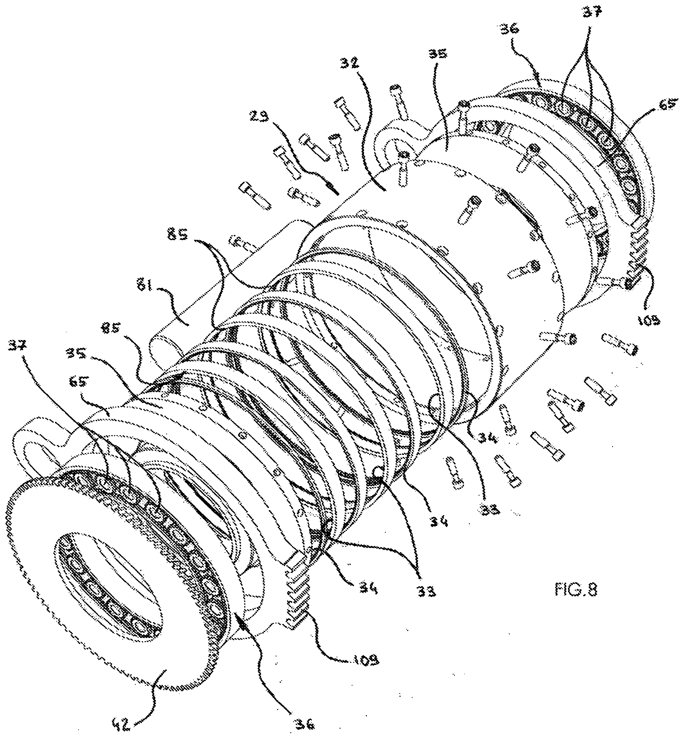

Le moteur-pompe hydraulique 1 suivant l'invention comprend également au moins un rotor périphérique de moteur-pompe 29 tel que montré en figure 8, constitué d'au moins un carter cylindrique de rotor périphérique 32 dont l'une des extrémités au moins est terminée par un flasque de rotor périphérique 35, ledit rotor périphérique 29 tournant dans au moins un palier de rotor périphérique 36 porté par un stator de rotor périphérique 65 qui est directement ou indirectement solidaire du bâti de moteur pompe 2, le rotor central de moteur pompe 3 étant en tout ou partie logé à l'intérieur dudit rotor périphérique 29.

Selon un mode particulier de réalisation du moteur-pompe hydraulique 1 suivant l'invention, le flasque de rotor périphérique 35 peut soit être réalisé dans le même lopin de matière que le carter cylindrique de rotor périphérique 32, soit être fixé sur ce dernier par vissage, soudage, sertissage ou par tout autre procédé de fixation mécanique connu de l'homme de l'art.

Le moteur-pompe hydraulique 1 suivant l'invention comprend également des moyens antifriction 196 que comporte le bras tangentiel 22 sur sa face située à l'opposé de la face d'appui de bras tangentiel sur poussoir 23 lesdits moyens 196 prenant appui sur la surface interne du carter cylindrique de rotor périphérique 32.

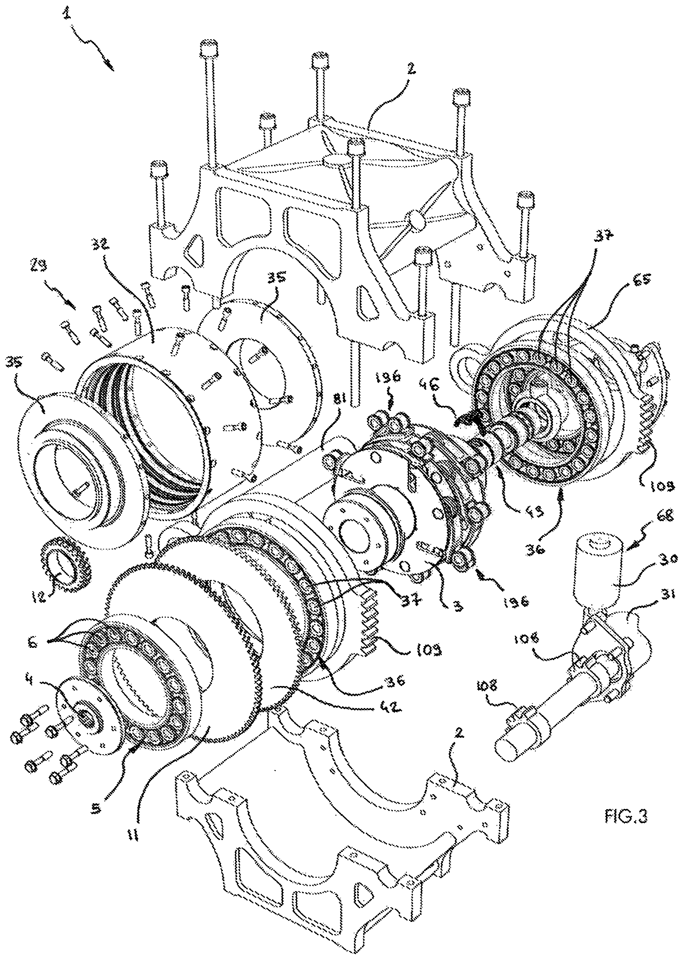

On remarque en figures 3, 4, 7, 8 et 22 que le moteur-pompe hydraulique 1 suivant l'invention comprend un rotor périphérique de moteur-pompe 29 qui peut être forcé à tourner à la même vitesse que le rotor central de moteur-pompe 3 par une couronne de synchronisation angulaire de rotor périphérique 42 rendue solidaire en rotation d'une couronne de synchronisation angulaire de rotor central 11 que comporte le rotor central de moteur pompe 3 par au moins un pignon de synchronisation angulaire 12 tournant autour d'au moins un axe de pignon de synchronisation angulaire 81 que comprend le bâti de moteur-pompe 2.

Selon un mode particulier de réalisation du moteur-pompe hydraulique 1 suivant l'invention, le dispositif d'engrènement que forment ensemble la couronne de synchronisation angulaire de rotor périphérique 42, la couronne de synchronisation angulaire de rotor central 11 et le pignon de synchronisation angulaire 12 peut être remplacé par au moins une chaîne, une courroie, un arbre ou part tout autre moyen de transmission connu de l'homme de l'art.

Comme le montrent les figures 3 à 7, le moteur-pompe hydraulique 1 suivant l'invention, les moyens antifriction (196) sont constitués d'au moins un rouleau antifriction de bras tangentiel 28 qui peut rouler d'une part, sur une piste de roulement de bras tangentiel 26 que comporte le bras tangentiel 22 sur sa face située à l'opposé de la face d'appui de bras tangentiel sur poussoir 23 et d'autre part, sur une piste de roulement de rotor périphérique 33 que comporte la surface interne du carter cylindrique de rotor périphérique 32, ledit rouleau 28 étant limité dans son déplacement simultanément par rapport à la piste de roulement de bras tangentiel 26 et par rapport à la piste de roulement de rotor périphérique 33 par au moins une crémaillère de rouleau de bras tangentiel 27 que comporte la piste de roulement de bras tangentiel 26 et par au moins une couronne de rouleau de rotor périphérique 34 que comporte la piste de roulement de rotor périphérique 33, ladite crémaillère 27 et ladite couronne 34 coopérant simultanément avec au moins un pignon de rouleau 87 que comporte ledit rouleau 28.

Selon un mode particulier de réalisation du moteur-pompe hydraulique 1 suivant l'invention, la crémaillère de rouleau de bras tangentiel 27 et la couronne de rouleau de rotor périphérique 34 peuvent être dissociées des pistes de roulement 26, 33 avec lesquelles elles coopèrent afin d'en permettre la fabrication et/ou le montage de façon indépendante, tandis que la couronne de rouleau de rotor périphérique 34 peut être par exemple discontinue de sorte que seuls les secteurs angulaires de ladite couronne 34 qui coopèrent effectivement avec le rouleau antifriction de bras tangentiel 28 soient munis de dentures.

On note en outre que la piste de roulement de bras tangentiel 26 peut comporter au moins un rail de guidage en creux ou en saillie qui coopère avec au moins une gorge de guidage 86 en creux ou en saillie que comporte le rouleau antifriction de bras tangentiel 28, ledit rail et ladite gorge 86 garantissant le maintien en position axiale dudit rouleau antifriction 28 par rapport au moteur-pompe hydraulique 1 selon l'invention.

On note aussi que préférentiellement, le diamètre de roulement du rouleau antifriction de bras tangentiel 28 est sensiblement égal à celui du cercle primitif du pignon de rouleau 87, le diamètre intérieur de la piste de roulement de rotor périphérique 33 est sensiblement égal à celui du cercle primitif de la couronne de rouleau de rotor périphérique 34, tandis que la ligne primitive de la crémaillère de rouleau de bras tangentiel 27 coïncide avec la surface fonctionnelle de la piste de roulement de bras tangentiel 26.

Selon un mode particulier de réalisation du moteur-pompe hydraulique 1 suivant l'invention, le pignon de rouleau 87 peut être soit réalisé dans le même lopin de matière que le rouleau antifriction de bras tangentiel 28 lui-même, soit rapporté sur ce dernier par frettage, sertissage, soudage ou par tout moyen connu de l'homme de l'art permettant de fixer ledit pignon 87 sur ledit rouleau 28. On note que ce mode de réalisation du rouleau antifriction de bras tangentiel 28 peut également s'appliquer à un rouleau de palier de rotor central 6 et/ou à un rouleau de palier de rotor périphérique 37 que peut également comporter le moteur-pompe hydraulique 1.

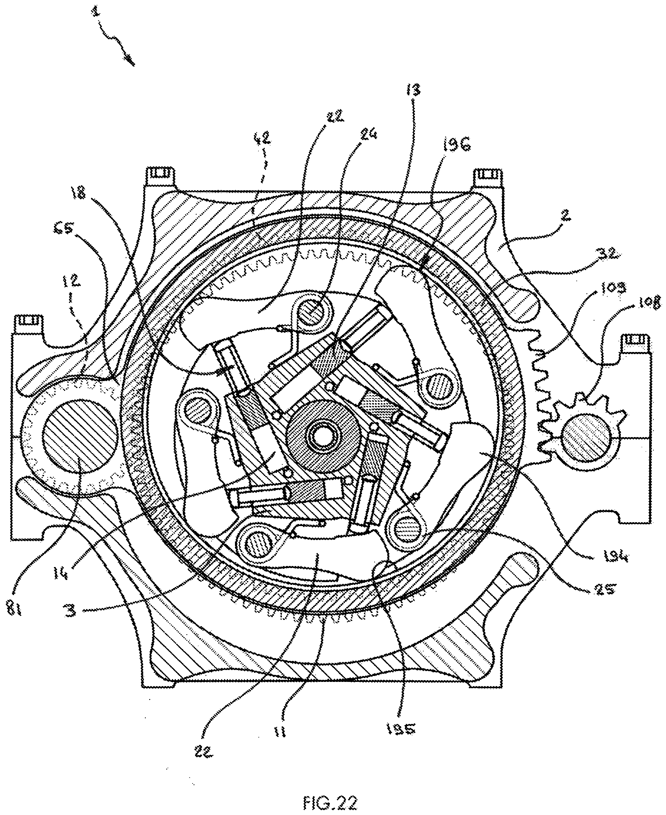

La figure 22 illustre une variante du moteur-pompe hydraulique 1 à cylindrée fixe ou variable dont les moyens antifriction (196) sont constitués de patins de friction de bras tangentiel 194.

Selon cette variante particulière du moteur-pompe hydraulique 1 suivant l'invention, ledit moteur-pompe 1 comprend au moins un patin de friction de bras tangentiel 194 que comporte le bras tangentiel 22 sur sa face située à l'opposé de la face d'appui de bras tangentiel sur poussoir 23 qui peut entrer en contact avec une piste de friction de rotor périphérique 195 que comporte la surface interne du carter cylindrique de rotor périphérique 32.

Selon un mode particulier de réalisation du moteur-pompe hydraulique 1 suivant l'invention, le patin de friction de bras tangentiel 194 et/ou la piste de friction de rotor périphérique 195 peuvent être nitrurés, cémentés et/ou revêtus de DLC « Diamond-like-Carbon » ou de tout autre revêtement dur et/ou à bas coefficient de frottement. On note aussi que le patin de friction de bras tangentiel 194 peut être une pièce indépendante rapportée sur le bras tangentiel 22 par vissage, soudage, sertissage ou par tout autre procédé de fixation mécanique connu de l'homme de l'art.

Comme l'illustre a figure 7, le moteur-pompe hydraulique 1 à cylindrée fixe ou variable suivant l'invention peut prévoir un piston hydraulique 13 qui comprend une rotule d'appui de poussoir sur piston hydraulique 17 sur sa face circulaire qui est la plus éloignée du rotor central de moteur pompe 3, ladite rotule 17 étant constituée d'une forme troncosphérique en creux ou en relief qui coopère avec une rotule d'appui de piston hydraulique sur poussoir 20 que comprend le poussoir guidé de piston hydraulique 18 ladite rotule 20 étant également constituée d'une forme troncosphérique en creux ou en relief, tandis que les deux formes troncosphériques sont complémentaires et constituent une liaison rotule entre ledit piston 13 et ledit poussoir 18.

En outre, le poussoir guidé de piston hydraulique 18 peut comprendre une jambe de force 82 que l'on voit clairement en figure 7 et qui est placée dans le prolongement du piston hydraulique 13, et une traverse de force 83 montée solidairement de ladite jambe 82 et perpendiculairement à cette dernière, ladite traverse 83 portant la ligne d'action de poussoir sur bras tangentiel 21 tandis que chacune de ses deux extrémités peut coulisser dans le guide de poussoir 19. On note que selon un mode particulier de réalisation du moteur-pompe hydraulique 1 suivant l'invention, la traverse de force 83 peut être précontrainte afin que lorsque la face d'appui de bras tangentiel sur poussoir 23 exerce son effort maximal sur la ligne d'action de poussoir sur bras tangentiel 21, la pression de contact entre ladite face 23 et ladite ligne 21 soit la plus uniformément répartie possible. On remarque en outre que ladite face 23 et/ou ladite ligne 21 peuvent être nitrurées, cémentées et/ou revêtues de DLC « Diamond-like-Carbon » ou de tout autre revêtement dur et/ou à bas coefficient de frottement.

En figure 7, on a illustré que le rotor central de moteur-pompe 3 comporte un logement cylindrique d'axe 84 dans le quel est logé un axe de bras tangentiel 24 tandis que le bras tangentiel 22 est traversé par ledit axe 24 afin de s'articuler dans le rotor central de moteur-pompe 3. On note d'ailleurs que le logement cylindrique d'axe 84 peut être soit directement aménagé dans la matière du rotor central de moteur pompe 3, soit aménagé dans une pièce fixée sur ledit rotor 3 par vissage, soudage ou par tout autre moyen de fixation connu de l'art antérieur.

Aussi, le rotor central de moteur-pompe 3 peut comporter un ressort de rappel de bras tangentiel 25 qui prend appui d'une part, sur ledit rotor 3 et d'autre part, sur le bras tangentiel 22 ledit ressort 25 tendant - par l'effort qu'il produit - à éloigner ledit bras 22 dudit rotor 3 et pouvant opérer en compression, en traction ou en torsion et être de type hélicoïdal, à lame ou de tout autre type connu de l'homme de l'art (figure 7).

Comme le montre la figure 8, la piste de roulement de rotor périphérique 33 peut comporter au moins un rail de guidage 85 en creux ou en saillie qui coopère avec au moins une gorge de guidage 86 en creux ou en saillie que comporte le rouleau antifriction de bras tangentiel 28 ledit rail 85 et ladite gorge 86 garantissant le maintien en position axiale dudit rouleau antifriction 28 par rapport au moteur-pompe hydraulique 1 selon l'invention.

Suivant un mode particulier de réalisation illustré en figures 1 à 4 et en figure 7 du moteur-pompe hydraulique 1 à cylindrée fixe ou variable, le palier de rotor central 5 peut comprendre d'une part, une piste intérieure de palier de rotor central 7 munie d'au moins une couronne intérieure de palier de rotor central 9 ladite piste 7 étant solidaire du rotor central de moteur-pompe 3 et d'autre part, une piste extérieure de palier de rotor central 8 munie d'au moins une couronne extérieure de palier de rotor central 10 ladite piste 8 étant solidaire du bâti de moteur pompe 2, tandis qu'au moins trois rouleaux de palier de rotor central 6 peuvent rouler simultanément sur la piste intérieure de palier de rotor central 7 et sur la piste extérieure de palier de rotor central 8 et restent à distance constante les uns par rapport aux autres grâce à au moins un pignon de rouleau 87 que comporte chaque rouleau de palier de rotor central 6 et qui coopère avec lesdites couronnes intérieure 9 et extérieure 10.

Selon un mode particulier de réalisation du moteur-pompe hydraulique 1 suivant l'invention, la couronne intérieure de palier de rotor central 9 et la couronne extérieure de palier de rotor central 10 peuvent être dissociées des pistes intérieure 7 et extérieure 8 de palier de rotor central avec lesquelles elles coopèrent afin d'en permettre la fabrication et/ou le montage de façon indépendante. On note que préférentiellement, le diamètre de roulement des rouleaux de palier de rotor central 6 est sensiblement égal à celui du cercle primitif du pignon de rouleau 87 que comporte chaque dit rouleau de palier de rotor central 6, que le diamètre extérieur de la piste intérieure de palier de rotor central 7 est sensiblement égal à celui du cercle primitif de la couronne intérieure de palier de rotor central 9, tandis que le diamètre intérieur de la piste extérieure de palier de rotor central 8 est sensiblement égal à celui du cercle primitif de la couronne extérieure de palier de rotor central 10.

En outre, la piste intérieure de palier de rotor central 7 et/ou la piste extérieure de palier de rotor central 8 peut comporter au moins un rail de guidage 85 en creux ou en saillie qui coopère avec au moins une gorge de guidage 86 en creux ou en saillie que comportent les rouleaux de palier de rotor central 6 ledit rail 85 et ladite gorge 86 étant de forme complémentaire et garantissant le maintien en position axiale desdits rouleaux de palier 6 par rapport au moteur-pompe hydraulique 1 selon l'invention, tandis que, selon un mode particulier de réalisation dudit moteur-pompe 1, le rail de guidage 85 et/ou la gorge de guidage 86 peuvent être dissociés des pistes intérieure 7 et extérieure 8 de palier de rotor central avec lesquelles elles coopèrent afin d'en permettre la fabrication et/ou le montage de façon indépendante.

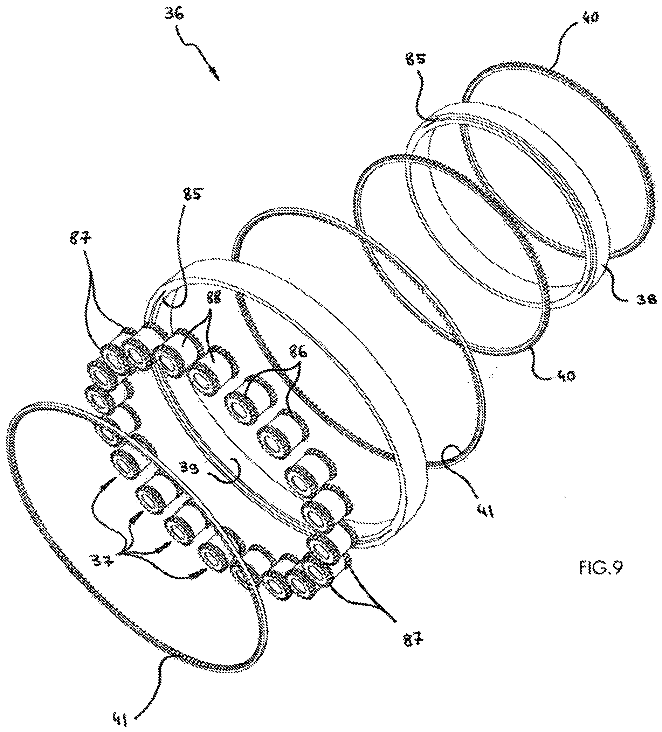

Comme illustré en figure 9, le palier de rotor périphérique 36 peut comprendre d'une part, une piste intérieure de palier de rotor périphérique 38 munie d'au moins une couronne intérieure de palier de rotor périphérique 40 ladite piste 38 étant solidaire du rotor périphérique de moteur-pompe 29 et d'autre part, une piste extérieure de palier de rotor périphérique 39 munie d'au moins une couronne extérieure de palier de rotor périphérique 41 ladite piste 39 étant solidaire du stator de rotor périphérique 65, tandis qu'au moins trois rouleaux de palier de rotor périphérique 37 peuvent rouler simultanément sur la piste intérieure de palier de rotor périphérique 38 et sur la piste extérieure de palier de rotor périphérique 39 et restent à distance constante les uns par rapport aux autres grâce à au moins un pignon de rouleau 87 que comporte chaque rouleau de palier de rotor périphérique 37 et qui coopère avec lesdites couronnes intérieure 40 et extérieure 41.

Selon un mode particulier de réalisation du moteur-pompe hydraulique 1 suivant l'invention illustré en figure 9, la couronne intérieure de palier de rotor périphérique 40 et la couronne extérieure de palier de rotor périphérique 41 peuvent être dissociées des pistes intérieure 38 et extérieure 39 de palier de rotor périphérique avec lesquelles elles coopèrent afin d'en permettre la fabrication et/ou le montage de façon indépendante. On note que préférentiellement, le diamètre de roulement des rouleaux de palier de rotor périphérique 37 est sensiblement égal à celui du cercle primitif du pignon de rouleau 87 que comporte chaque dit rouleaux de palier de rotor périphérique 37, que le diamètre extérieur de la piste intérieure de palier de rotor périphérique 38 est sensiblement égal à celui du cercle primitif de la couronne intérieure de palier de rotor périphérique 40, tandis que le diamètre intérieur de la piste extérieure de palier de rotor périphérique 39 est sensiblement égal à celui du cercle primitif de la couronne extérieure de palier de rotor périphérique 41.

On remarque que la piste intérieure de palier de rotor périphérique 38 et/ou la piste extérieure de palier de rotor périphérique 39 peut comporter au moins un rail de guidage 85 en creux ou en saillie qui coopère avec au moins une gorge de guidage 86 en creux ou en saillie que comportent les rouleaux de palier de rotor périphérique 37 ledit rail 85 et ladite gorge 86 étant de forme complémentaire et garantissant le maintien en position axiale desdits rouleaux de palier 37 par rapport au moteur-pompe hydraulique 1 selon l'invention, tandis que, selon un mode particulier de réalisation dudit moteur-pompe 1, le rail de guidage 85 et/ou la gorge de guidage 86 peuvent être dissociés des pistes intérieure 38 et extérieure 39 de palier de rotor périphérique avec lesquelles elles coopèrent afin d'en permettre la fabrication et/ou le montage de façon indépendante.

Le moteur-pompe hydraulique 1 à cylindrée fixe ou variable suivant l'invention peut comprendre un distributeur d'entrée-sortie 43 qui est empêché de tourner avec le rotor central de moteur pompe 3 et qui est maintenu en rotation par rapport au bâti de moteur pompe 2 par au moins un ergot ou biellette directement ou indirectement fixé au bâti de moteur-pompe 2 la fixation dudit ergot et/ou de ladite biellette audit bâti 2 pouvant prévoir plusieurs degrés de liberté pour s'accommoder du fonctionnement du moteur-pompe hydraulique 1 suivant l'invention, tandis que ledit ergot et/ou biellette peut être remplacé par tout autre moyen mécanique permettant d'arrêter en rotation le distributeur d'entrée-sortie 43 suivant l'axe de rotation du rotor central de moteur-pompe 3.

On note que selon un mode particulier de réalisation du moteur-pompe hydraulique 1 suivant l'invention, la biellette peut être reliée au stator de rotor périphérique 65 de sorte que lorsque ce dernier tourne sous l'action d'un servomoteur de variation de cylindrée 68, ladite biellette fasse simultanément tourner le distributeur d'entrée-sortie 43 par rapport au bâti de moteur-pompe 2, dans le même sens, et selon une amplitude angulaire similaire.

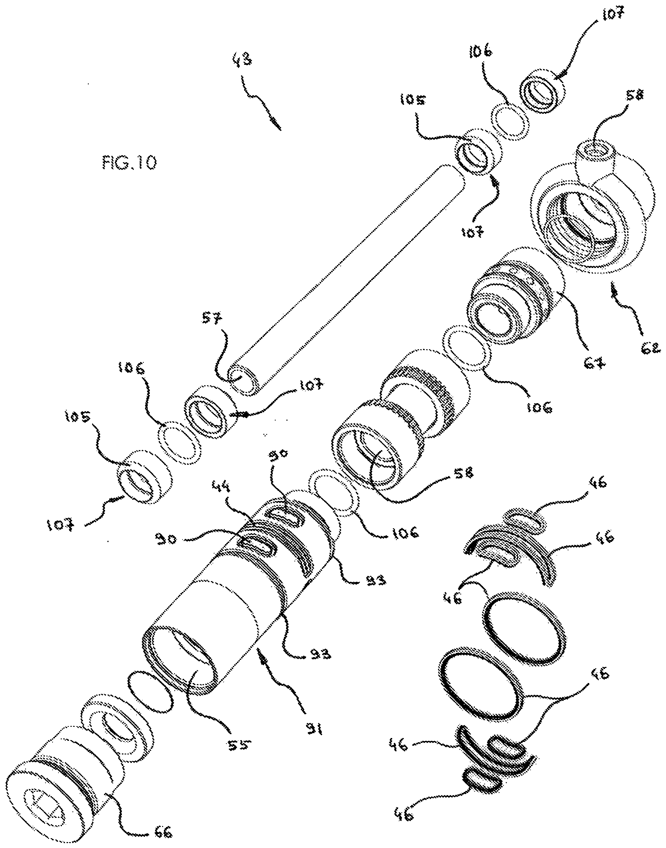

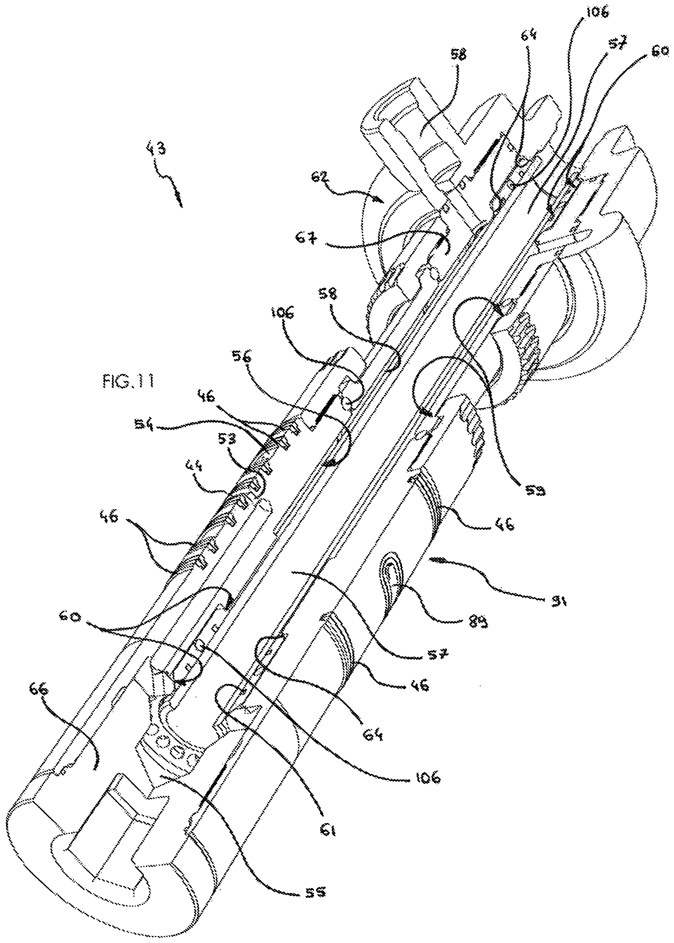

Comme le montrent les figures 10 et 11, le distributeur d'entrée-sortie 43 est un stator cylindrique 91 logé avec un faible jeu dans un cylindre de stator 92 aménagé au centre du rotor central de moteur pompe 3 et coaxialement à ce dernier, ledit stator 91 renfermant une chambre de conduit interne 55 qui communique d'une part, avec le conduit interne d'entrée-sortie 57 et d'autre part, avec un collecteur angulaire entrée-sortie de conduit interne 44 que comporte ledit stator 91 en sa périphérie via un canal interne d'entrée-sortie de distributeur 53, tandis que ledit stator 91 renferme également une chambre de conduit externe 56 qui communique d'une part, avec le conduit externe d'entrée-sortie 58 et d'autre part, avec un collecteur angulaire entrée sortie de conduit externe 89 que comporte également ledit stator 91 en sa périphérie via un autre canal interne d'entrée sortie de distributeur 53 les collecteurs angulaires 44 et 89 étant par exemple constitués de gorges radiales qui sont aménagées sur une portion angulaire sensiblement inférieure à cent quatre-vingt degrés et qui sont angulairement décalées l'une par rapport à l'autre d'environ cent quatre-vingt degrés, et face auxquelles l'orifice d'entrée-sortie de rotor central 16 vient périodiquement se positionner lors de la rotation du rotor central de moteur-pompe 3 de sorte à permettre à une huile de moteur-pompe 114 de circuler entre lesdites chambres de conduit 55, 56 et le cylindre hydraulique 14.

On remarque que le stator cylindrique 91 comporte, à côté du collecteur angulaire entrée-sortie de conduit interne 44, au moins une gorge d'équilibrage d'effort radial de conduit externe 90 qui communique avec la chambre de conduit externe 56 via un canal interne d'équilibrage de distributeur 54 tandis que ledit stator 91 comporte également au moins une gorge d'équilibrage d'effort radial de conduit interne 45 qui communique avec la chambre de conduit interne 55 via un autre canal interne d'équilibrage de distributeur 54, ladite gorge 45 étant située à côté du collecteur angulaire entrée-sortie de conduit externe 89 et la surface de la gorge d'équilibrage d'effort radial de conduit externe 90 étant calculée pour que l'effort radial que produit sur le stator 91 la pression régnant dans le collecteur angulaire entrée-sortie de conduit externe 89 soit sensiblement égal à l'effort radial antagoniste que produit sur le stator 91 la pression régnant dans ladite gorge d'équilibrage 90.

Cette stratégie peut s'appliquer à l'identique s'agissant de la gorge d'équilibrage d'effort radial de conduit interne 45 qui peut compenser l'effort radial produit sur le stator 91 par le collecteur angulaire entrée-sortie de conduit interne 44.

Comme montré en figure 10, le stator cylindrique 91 peut comporter une gorge d'étanchéité axiale 93 à proximité de l'une au moins de ses extrémités axiales.

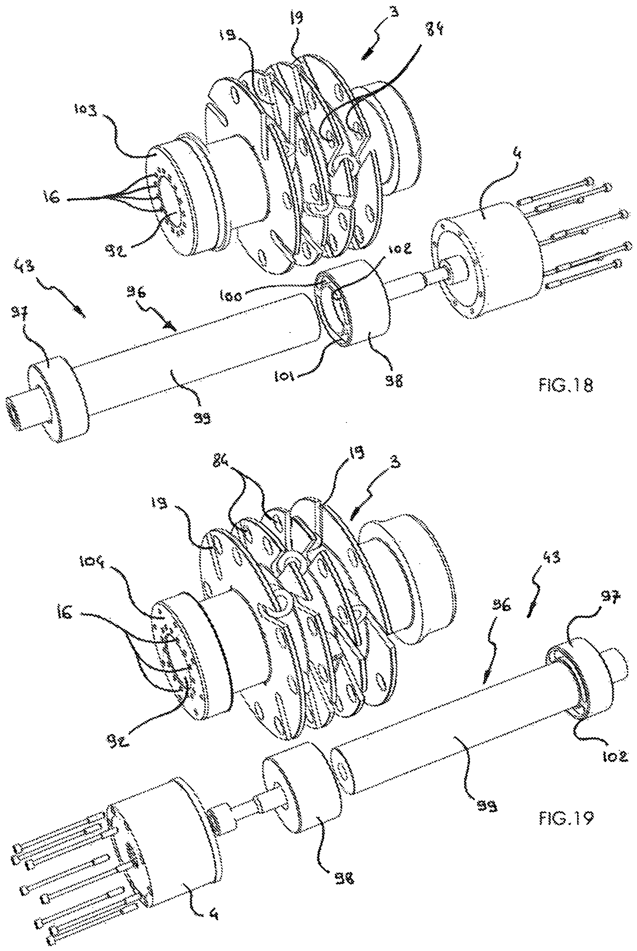

On remarque que selon un mode de réalisation particulier du moteur-pompe hydraulique 1 à cylindrée fixe ou variable suivant l'invention illustré en figures 18 et 19, le distributeur d'entrée-sortie 43 peut être un stator axial 96 constitué d'un flasque de distribution 97 et d'un flasque d'équilibrage 98 placés axialement de part et d'autre du rotor central de moteur-pompe 3 en regard respectivement d'une face de distribution 103 et d'une face d'équilibrage 104 aménagées sur ledit rotor 3 lesdits flasques 97, 98 étant mécaniquement reliés entre eux par un moyeu central de stator axial 99 qui traverse axialement ledit rotor central 3 via un cylindre de stator 92 aménagé au centre dudit rotor central 3 et coaxialement à ce dernier, ledit stator 96 renfermant une chambre de conduit interne 55 qui communique d'une part, avec le conduit interne d'entrée-sortie 57 et d'autre part, avec un collecteur angulaire entrée-sortie de conduit interne 44 aménagé axialement sur la face interne du flasque de distribution 97 via un canal interne d'entrée-sortie de distributeur 53, tandis que ledit stator 96 renferme également une chambre de conduit externe 56 qui communique d'une part, avec le conduit externe d'entrée-sortie 58 et d'autre part, avec un collecteur angulaire entrée-sortie de conduit externe 89 également aménagé axialement sur la face interne du flasque de distribution 97 via un autre canal interne d'entrée-sortie de distributeur 53, les collecteurs angulaires 44 et 89 étant par exemple constitués de gorges axiales aménagées sur ladite face interne sur une portion angulaire sensiblement inférieure à cent quatre-vingt degrés et angulairement décalées l'une par rapport à l'autre d'environ cent quatre-vingt degrés, et qui se retrouvent régulièrement positionnés face à l'orifice d'entrée-sortie de rotor central 16 lors de la rotation du rotor central de moteur-pompe 3 de sorte à permettre à une huile de moteur-pompe 114 de circuler entre les chambres de conduit 55, 56 et le cylindre hydraulique 14.

Les figures 18 et 19 montrent que la chambre de conduit interne 55 communique avec une gorge d'équilibrage d'effort axial de conduit interne 100 aménagée axialement sur la face interne du flasque d'équilibrage 98 via un canal interne d'équilibrage de distributeur 54, tandis que la chambre de conduit externe 56 communique avec une gorge d'équilibrage d'effort axial de conduit externe 101 également aménagée axialement sur la face interne du flasque d'équilibrage 98 via un autre canal interne d'équilibrage de distributeur 54 la surface de la gorge d'équilibrage d'effort axial de conduit externe 101 étant calculée pour que l'effort axial que produit sur le stator axial 96 la pression régnant dans le collecteur angulaire entrée-sortie de conduit externe 89 soit sensiblement égal à l'effort axial antagoniste que produit sur ledit stator 96 la pression régnant dans ladite gorge d'équilibrage 101. Cette stratégie peut s'appliquer à l'identique s'agissant de la gorge d'équilibrage d'effort axial de conduit interne 100 de sorte que cette dernière produise sur le stator 96 un effort de même intensité que celui produit par le collecteur angulaire entrée-sortie de conduit interne 44 sur ledit stator 96.

En outre, comme le montrent les figures 18 et 19, le flasque de distribution 97 et/ou le flasque d'équilibrage 98 comporte une gorge d'étanchéité radiale 102 à l'une au moins de ses extrémités radiales.

On note que le moyeu central de stator axial 99 peut comporter une gorge d'étanchéité axiale 93 à l'une au moins de ses extrémités axiales ou en un point quelconque de sa longueur.

Comme l'illustre la figure 10, tout ou partie du collecteur angulaire entrée-sortie de conduit interne 44, du collecteur angulaire entrée-sortie de conduit externe 89, de la gorge d'équilibrage d'effort radial de conduit externe 90, de la gorge d'équilibrage d'effort radial de conduit interne 45, de la gorge d'étanchéité axiale 93, de la gorge d'équilibrage d'effort axial de conduit interne 100, de la gorge d'équilibrage d'effort axial de conduit externe 101 ou de la gorge d'étanchéité radiale 102, peut être muni d'un segment de gorge de distributeur 46 qui empêche une huile de moteur-pompe 114 mise sous pression de fuir en trop grande quantité entre le stator cylindrique 91 et le cylindre de stator 92 ou encore, entre le flasque de distribution 97 et la face de distribution 103 et/ou entre le flasque d'équilibrage 98 et la face d'équilibrage 104, ledit segment 46 pouvant être de tout type connu de l'homme de l'art, quelle qu'en soit la matière, la géométrie ou le traitement de la surface qui peut être par exemple nitrurée, cémentée et/ou revêtue de DLC « Diamond-like-Carbon » ou de tout autre revêtement dur et/ou à bas coefficient de frottement.

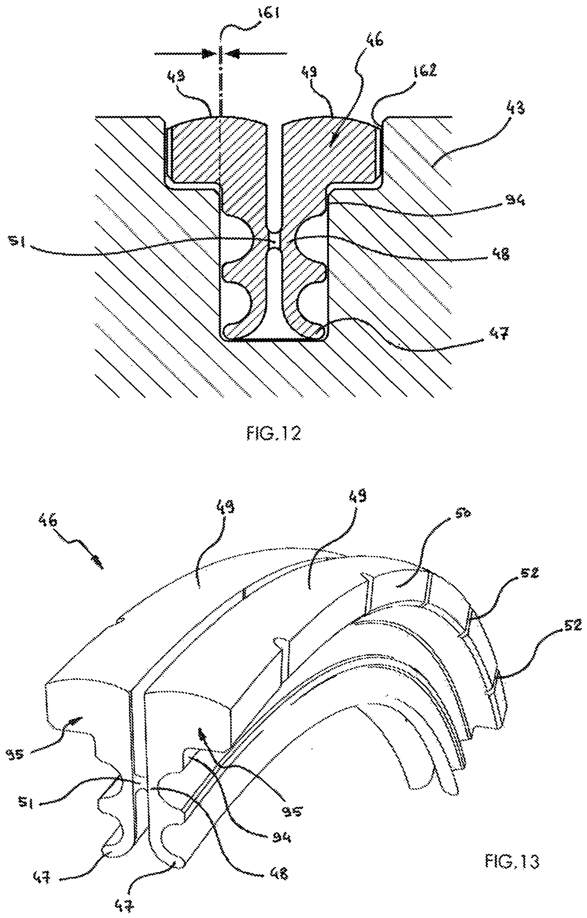

Comme montré en figures 12 et 13, le moteur-pompe hydraulique 1 à cylindrée fixe ou variable prévoit que le segment de gorge de distributeur 46 peut présenter au moins un flanc de segment 94 qui établit latéralement une étanchéité avec le stator cylindrique 91 ou le stator axial 96, et au moins une ligne de contact de segment 49 qui d'une part, entre en contact avec le rotor central de moteur-pompe 3 pour former une étanchéité et qui d'autre part, est soumise à un effort qui tend à la plaquer sur ledit rotor 3 du fait de la poussée exercée par une huile de moteur-pompe 114 sous pression que contient le stator cylindrique 91 ou le stator axial 96 sur le segment de gorge de distributeur 46, ledit effort étant limité du fait d'une faible surface projetée 161 soumise à la pression de ladite huile 114 qu'offre ledit segment 46 qui résulte d'un épaulement de reprise d'effort de segment 50 que comporte ledit segment 46 qui coopère avec un autre épaulement 162 aménagé dans le stator cylindrique 91 ou dans le stator axial 96 lesdits épaulements 50, 162 permettant à la fois de conférer audit segment 46 une largeur et une rigidité suffisantes au niveau de la ligne de contact de segment 49, de limiter ladite surface projetée 161, et de limiter la pression de Hertz qu'exerce ladite ligne de contact 49 sur le rotor central de moteur pompe 3.

On note que selon un mode particulier de réalisation du moteur pompe hydraulique 1 selon l'invention, le segment de gorge de distributeur 46 peut être constitué de deux demi-segments 95, le premier demi-segment 95 empêchant l'huile de moteur-pompe 114 de sortir du collecteur angulaire 44, 89 ou de la gorge d'équilibrage 90, 45, tandis le deuxième empêche ladite huile 114 d'y entrer. On note que l'épaulement de reprise d'effort de segment 50 peut comporter au moins un embrèvement de décompression de segment 52 tandis que les deux demi-segments 95 peuvent être soit indépendants l'un de l'autre, soit réalisés dans le même lopin de matière. Dans ce dernier cas, il peut être prévu - comme le montrent clairement les figures 12 et 13 - un ou plusieurs orifice(s) de décompression de segment 51 aménagé(s) radialement entre les deux demi-segments 95.

On remarque que le segment de gorge de distributeur 46 peut être maintenu en contact avec le rotor central de moteur-pompe 3 par un ressort de fond de gorge de segment 47 qui peut être constitué d'une lamelle métallique ondulée, d'un ressort hélicoïdal, d'une forme quelconque donnée au profil du pied de segment qui opère comme un ressort comme illustré en figures 12 et 13, ou de tout autre moyen connu de l'homme de l'art et qui permet de réaliser un ressort fournissant une poussée la plus uniforme possible sur ledit segment 46 pour le maintenir en contact avec le rotor central de moteur-pompe 3, la surface ce dernier pouvant être par exemple nitrurée, cémentée et/ou revêtue de DLC « Diamond-like-Carbon » ou de tout autre revêtement dur et/ou à bas coefficient de frottement, s'agissant au moins de la partie dudit rotor central 3 qui exposée au contact dudit segment 46.

On remarque également que le segment de gorge de distributeur 46 peut être constitué de deux demi-segments 95 qui présentent chacun au moins un flanc de segment 94 maintenu en contact avec le stator cylindrique 91 ou avec le stator axial 96 par un ressort écarteur de segment 48 qui peut être constitué d'au moins une lamelle métallique ondulée, d'au moins un ressort hélicoïdal, d'au moins une forme quelconque donnée au profil de section dudit segment 46 ladite forme opérant comme un ressort comme illustré en figures 12 et 13, ou de tout autre moyen connu de l'homme de l'art et qui permet de réaliser un ressort fournissant une poussée la plus uniforme possible sur lesdits flancs de segment 94 pour les maintenir en contact avec ledit stator cylindrique 91 ou ledit stator axial 96.

Selon un mode particulier de réalisation du moteur-pompe hydraulique 1 à cylindrée fixe ou variable suivant l'invention illustré en figures 10 et 11, le conduit interne d'entrée-sortie 57 est arrimé dans le distributeur d'entrée sortie 43 et/ou dans le bâti de moteur pompe 2 par l'une ou l'autre des extrémités dudit conduit 57 au moyen d'au moins une rotule obturatrice fixe de conduit 59 et/ou d'au moins une rotule obturatrice glissante de conduit 60, ladite rotule 59, 60 présentant une portée de rotule obturatrice 105 qui peut reposer sur un siège de rotule obturatrice 64 afin de réaliser - avec le distributeur d'entrée sortie 43 et/ou le bâti de moteur pompe 2 - d'une part, une étanchéité et d'autre part, une liaison rotule, ladite portée 105 et/ou ledit siège 64 ayant une forme troncosphérique.

On note que, selon un mode particulier de réalisation du moteur-pompe hydraulique 1 suivant l'invention, la portée de rotule obturatrice 105 et le siège de rotule obturatrice 64 peuvent être nitrurés, cémentés et/ou revêtus de DLC « Diamond-like-Carbon » ou de tout autre revêtement dur et/ou à bas coefficient de frottement.

On note aussi que la rotule obturatrice fixe de conduit 59 peut être maintenue en contact avec son siège de rotule obturatrice 64 par un ressort de rotule obturatrice qui prend appui d'une part, sur le distributeur d'entrée sortie 43 ou sur le bâti de moteur pompe 2 ou sur une rotule obturatrice glissante de conduit 60, et d'autre part, directement ou non sur ladite rotule obturatrice fixe 59 ledit ressort pouvant être un ressort hélicoïdal, une rondelle élastique ondulée ou « Belleville », ou tout autre ressort quel qu'en soit le type, la géométrie ou la matière.

Comme l'illustrent les figures 10 et 11, la rotule obturatrice glissante de conduit 60 peut être constituée d'au moins une demi-rotule obturatrice glissante 107 traversée axialement par le conduit interne d'entrée-sortie 57 ladite demi-rotule 107 pouvant translater axialement et de façon étanche par rapport audit conduit interne 57, tandis que ladite demi-rotule 107 est maintenue au contact de son siège de rotule obturatrice 64 par un ressort de rotule obturatrice 106 qui prend appui d'une part, sur le distributeur d'entrée sortie 43 ou sur le bâti de moteur pompe 2 ou sur une autre demi-rotule obturatrice glissante 107 et d'autre part, directement ou non sur ladite demi rotule obturatrice glissante 107 ledit ressort 106 pouvant notamment être un ressort hélicoïdal, une rondelle élastique ondulée ou « Belleville », ou tout autre ressort quel qu'en soit le type, la géométrie ou la matière.

Selon un mode particulier de réalisation du moteur-pompe hydraulique 1 suivant l'invention, la surface cylindrique interne de la demi-rotule obturatrice glissante 107 ou la surface cylindrique externe du conduit interne d'entrée sortie 57 peut comporter une gorge dans laquelle est logé un joint de rotule obturatrice glissante 61 qui empêche toute fuite d'une huile de moteur pompe 114 entre ladite demi-rotule 107 et ledit conduit 57.

On note que le conduit externe d'entrée-sortie 58 peut être arrimé dans le distributeur d'entrée sortie 43 et/ou dans le bâti de moteur pompe 2 par l'une ou l'autre des extrémités dudit conduit 58 au moyen d'au moins une rotule obturatrice fixe de conduit 59, ladite rotule 59, 60 présentant une portée de rotule obturatrice 105 qui peut reposer sur un siège de rotule obturatrice 64 afin de réaliser - avec le distributeur d'entrée-sortie 43 et/ou le bâti de moteur pompe 2 - d'une part, une étanchéité et d'autre part, une liaison rotule, ladite portée 105 et/ou ledit siège 64 ayant une forme troncosphérique.

On note que, selon un mode particulier de réalisation du moteur-pompe hydraulique 1 suivant l'invention, la portée de rotule obturatrice 105 et le siège de rotule obturatrice 64 peuvent être nitrurés, cémentés et/ou revêtus de DLC « Diamond-like-Carbon » ou de tout autre revêtement dur et/ou à bas coefficient de frottement.

Les figures 10 et 11 montrent que la chambre de conduit interne 55 peut être fermée par un bouchon de conduit interne 66 lequel peut - selon le mode de réalisation choisi du moteur pompe hydraulique 1 suivant l'invention - être traversé ou non par le conduit interne d'entrée-sortie 57, et comporter un siège de rotule obturatrice 64 qui coopère avec une rotule obturatrice fixe de conduit 59 ou une rotule obturatrice glissante de conduit 60 que comporte ledit conduit interne 57.

En outre, la chambre de conduit externe 56 peut être fermée par un bouchon de conduit externe 67 lequel est traversé par le conduit externe d'entrée-sortie 58, ledit bouchon 67 pouvant - selon le mode de réalisation choisi du moteur pompe hydraulique 1 suivant l'invention - comporter un siège de rotule obturatrice 64 qui coopère avec une rotule obturatrice fixe de conduit 59 ou une rotule obturatrice glissante de conduit 60 que comporte ledit conduit externe 58.

On remarque que le conduit interne d'entrée-sortie 57 peut être logé en tout ou partie à l'intérieur du conduit externe d'entrée-sortie 58, la section utile de ce dernier au travers de laquelle circule une huile de moteur-pompe 114 que pompe le moteur-pompe hydraulique 1 suivant l'invention étant ainsi diminuée de la section totale du conduit interne d'entrée-sortie 57.

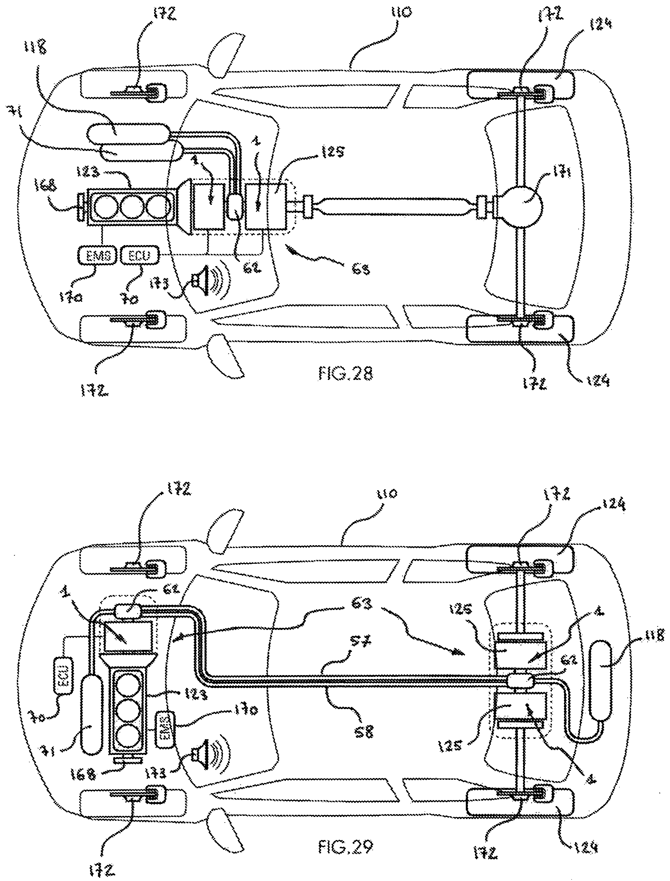

Les figures 10 et 11, mais aussi les figures 28 à 31 montrent que le bâti de moteur-pompe 2 peut comprendre un satellite de raccordement 62 dans lequel sont arrimés le conduit interne d'entrée-sortie 57 et/ou le conduit externe d'entrée-sortie 58.

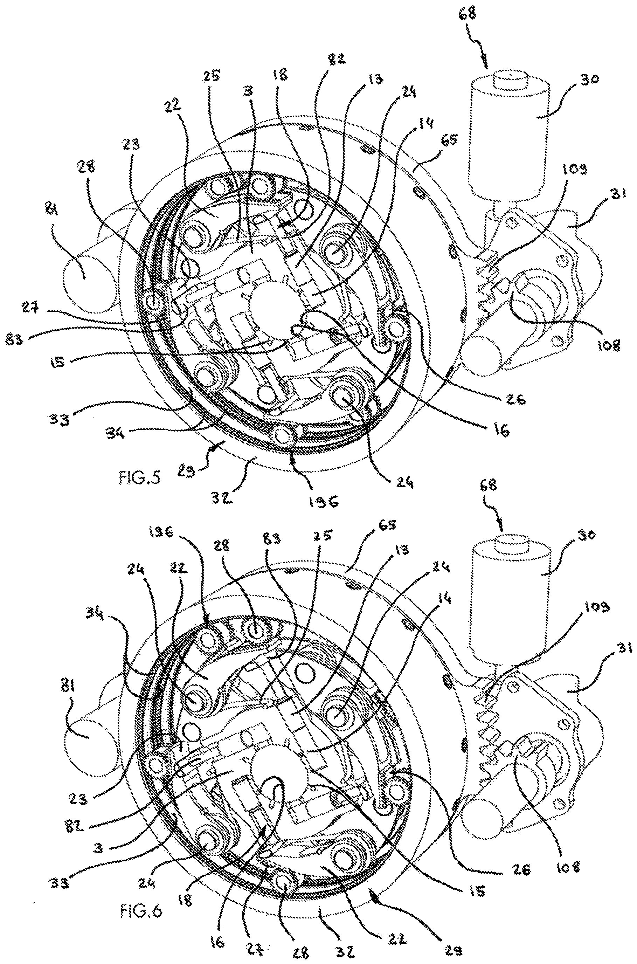

Selon un mode particulier de réalisation du moteur-pompe hydraulique 1 suivant l'invention montré en figures 1 à 6, en figure 8 et en figure 22, le stator de rotor périphérique 65 s'articule sur l'axe de pignon de synchronisation angulaire 81 autour duquel il peut tourner sous l'action d'un servomoteur de variation de cylindrée 68, ledit servomoteur 68 pouvant ainsi faire pivoter ledit stator 65 de quelques degrés autour dudit axe de pignon 81 de sorte à plus ou moins excentrer ledit stator 65 par rapport au rotor central de moteur-pompe 3 afin que le piston hydraulique 13 effectue dans le cylindre hydraulique 14 un mouvement de translation de plus ou moins grande amplitude depuis une amplitude nulle correspondante à une cylindrée nulle du moteur-pompe hydraulique 1 suivant l'invention montrée en figure 5, jusqu'à une amplitude maximale correspondante à une cylindrée maximale dudit moteur-pompe 1 montrée en figure 6.

On note que le servomoteur de variation de cylindrée 68 peut être un vérin hydraulique à simple ou à double effet, un vérin électrique à vis, ou tout autre actionneur connu de l'homme de l'art permettant de faire pivoter le stator de rotor périphérique 65 autour de l'axe de pignon de synchronisation angulaire 81.

Comme illustré en figures 1 à 6, le servomoteur de variation de cylindrée 68 peut être un moteur électrique rotatif de servomoteur 30 qui peut faire tourner - dans un sens ou dans un autre et par l'intermédiaire d'un réducteur de servomoteur 31 - un pignon d'attaque de couronne de variation de cylindrée 108, ledit pignon 108 pouvant tourner dans un palier aménagé dans le bâti de moteur-pompe 2 et pouvant entraîner en rotation une couronne de variation de cylindrée 109 solidaire du stator de rotor périphérique 65, le cercle primitif de ladite couronne 109 étant centré sur l'axe de pignon de synchronisation angulaire 81.

On note que le moteur électrique rotatif de servomoteur 30 peut être à courant alternatif ou continu, de type pas-à-pas ou non, synchrone ou asynchrone, à aimants permanents ou à balais et de manière générale, de tout type connu de l'homme de l'art et être piloté par un dispositif électronique de gestion qui opère un logiciel de commande. Selon un mode particulier de réalisation du moteur-pompe hydraulique 1 suivant l'invention, le réducteur de servomoteur 31 peut être constitué d'une cascade de pignons, et/ou d'au moins un train épicycloïdal et/ou d'au moins une vis sans fin et être relié au moteur électrique rotatif de servomoteur 30 d'une part et/ou au pignon d'attaque de couronne de variation de cylindrée 108 d'autre part par un arbre de transmission muni ou non d'un joint de cardan ou d'un joint homocinétique qui coopère ou non avec une chaîne, une courroie ou tout autre moyen de transmission mécanique connu de l'homme de l'art.

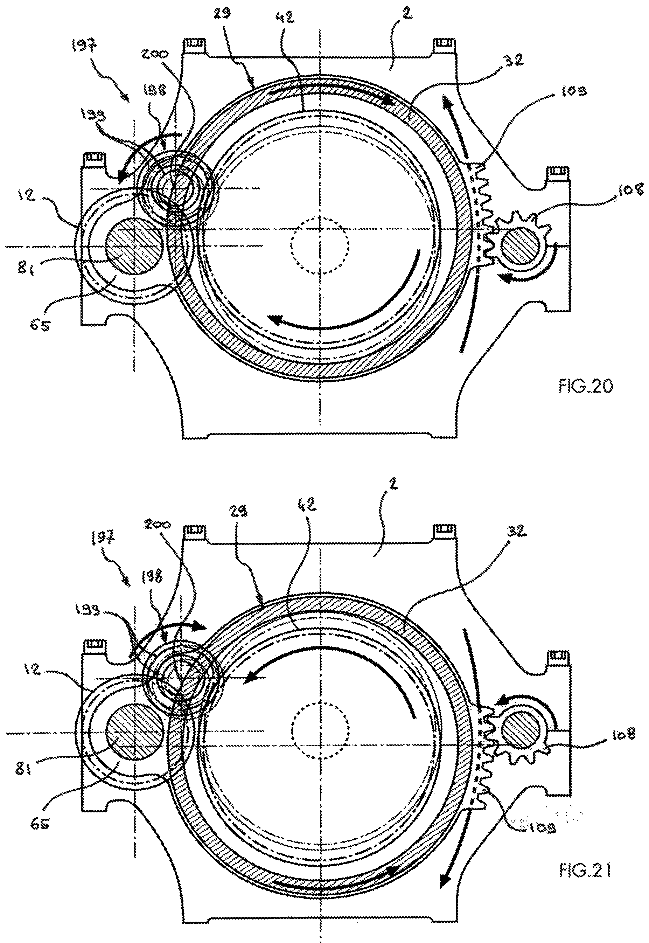

Comme le montrent les figures 20 et 21, le moteur-pompe hydraulique à cylindrée fixe ou variable suivant l'invention peut comporter des moyens de re-phasage 197 qui sont intercalés entre la couronne de synchronisation angulaire de rotor périphérique 42 et la couronne de synchronisation angulaire de rotor central 11.

Lesdits moyens 197 peuvent être actionnés par le servomoteur de variation de cylindrée 68 quand ce dernier fait tourner le stator de rotor périphérique 65 autour de l'axe de pignon de synchronisation angulaire 81.

On note que lesdits moyens 197 peuvent être mécaniques et/ou hydrauliques et/ou électriques et être basés sur un principe analogue à celui des déphaseurs d'arbre à cames trouvés sur les moteurs à combustion interne alternatifs ou à celui de tout déphaseur connu de l'homme de l'art quel qu'en soit le type. Les moyens de re-phasage 197 permettent notamment au rouleau antifriction de bras tangentiel 28 de rester positionné par rapport à la piste de roulement de bras tangentiel 26 de sorte à pouvoir coopérer avec cette dernière quelle que soit la cylindrée imposée par le servomoteur de variation de cylindrée 68 au moteur-pompe hydraulique 1 selon l'invention.

Comme montré en figures 20 et 21, les moyens de re-phasage 197 sont constitués d'au moins un engrenage intermédiaire de re-phasage 198 comportant au moins une roue dentée de re-phasage 199 tournant autour d'au moins un axe de re-phasage 200 solidaire du stator de rotor périphérique 65, ledit engrenage 198 étant intercalé entre la couronne de synchronisation angulaire de rotor périphérique 42 et le pignon de synchronisation angulaire 12.

On remarque que selon cette configuration particulière du moteur-pompe hydraulique 1 selon l'invention, lorsque le servomoteur de variation de cylindrée 68 maintient immobile le stator de rotor périphérique 65 par rapport au bâti de moteur-pompe 2, la vitesse de rotation et le sens de rotation de la couronne de synchronisation angulaire de rotor périphérique 42 sont identiques à ceux de la couronne de synchronisation angulaire de rotor central 11. Pour garantir ce résultat, les moyens de transmission reliant le pignon de synchronisation angulaire 12 à la couronne de synchronisation angulaire de rotor central 11 peuvent être prévus identiques à ceux reliant ledit pignon 12 à la couronne de synchronisation angulaire de rotor périphérique 42 ou pour le moins, produire les mêmes effets que ces derniers.

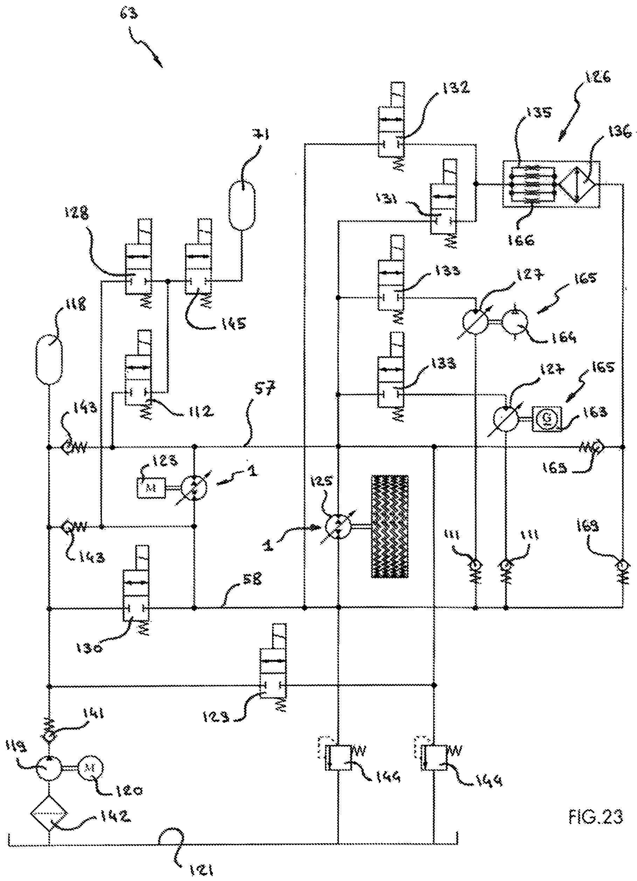

Selon un mode particulier de réalisation du moteur-pompe hydraulique 1 suivant l'invention montré en figure 23 et en figures 28 à 31, le conduit interne d'entrée-sortie 57 et le conduit externe d'entrée-sortie 58 peuvent être directement ou indirectement respectivement reliés avec l'entrée ou la sortie d'au moins un deuxième moteur pompe hydraulique 125 à cylindrée fixe ou variable, le moteur-pompe hydraulique 1 à cylindrée fixe ou variable et le deuxième moteur pompe hydraulique 125 à cylindrée fixe ou variable constituant communément un dispositif de transmission hydraulique 63 qui peut être à variation continue ou non, ledit deuxième moteur pompe 125 pouvant - selon un mode particulier de réalisation - être identique au moteur pompe hydraulique 1 à cylindrée fixe ou variable suivant l'invention, ou être à engrenage extérieur, à engrenage intérieur, à palettes, à pistons axiaux ou radiaux, à cylindrée variable ou non et de façon générale, de tout type connu de l'art antérieur.

On note que le dispositif de transmission hydraulique 63 peut être soit utilisé seul, soit être monté en série ou en parallèle de tout autre dispositif de transmission connu de l'homme de l'art.

Selon un mode particulier de réalisation du moteur-pompe hydraulique 1 suivant l'invention montré en figure 23 et en figures 28 à 31, la prise de force de rotor central 4 du moteur-pompe 1 à cylindrée fixe ou variable est mécaniquement reliée à au moins un moteur de propulsion 123 que comporte un véhicule automobile 110 tandis que le deuxième moteur pompe hydraulique 125 à cylindrée fixe ou variable est mécaniquement relié à au moins une roue ou chenille motrice 124 que comporte ledit véhicule 110, ou inversement, le moteur de propulsion 123 pouvant être thermique ou électrique et être piloté par un calculateur de gestion du moteur de propulsion 170 tandis que le véhicule automobile 110 peut être une voiture particulière, un véhicule utilitaire, un poids-lourd, un engin de chantier, un tracteur agricole, ou tout autre véhicule automoteur, y compris un avion ou un navire, la roue ou chenille motrice 124 étant en ce cas remplacée par une hélice opérant respectivement dans l'air ou dans l'eau.

On note que si le deuxième moteur pompe hydraulique 125 à cylindrée fixe ou variable est identique au moteur pompe hydraulique 1 à cylindrée fixe ou variable suivant l'invention, la prise de force de rotor central 4 du moteur-pompe hydraulique 1 est reliée par des moyens mécaniques au moteur de propulsion 123 tandis que la prise de force de rotor central 4 du deuxième moteur pompe hydraulique 125 est reliée par des moyens mécaniques à la roue ou chenille motrice 124.

Quelle que soit la configuration retenue pour réaliser le moteur-pompe hydraulique 1 suivant l'invention, lesdits moyens mécaniques peuvent être constitués d'un arbre de transmission, d'un pont différentiel, d'un train épicycloïdal, d'un joint de cardan ou d'un joint homocinétique, d'une courroie, d'une chaîne, d'une cascade de pignons, d'un engrenage quel qu'en soit le type, ou de tout moyen de transmission mécanique connu de l'homme de l'art. On remarque que, selon un mode particulier de réalisation du moteur-pompe hydraulique 1 suivant l'invention, le dispositif de transmission hydraulique 63 peut avantageusement remplacer le pont différentiel ordinairement utilisé sur les véhicules automobiles par exemple en prévoyant un moteur-pompe hydraulique 1 à cylindrée fixe ou variable relié au moteur de propulsion 123 du véhicule automobile 110 qui coopère avec deux deuxièmes moteur pompe hydrauliques 125 à cylindrée fixe ou variable chacun relié à une roue ou chenille motrice 124 d'un même essieu dudit véhicule 110.

Selon cette configuration particulière montrée en figures 29 et 30, la répartition du couple moteur ou résistant entre lesdites roues ou chenilles motrices 124 se fait soit naturellement, le débit d'une huile de moteur-pompe 114 circulant entre les différents moteur pompes 1, 125 se répartissant entre lesdits deux deuxièmes moteur pompe hydrauliques 125 à cylindrée fixe ou variable en fonction dudit couple moteur ou résistant imprimé à chaque dit deuxièmes moteur-pompe 125 par la roue ou chenille motrice 124 qu'ils ont à charge d'entraîner en rotation, soit dynamiquement, en réglant la cylindrée de chaque dit deuxième moteur pompe 125 en fonction du rayon de braquage et éventuellement de la vitesse du véhicule automobile 110 détectés respectivement par un capteur d'angle de braquage et un tachymètre que comporte ledit véhicule 110 auxquels peut éventuellement être associé au moins un accéléromètre. On note que si la répartition du couple moteur ou résistant entre lesdites roues ou chenilles motrices 124 s'opère dynamiquement, le véhicule automobile 110 offre une meilleure tenue de route. On remarque que cet exemple non limitatif de réalisation du moteur-pompe hydraulique 1 suivant l'invention est transposable à des véhicules automobiles à 2 roues motrices, 4 roues motrices ou à plusieurs roues motrices, sans limite de nombre. On note que le moteur de propulsion 123 du véhicule automobile 110 peut notamment être à combustion interne alternatif à allumage commandé ou Diesel, ou être constitué d'une ou plusieurs turbines axiales et/ou radiales, notamment selon une configuration semblable à celle que décrit la demande de brevet français N° FR 12/59827 appartenant au demandeur et illustrée en figure 31.

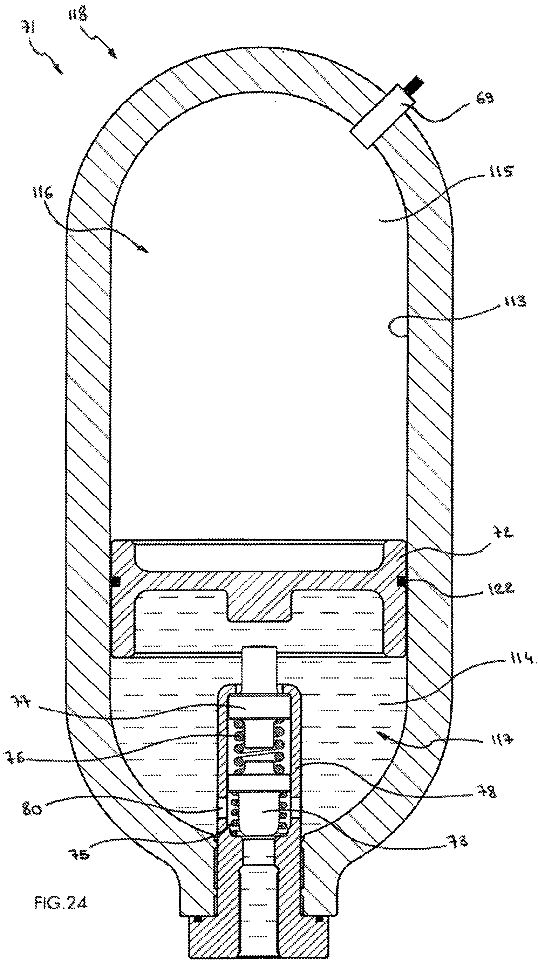

Selon un mode particulier de réalisation du moteur-pompe hydraulique 1 suivant l'invention montré en figure 23, le conduit interne d'entrée-sortie 57 peut être mis en relation avec au moins un accumulateur haute-pression 71 dont la coupe schématique est montrée en figures 24 à 27, par au moins une vanne d'accumulateur haute-pression de conduit interne 112.

En outre, le conduit externe d'entrée-sortie 58 peut être mis en relation avec au moins un accumulateur haute-pression 71 par au moins une vanne d'accumulateur haute-pression de conduit externe 128.

Le conduit interne d'entrée-sortie 57 peut également être mis en relation avec au moins un accumulateur basse-pression 118 dont la coupe schématique est montrée en figures 24 à 27, par au moins une vanne d'accumulateur basse-pression de conduit interne 129.

Comme le montre la figure 23, le conduit externe d'entrée-sortie 58 peut être mis en relation avec au moins un accumulateur basse-pression 118 par au moins une vanne d'accumulateur basse-pression de conduit externe 130, les vannes d'accumulateur 112, 128, 129, 130 pouvant être à bille, à tiroir, à boisseau, à soupape, à pointeau, à clapet, à tube similairement à la demande de brevet appartenant au demandeur publiée sous le n° FR 2 969 705, ou à tout moyen d'obturation manoeuvré par tout actionneur électrique, électromagnétique, pneumatique, mécanique ou hydraulique, tandis que l'accumulateur haute-pression 71 et/ou l'accumulateur basse-pression 118 peut être par exemple à membrane ou à piston et comprimer un gaz, un fluide ou au moins un ressort.

Comme l'illustre la figure 24, l'accumulateur haute pression 71 et/ou l'accumulateur basse-pression 118 peut comporter un capteur de pression d'accumulateur 69 qui renseigne un calculateur de gestion de moteur-pompe 70 sur la pression régnant dans le ou lesdits accumulateur(s) 71, 118. En outre, tout ou partie de la surface interne et/ou externe du ou desdits accumulateur(s) 71, 118 peut être recouverte d'un matériau calorifuge comme par exemple de la laine de roche, une structure alvéolaire ou tout agencement connu de l'homme de l'art qui permet de conserver la chaleur. Selon une variante de réalisation du moteur pompe hydraulique 1 suivant l'invention montrée en figure 23, le conduit interne d'entrée sortie 57 et/ou le conduit externe d'entrée-sortie 58 peuvent être mis en relation avec l'accumulateur basse pression 118 via un clapet anti-retour d'accumulateur basse-pression 143 qui permet à une huile de moteur-pompe 114 de circuler depuis ledit accumulateur 118 vers ledit conduit interne 57 et/ou ledit conduit externe 58, mais non l'inverse. En outre, le figure 23 montre également que le conduit interne d'entrée sortie 57 et/ou le conduit externe d'entrée-sortie 58 peut être relié à un réservoir d'huile de moteur pompe 121 par un clapet limiteur de pression 144, ce dernier protégeant les principaux organes constituant ledit moteur pompe hydraulique 1 de toute surpression qui soit de nature à les endommager.

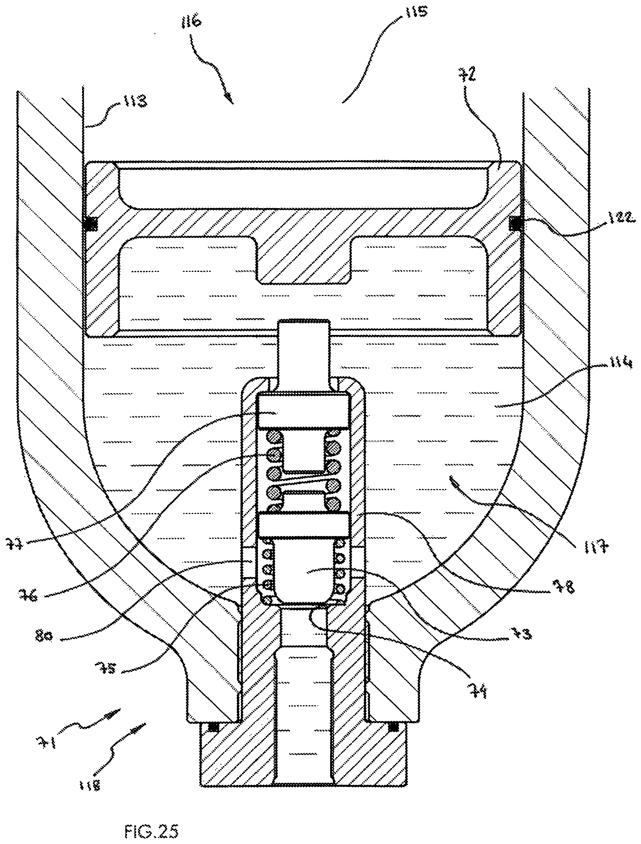

Comme l'illustrent les figures 25 à 27, l'accumulateur haute-pression 71 et/ou l'accumulateur basse-pression 118 peut comprendre au moins un piston séparateur d'accumulateur 72 pouvant se déplacer de façon étanche dans un cylindre borgne d'accumulateur 113, ledit piston 72 délimitant avec ledit cylindre 113 un compartiment à gaz 116 contenant un gaz sous pression 115 et un compartiment à huile 117 contenant une huile de moteur-pompe 114, ce dernier compartiment 117 pouvant être mis en relation avec le conduit interne d'entrée-sortie 57 et/ou le conduit externe d'entrée-sortie 58 lors du fonctionnement du dispositif de transmission hydraulique 63, tandis que le gaz sous pression 115 peut être de l'azote ou tout autre gaz dont les caractéristiques sont compatibles avec les variations de pression recherchées, dans la plage de température recherchée.

On note que - comme montré en figures 25 à 27 - le piston séparateur d'accumulateur 72 peut comporter au moins un joint de piston d'accumulateur 122 et/ou un segment en sa périphérie pour réaliser avec le cylindre borgne d'accumulateur 113 la meilleure étanchéité possible, ledit joint 122 pouvant être torique, à lèvre, composite ou de quelque matière ou géométrie que ce soit, tandis que s'il s'agit d'un segment, celui-ci peut être également de tout type connu de l'homme de l'art, sans limitation. On note également que le cylindre borgne d'accumulateur 113 peut comporter à chacune de ses extrémités une coupole hémisphérique et/ou être essentiellement constitué et/ou revêtu d'acier et/ou d'aluminium et/ou de matériau composite pouvant notamment intégrer de la fibre de carbone à haute résistance mécanique.

Les figures 25 à 27 montrent que le compartiment à huile 117 peut comporter un clapet de fermeture d'accumulateur 73 que le piston séparateur d'accumulateur 72 peut plaquer sur un siège de clapet d'accumulateur 74 en poussant sur un ressort de clapet à forte raideur 76 interposé entre ledit piston 72 et ledit clapet 73, de sorte à isoler de façon étanche ledit compartiment 117 du conduit interne d'entrée sortie 57 et/ou du conduit externe d'entrée-sortie 58, ledit clapet 73 coopérant - à l'opposé du ressort de clapet à forte raideur 76 - avec un ressort de clapet à faible raideur 75 qui tend à éloigner ledit clapet 73 dudit siège 74, ledit clapet 73 pouvant comporter les épaulements nécessaires pour que lesdits ressorts 75, 76 restent centrés sur ledit clapet 73.

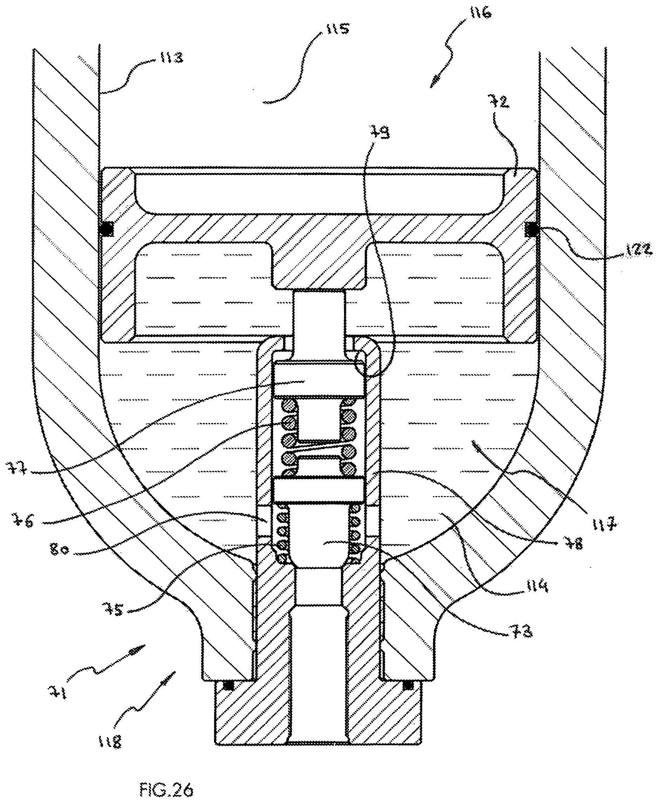

On voit en figures 25 et 26 que le piston séparateur d'accumulateur 72 peut pousser sur le ressort de clapet à forte raideur 76 par l'intermédiaire d'un poussoir de ressort à forte raideur 77 qui est guidé en translation longitudinale par un guide de clapet et poussoir 78 solidaire de l'accumulateur haute-pression 71 et/ou de l'accumulateur basse-pression 118, ledit guide de clapet 78 guidant également le clapet de fermeture d'accumulateur 73 et comportant une butée d'arrêt de poussoir 79 qui détermine le déplacement maximal du poussoir de ressort à forte raideur 77 en direction du piston séparateur d'accumulateur 72. Si le guide de clapet et poussoir 78 est une pièce indépendante, il peut être rendu solidaire de l'accumulateur haute-pression 71 et/ou de l'accumulateur basse-pression 118 par soudage, vissage, sertissage ou par tout moyen de fixation connu de l'homme de l'art. Quelle qu'en soit la configuration, le guide de clapet et poussoir 78 peut comporter des moyens de raccordement à tout conduit hydraulique, quel que soit le type de ce dernier.

Selon cette configuration particulière, le guide de clapet et poussoir 78 peut comporter au moins un orifice radial de guide de clapet 80 qui relie le compartiment à huile 117 avec le siège de clapet d'accumulateur 74 de sorte à permettre à l'huile de moteur-pompe 114 de circuler entre le conduit interne d'entrée-sortie 57 et/ou le conduit externe d'entrée-sortie 58 et ledit compartiment à huile 117. Selon un mode particulier de réalisation du moteur-pompe hydraulique 1 suivant l'invention, le guide de clapet et poussoir 78 peut être constitué d'un tube ajouré qui présente plusieurs orifices radiaux de guide de clapet 80, ou d'une structure porteuse dont résultent des orifices radiaux de guide de clapet 80 de large section.

La figure 22 montre que l'accumulateur haute-pression 71 et/ou l'accumulateur basse-pression 118 peut être relié au conduit interne d'entrée sortie 57 et/ou au conduit externe d'entrée sortie 58 par l'intermédiaire d'une vanne de verrouillage d'accumulateur 145 qui peut isoler de façon étanche ledit accumulateur 71, 118 dudit conduit interne 57 et/ou dudit conduit externe 58, ladite vanne de verrouillage 145 étant suffisamment étanche lorsqu'elle est fermée pour qu'une huile de moteur-pompe 114 que contient ledit accumulateur haute-pression 71 et/ou ledit accumulateur basse pression 118 ne puisse pas sortir dudit accumulateur 71, 118 même si le moteur pompe hydraulique 1 suivant l'invention reste inutilisé durant de longues périodes de temps. Selon un exemple de réalisation non limitatif de la vanne de verrouillage d'accumulateur 145, celle-ci peut être constituée d'une bille reposant sur un siège dont elle peut être éloignée par un toucheau mû par un moteur électrique, pneumatique ou hydraulique.

On note sur la figure 22 que l'accumulateur basse-pression 118 est alimenté avec une huile de moteur pompe 114 par au moins une pompe basse-pression 119 entraînée par un moteur de pompe basse-pression 120, le conduit d'admission de ladite pompe 119 étant relié à un réservoir d'huile de moteur-pompe 121 tandis que son conduit de refoulement est relié avec ledit accumulateur 118, ladite pompe 119 pouvant être à engrenage extérieur, à engrenage intérieur, à palettes, à pistons axiaux ou radiaux, à cylindrée variable ou non et de façon générale, de tout type connu de l'homme de l'art, tandis que le moteur de pompe basse-pression 120 peut être électrique, thermique ou hydraulique et être relié à la pompe basse-pression 119 par tout moyen de transmission également connu de l'homme de l'art comme un arbre, un joint de cardan ou un joint homocinétique, une courroie, une chaîne ou un engrenage quel qu'en soit le type et que ledit moyen coopère ou non avec un réducteur ou un variateur.

On note que selon un mode particulier de réalisation du moteur pompe hydraulique 1 suivant l'invention représenté en figure 23, l'accumulateur basse pression 118 peut être muni d'un capteur de pression d'accumulateur 69 qui retourne la pression régnant dans ledit accumulateur 118 à un calculateur de gestion de moteur pompe 70 de sorte que ce dernier pilote la pompe basse pression 119 pour qu'elle maintienne la pression régnant dans ledit accumulateur 118 en permanence au dessus d'une certaine valeur. En outre, comme illustré en figure 23, le conduit de refoulement de la pompe basse-pression 120 peut comporter un clapet anti retour de pompe basse-pression 141 qui permet à l'huile de moteur pompe 114 d'aller de ladite pompe 120 à l'accumulateur basse pression 118 mais non l'inverse, tandis que le conduit d'admission de ladite pompe 119 peut comporter un filtre d'admission de pompe basse pression 142. Selon un mode particulier de réalisation du moteur pompe hydraulique 1 suivant l'invention, le réservoir d'huile de moteur-pompe 121 peut être aménagé dans le bâti de moteur-pompe 2.

Selon un mode particulier de réalisation du moteur pompe hydraulique 1 suivant l'invention représenté en figure 23, le conduit interne d'entrée-sortie 57 peut être mis en relation par une vanne d'échangeur dissipateur de conduit interne 131 avec au moins un conduit interne d'échangeur-dissipateur 135 que comporte un échangeur dissipateur à pertes de charge 126, ledit conduit 135 comprenant au moins une surface externe d'échange thermique de dissipateur 136 qui est en contact avec un gaz de refroidissement ou un liquide refroidissement, ladite surface externe 136 pouvant être constituée de la paroi extérieure du conduit interne 135 possiblement munie d'ailettes, de motifs ou de protubérances de refroidissement. Selon la présente invention, le conduit interne d'échangeur dissipateur 135 coopère avec, ou comporte, au moins un étranglement 166 et/ou un parcours tortueux ou labyrinthique et/ou un clapet limiteur de pression qui réalise une perte de charge faisant chuter la pression d'une huile de moteur-pompe 114 circulant dans ledit conduit interne 135, ladite perte de charge étant prévue pour réchauffer l'huile de moteur pompe 114 qui est simultanément refroidie par son contact avec ledit conduit interne 135 qui, du fait de la surface externe d'échange thermique de dissipateur 136, transfère la chaleur de ladite huile 114 au gaz de refroidissement ou au liquide refroidissement.

Selon un mode particulier de réalisation du moteur pompe hydraulique 1 suivant l'invention, l'échangeur dissipateur à pertes de charge 126 peut servir à freiner le moteur de propulsion 123 du véhicule automobile 110 en démarrage à froid pour accélérer la montée en température dudit moteur 123 lorsque ce dernier est un moteur à combustion interne alternatif, la surface externe d'échange thermique de dissipateur 136 étant en ce cas mise en contact avec le liquide de refroidissement et/ou l'huile de lubrification dudit moteur 123. En outre, l'échangeur dissipateur à pertes de charge 126 peut être utilisé pour freiner le véhicule automobile 110 lorsque celui-ci descend une pente, ledit échangeur dissipateur constituant alors un ralentisseur hydraulique. L'échangeur dissipateur à pertes de charge 126 peut aussi être utilisé en phase de freinage du véhicule automobile 110 pour en soulager les freins à disque 172 ou à tambour de sorte à limiter la montée en température et l'usure desdits freins. Dans ce dernier cas, la surface externe d'échange thermique de dissipateur 136 peut être mise en contact avec un air atmosphérique ambiant pour refroidir l'huile de moteur pompe 114 circulant dans le conduit interne d'échangeur dissipateur 135, le refroidissement produit par ledit air se substituant ou s'ajoutant à celui produit par le liquide de refroidissement et/ou l'huile de lubrification du moteur de propulsion 123. On note que l'entrée ou la sortie de l'échangeur dissipateur à pertes de charge 126 peut comporter au moins un clapet anti-retour de dissipateur 169 qui force l'huile de moteur-pompe 114 provenant - selon le cas - du conduit interne d'entrée-sortie 57 ou du conduit externe d'entrée sortie 58, à ne circuler que dans un seul sens.

Selon un mode particulier de réalisation du moteur pompe hydraulique 1 suivant l'invention représenté en figure 23, le conduit externe d'entrée-sortie 58 peut être mis en relation par une vanne d'échangeur dissipateur de conduit externe 132 avec au moins un conduit interne d'échangeur-dissipateur 135 que comporte un échangeur dissipateur à pertes de charge 126, ledit conduit 135 comprenant au moins une surface externe d'échange thermique de dissipateur 136 qui est en contact avec un gaz de refroidissement ou un liquide refroidissement, la configuration, le fonctionnement et les résultats attendus de l'échangeur dissipateur à pertes de charge 126 étant identiques à ceux prévus lorsque le conduit interne d'entrée-sortie 57 est mis en relation avec ledit échangeur dissipateur 126, tandis que lesdites vannes d'échangeur dissipateur 131, 132 peuvent être à bille, à tiroir, à boisseau, à soupape, à pointeau, à clapet, à tube similairement à la demande de brevet appartenant au demandeur publiée sous le n° FR 2 969 705, ou à tout moyen d'obturation manoeuvré par tout actionneur électrique, électromagnétique, pneumatique, mécanique ou hydraulique.

On note en figure 23 que le conduit interne d'entrée-sortie 57 peut être mis en relation avec un moteur hydraulique d'accessoire 127 par une vanne de moteur d'accessoire de conduit interne 133.

A titre de variante non représentée, le conduit externe d'entrée-sortie 58 peut être mis en relation avec un moteur hydraulique d'accessoire 127 par une vanne de moteur d'accessoire de conduit externe, cette dernière et la vanne de moteur d'accessoire de conduit interne 133 pouvant être à bille, à tiroir, à boisseau, à soupape, à pointeau, à clapet, à tube similairement à la demande de brevet appartenant au demandeur publiée sous le n° FR 2 969 705, ou à tout moyen d'obturation manoeuvré par tout actionneur électrique, électromagnétique, pneumatique, mécanique ou hydraulique, tandis que ledit moteur hydraulique 127 peut être à engrenage intérieur, à engrenage extérieur, à palettes, à pistons axiaux ou radiaux, à cylindrée variable ou non et de façon générale de tout type connu de l'homme de l'art, et peut entraîner un alternateur électrique 163, un dispositif d'assistance de direction, un compresseur de climatisation 164, un arbre de turbocompresseur notamment pour réduire le temps de réponse de ce dernier, ou tout autre accessoire 165 équipant un véhicule automobile 110 ou faisant partie d'un système comprenant ou non un dispositif de transmission hydraulique 63. On note que l'entrée ou la sortie du moteur hydraulique d'accessoire 127 peut comporter un clapet anti-retour de moteur hydraulique d'accessoire 111 qui permet à l'huile de moteur-pompe 114 provenant du conduit interne d'entrée-sortie 57 ou du conduit externe d'entrée-sortie 58 selon le cas, de circuler dans le sens requis pour entraîner ledit moteur 127 mais pas dans le sens inverse. On remarque que, selon un mode particulier de réalisation du moteur-pompe hydraulique 1 suivant l'invention, le moteur hydraulique d'accessoire 127 peut être mécaniquement relié à tout accessoire 165 par l'intermédiaire d'une roue libre connue de l'homme de l'art, de sorte que ledit accessoire 165 peut aussi être entraîné en rotation par un autre système d'entraînement comme une courroie ou une chaîne sans que ledit autre système ne puisse entraîner en rotation le moteur hydraulique d'accessoire 127 si ce dernier n'est pas alimenté en huile de moteur-pompe 114. Ce mode particulier de réalisation peut aussi prévoir que ledit autre système d'entraînement est également relié audit accessoire 165 par une roue libre de sorte que le moteur hydraulique d'accessoire 127 ne puisse pas entraîner en rotation ledit système si ce dernier n'est pas lui-même mis en rotation par une autre source motrice.

En tout état de cause, les roues-libres que comportent en ce cas le moteur hydraulique d'accessoire 127 et ledit autre système d'entraînement ne s'opposent pas à ce que ces deux derniers coopèrent simultanément à entraîner en rotation ledit accessoire 165.

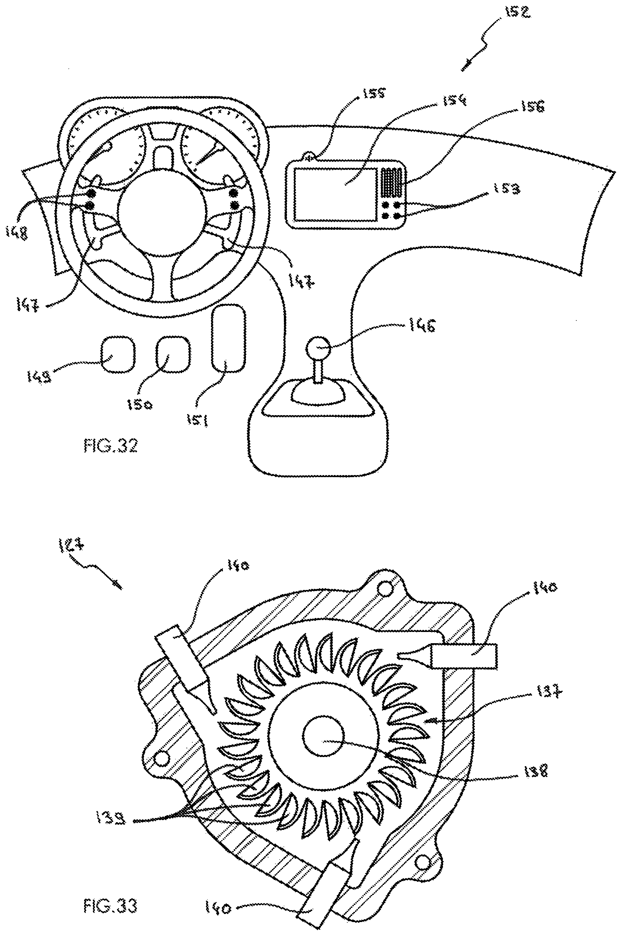

Comme montré en figure 33, le moteur hydraulique d'accessoire 127 peut être constitué d'au moins une turbine hydraulique 137 montée sur un arbre de turbine hydraulique 138 qui comporte au moins une aube de turbine hydraulique 139 sur laquelle au moins un injecteur de turbine hydraulique 140 peut projeter axialement et/ou radialement un jet d'une huile de moteur-pompe 114 de sorte à ce que ladite aube 139 entraîne en rotation ledit arbre de turbine 138 ce dernier étant mécaniquement relié, directement ou indirectement, à un ou plusieurs accessoire(s) 165 par une transmission fixe ou variable et/ou par un réducteur.

Suivant l'invention, ces deux derniers composants peuvent être à engrenages, à chaîne, à courroie, à galets ou de tout autre type connu de l'homme de l'art et le ou lesdits accessoire(s) peuvent équiper un véhicule automobile 110 ou faire partie d'un système comprenant ou non un dispositif de transmission hydraulique 63.

On remarque sur les figures 28 à 31 que le moteur-pompe hydraulique 1 suivant l'invention peut comporter un calculateur de gestion de moteur pompe 70 qui commande le servomoteur de variation de cylindrée 68 pour piloter la cylindrée du moteur-pompe hydraulique 1 à cylindrée fixe ou variable y compris celui constitutif du dispositif de transmission hydraulique 63 que ce dernier soit intégré au véhicule automobile 110 ou non, ledit calculateur 70 pouvant également commander la vanne d'accumulateur haute-pression de conduit interne 112, et/ou la vanne d'accumulateur haute pression de conduit externe 128, et/ou la vanne d'accumulateur basse pression de conduit interne 129, et/ou la vanne d'accumulateur basse pression de conduit externe 130, et/ou la vanne de verrouillage d'accumulateur 145 et/ou le moteur de pompe basse-pression 120 et/ou la vanne d'échangeur dissipateur de conduit interne 131 et/ou la vanne d'échangeur-dissipateur de conduit externe 132 et/ou la vanne de moteur d'accessoire de conduit interne 133 et/ou la vanne de moteur d'accessoire de conduit externe.

Selon un exemple non-limitatif de réalisation du moteur-pompe hydraulique 1 suivant l'invention, le calculateur de gestion de moteur-pompe 70 opère un logiciel informatique spécifique et est connecté à tout ou partie de capteur(s) et actionneur(s) que comporte le véhicule automobile 110 et son moteur de propulsion 123, de sorte que le dispositif de transmission hydraulique 63 qui équipe ledit véhicule 110 est au service des objectifs énergétiques, de sécurité, de performance et de confort fixés pour le véhicule 110.

Selon un autre exemple non-limitatif de réalisation du moteur-pompe hydraulique 1 suivant l'invention illustré en figure 32, le calculateur de gestion de moteur pompe 70 peut être relié par des moyens de transmission de l'information filaires, lumineux ou électromagnétiques à au moins un levier de passage de vitesses 146 et/ou au moins une palette de passage de vitesses 147 et/ou au moins un bouton de passage de vitesses 148 et/ou une pédale d'embrayage 149 et/ou une pédale de frein 150 et/ou une pédale d'accélérateur 151 que comporte un poste de conduite 152 que comprend le véhicule automobile 110, les différents composants que sont ledit levier 146, ladite palette 147, ledit bouton 148, la pédale d'embrayage 149 et la pédale de frein 150 pouvant - selon un mode particulier de réalisation du moteur-pompe hydraulique 1 suivant la présente invention - être amovibles, substituables ou escamotables pour laisser au conducteur du véhicule automobile 110 la possibilité de configurer comme il le souhaite le ledit véhicule 110 en fonction de l'usage qu'il compte faire du dispositif de transmission hydraulique 63. En ce cas, des capteurs renseignent le calculateur de gestion de moteur pompe 70 sur la présence, l'absence ou l'état des composants amovibles, substituables ou escamotables 146, 147, 148, 149, 150 de sorte que ledit calculateur 70 puisse autoriser ou interdire certains modes de fonctionnement du dispositif de transmission hydraulique 63.

Par exemple, pour que ledit calculateur 70 puisse utiliser le dispositif de transmission hydraulique 63 pour reproduire le comportement d'une boîte de vitesses à commande manuelle, il lui est nécessaire que le conducteur du véhicule automobile 110 ait préalablement installé un levier de passage de vitesses 146 dont le débattement est contraint selon une grille en « H », ait installé ou déplié la pédale d'embrayage 149 et ait remplacé la pédale de frein 150 large utilisée pour émuler une transmission automatique par une autre pédale de frein 150 plus étroite.

On remarque que diverses fonctions supplémentaires peuvent être prévues pour piloter le dispositif de transmission hydraulique 63 comme un levier de parking proportionnel dont l'inclinaison en avant ou en arrière imprime au véhicule automobile 110 une basse vitesse d'avancement ou de recul, proportionnellement à ladite inclinaison. La même stratégie peut être mise en place au moyen d'une molette, l'inclinaison dudit levier étant en ce cas remplacée par la rotation dans un sens ou dans l'autre de ladite molette. Ainsi, ledit levier ou ladite molette pilotant le dispositif de transmission hydraulique 63 lors des manoeuvres de parking peut avantageusement éliminer le patinage des embrayages ou des convertisseurs de couple hydro cinétiques et l'emballement associé du moteur de propulsion 123 que provoquent les boîtes de vitesses selon l'art antérieur.

Selon un autre exemple non-limitatif de réalisation du moteur-pompe hydraulique 1 suivant l'invention représenté en figure 32, le calculateur de gestion de moteur pompe 70 peut aussi être relié par des moyens de transmission de l'information filaires, lumineux ou électromagnétiques non représentés à au moins un bouton ou molette de configuration de transmission 153 et/ou un écran de configuration de transmission 154 et/ou un microphone de configuration de transmission 155 et/ou un haut-parleur de configuration de transmission 156 que comporte un poste de conduite 152 montré en figure 32 que comprend le véhicule automobile 110, ledit bouton ou molette 153, ledit écran 154, ledit microphone 155 et ledit haut-parleur 156 constituant une interface homme-machine entre le conducteur du véhicule automobile 110 et le calculateur de gestion de moteur pompe 70 ladite interface permettant notamment audit conducteur de configurer le dispositif de transmission hydraulique 63 du véhicule automobile 110.

Selon un mode particulier de réalisation du moteur pompe hydraulique 1 suivant l'invention, l'écran de configuration de transmission 154 est tactile avec une interface logicielle qui permet au conducteur du véhicule automobile 110 de choisir - lorsque le dispositif de transmission hydraulique 63 est utilisé pour reproduire le comportement d'une boîte de vitesses automatique à convertisseur de couple ou d'une boîte de vitesses à variation continue - entre un mode « économique », un mode « confort » ou un mode « sport ». Dans le cas où seule une boîte de vitesses automatique à convertisseur de couple est émulée par le dispositif de transmission hydraulique 63, le nombre et l'étagement des rapports de transmission de ladite boîte sont programmables par ledit conducteur via ledit écran 154.

Ladite interface homme-machine peut également permettre audit conducteur de choisir entre différents étagements de rapports de transmission lorsque le dispositif de transmission hydraulique 63 reproduit le fonctionnement d'une boîte de vitesses à commande manuelle. En outre, à titre d'exemple non limitatif, l'intensité du frein moteur que reproduit l'échangeur dissipateur à pertes de charge 126 que peut comporter le dispositif de transmission hydraulique 63, la progressivité de l'embrayage que reproduit ledit dispositif 63 lorsque ce dernier émule le fonctionnement d'une boîte de vitesses à commande manuelle, ou la progressivité du convertisseur de couple lorsque ledit dispositif 63 reproduit le comportement d'une boîte de vitesses automatique à convertisseur de couple, peuvent être configurés par le conducteur du véhicule automobile 110. On note que, selon un mode particulier de réalisation du dispositif de transmission hydraulique 63, le frein moteur peut possiblement être programmé par le conducteur du véhicule automobile 110 pour s'adapter automatiquement à la raideur des descentes rencontrées lors de tout parcours. En ce cas, le calculateur de gestion de moteur pompe 70 est par exemple couplé à un inclinomètre et/ou un accéléromètre.

### FONCTIONNEMENT DE L'INVENTION:

Pour illustrer le fonctionnement du moteur-pompe hydraulique (1) à cylindrée fixe ou variable selon l'invention, on a choisi ici d'appliquer ledit moteur-pompe (1) au dispositif de transmission hydraulique (63) reliant le moteur de propulsion (123) du véhicule automobile (110) aux roues motrices (124) dudit véhicule (110). Cet exemple de réalisation du moteur-pompe hydraulique (1) est non-limitatif et ne remet pas en cause la diversité et l'intérêt de ses autres applications dans de nombreux domaines industriels et/ou domestiques. Selon ledit exemple, le deuxième moteur pompe hydraulique (125) à cylindrée variable qui est relié aux roues motrices (124) est identique au moteur-pompe hydraulique (1) à cylindrée variable qui est relié au moteur de propulsion (123). Dans ce contexte, le fonctionnement du moteur-pompe hydraulique (1) à cylindrée fixe ou variable est le suivant :
Le moteur de propulsion (123) qui est - selon cet exemple - thermique à combustion interne alternatif et à allumage commandé, entraîne en rotation le rotor central de moteur-pompe (3) au moyen de la prise de force de rotor central (4) à laquelle est relié son vilebrequin (168). Ce faisant, ledit moteur (123) entraîne en rotation le rotor périphérique de moteur-pompe (29) dont la couronne de synchronisation angulaire de rotor périphérique (42) est rendue solidaire en rotation de la couronne de synchronisation angulaire de rotor central (11) par le pignon de synchronisation angulaire (12).

Comme on le voit en figure 6, le rotor périphérique de moteur-pompe (29) peut être maintenu excentré par rapport au rotor central de moteur-pompe (3) par son servomoteur de variation de cylindrée (68). En ce cas, on comprend que le piston hydraulique (13) effectue dans le cylindre hydraulique (14) un mouvement de translation de va-et-vient. Le distributeur d'entrée-sortie (43) étant orienté dans le bâti de moteur-pompe (2) comme illustré en figure 11, on comprend qu'en relation avec la figure 6, lorsque le piston hydraulique (13) s'éloigne du rotor central de moteur-pompe (3), le cylindre hydraulique (14) est mis en relation par ledit distributeur (43) avec le conduit interne d'entrée-sortie (57), tandis que quand ledit piston (13) se rapproche dudit rotor central (3), ledit cylindre (14) est mis en relation par ledit distributeur (43) avec le conduit externe d'entrée-sortie (58). Ainsi, le piston hydraulique (13) et son cylindre hydraulique (14) constituent communément une pompe qui aspire l'huile de moteur-pompe (114) dans le conduit interne d'entrée-sortie (57) puis la refoule dans le conduit externe d'entrée-sortie (58).

Selon un mode particulier de réalisation montré en figures 3 à 7, 18 et 19, le rotor central de moteur-pompe (3) peut avantageusement comporter trois rangées de pistons hydrauliques (13) comportant chacune quatre pistons hydrauliques (13) uniformément répartis sur la périphérie dudit rotor central (3) et angulairement décalés de quatre-vingt-dix degrés. La deuxième rangée de pistons hydrauliques (13) est angulairement décalée de trente degrés par rapport à la première tandis que dans la même direction, la troisième rangée est angulairement décalée de trente degrés par rapport à la deuxième. Ainsi, les douze pistons hydrauliques (13) que comporte le rotor central de moteur-pompe (3) sont radialement et uniformément répartis autour dudit rotor (3) suivant un angle de distribution de trente degrés. Cette configuration à douze pistons hydrauliques (13) garantit un fonctionnement peu pulsé du moteur-pompe hydraulique (1).

On remarque que la configuration mécanique particulière du moteur-pompe hydraulique (1) à cylindrée fixe ou variable selon l'invention limite au maximum les pertes par frottement et les fuites d'huile de moteur-pompe (114) que peut engendrer durant son fonctionnement ledit moteur-pompe (1). De ces deux premières caractéristiques - qui comptent parmi les principaux avantages du moteur-pompe hydraulique (1) selon l'invention - résulte notamment la possibilité pour ledit moteur-pompe (1) de fonctionner sous de très fortes pressions de crête, par exemple de l'ordre de deux mille bar.

Comme on peut le déduire de la figure 6, lorsque le piston hydraulique (13) est soumis à la pression de l'huile de moteur-pompe (114) contenue dans le cylindre hydraulique (14), il exerce un effort sur la jambe de force (82) qui est guidée dans le guide de poussoir (19) et dont la traverse de force (83) porte la ligne d'action de poussoir sur bras tangentiel (21). En conséquence, ladite ligne d'action (21) exerce un effort d'intensité similaire sur la face d'appui de bras tangentiel sur poussoir (23), ledit effort étant répercuté par le bras tangentiel (22) au rouleau antifriction de bras tangentiel (28) via la piste de roulement de bras tangentiel (26) que comporte ledit bras (22). Enfin, ledit rouleau (28) répercute ledit effort sur la piste de roulement de rotor périphérique (33) de sorte que la pompe hydraulique que constituent communément le piston hydraulique (13) et le cylindre hydraulique (14) est actionnée par l'effort que produit ledit piston (13) sur le rotor périphérique de moteur-pompe (29) qui réagit avec un effort d'intensité comparable que produit simultanément ledit cylindre (14) et l'huile de moteur-pompe (114) qu'il contient, sur le rotor central de moteur-pompe (3).

Comme on le voit sur les figures 3 à 7, la configuration mécanique particulière du moteur-pompe hydraulique (1) selon l'invention protège le piston hydraulique (13) de tout effort radial auquel sont généralement soumis les pistons des pompes hydrauliques à pistons selon l'art antérieur. Avantageusement, le moteur-pompe hydraulique (1) selon l'invention prévoit que ledit effort radial est repris pour une petite partie au niveau du contact entre la traverse de force (83) et le guide de poussoir (19) et pour la majeure partie par le bras tangentiel (22) au niveau de son axe de bras tangentiel (24) et dans le sens longitudinal dudit bras (22). Par ailleurs, l'entraînement simultané en rotation et à la même vitesse du rotor central de moteur-pompe (3) et du rotor périphérique de moteur-pompe (29) tel que prévu par le moteur-pompe hydraulique (1) selon l'invention limite efficacement les variations de distance survenant entre le point de contact du rouleau antifriction de bras tangentiel (28) sur la piste de roulement de rotor périphérique (33) que comporte la surface interne du rotor périphérique de moteur-pompe (29) d'une part, et le point de contact dudit rouleau antifriction (28) sur la piste de roulement de bras tangentiel (26) que comporte le bras tangentiel (22) d'autre part. En outre, lesdites variations de distance restantes se traduisent par un contact non pas glissant mais roulant, le rouleau antifriction de bras tangentiel (28) roulant d'une part, sur la piste de roulement de bras tangentiel (26) et d'autre part, sur la piste de roulement de rotor périphérique (33).

On voit également sur la figure 6 que le rouleau antifriction de bras tangentiel (28) est limité dans son déplacement d'une part par rapport à la piste de roulement de bras tangentiel (26) et d'autre part par rapport à la piste de roulement de rotor périphérique (33) par la crémaillère de rouleau de bras tangentiel (27) et par la couronne de rouleau de rotor périphérique (34) que comportent respectivement lesdites pistes (26, 33), le pignon de rouleau (87) que comprend ledit rouleau (28) coopérant simultanément avec ladite crémaillère (27) et ladite couronne (34) de sorte que ledit rouleau (28) conserve une position de fonctionnement au plus proche possible de celle permettant de limiter au maximum les pertes par frottement du moteur-pompe hydraulique (1) selon l'invention.

On remarque sur les figures 5 et 6 que le rouleau antifriction de bras tangentiel (28) est toujours maintenu simultanément plaqué sur la piste de roulement de bras tangentiel (26) et sur la piste de roulement de rotor périphérique (33) par le ressort de rappel de bras tangentiel (25) de sorte que ledit rouleau (28) ne peut se désengrener ni de la crémaillère de rouleau de bras tangentiel (27), ni de la couronne de rouleau de rotor périphérique (34), même en l'absence de toute pression régnant dans le cylindre hydraulique (14).

On remarque qu'afin que le rouleau antifriction de bras tangentiel (28) reste toujours correctement positionné par rapport à la crémaillère de rouleau de bras tangentiel (27) lorsque le servomoteur de variation de cylindrée (68) excentre le rotor périphérique de moteur-pompe (29) par rapport au rotor central de moteur-pompe (3), des moyens de re-phasage (197) peuvent être intercalés entre la couronne de synchronisation angulaire de rotor périphérique (42) et la couronne de synchronisation angulaire de rotor central (11).

Comme le montrent les figures 20 et 21, lesdits moyens (197) peuvent être constitués d'un engrenage intermédiaire de re-phasage (198).

On déduit aisément desdites figures que - le rotor central de moteur-pompe (3) ne tournant pas - lorsque le stator de rotor périphérique (65) est mis en rotation par rapport au bâti de moteur-pompe (2) par le pignon d'attaque de couronne de variation de cylindrée (108), les roues dentées de re-phasage (199) de différents diamètres que comporte l'engrenage intermédiaire de re-phasage (198) tournent dans le même sens que le stator de rotor périphérique (65) mais à une vitesse supérieure audit stator (65). Il résulte de ceci que le carter cylindrique de rotor périphérique (32) tourne en sens inverse au sens de rotation du stator de rotor périphérique (65) car la petite roue dentée de re-phasage (199) s'engrène avec le pignon de synchronisation angulaire (12) tandis que la grande roue dentée de re-phasage (199) s'engrène avec la couronne de synchronisation angulaire de rotor périphérique (42), les deux dites roues (199) étant solidaires en rotation l'une de l'autre et étant portées par un même axe de re-phasage (200) solidaire du stator de rotor périphérique (65).

On note que selon cet exemple de réalisation des moyens de re-phasage (197) selon l'invention, le rapport de la transmission en rotation établi entre le stator de rotor périphérique (65) et le carter cylindrique de rotor périphérique (32) est prévu pour que le rouleau antifriction de bras tangentiel (28) reste toujours dans une position sur la piste de roulement de bras tangentiel (26) telle, que la fonction d'antifriction des moyens antifriction (196) dont il est l'une des composantes est convenablement assurée.

Comme on peut le déduire des figures 10 et 11, le distributeur d'entrée-sortie (43) contribue fortement au bon fonctionnement du moteur-pompe hydraulique (1) selon l'invention en ce que ce dernier voit ses frottements et ses fuites d'huile de moteur-pompe (114) radicalement limités par ledit distributeur (43). Selon l'exemple pris ici pour illustrer le fonctionnement du moteur-pompe hydraulique (1) selon l'invention, ledit distributeur (43) est - conformément à celui illustré en figures 10 et 11 - constitué d'un stator cylindrique (91) muni d'un collecteur angulaire entrée-sortie de conduit interne (44) aménagé sur un peu moins de cent quatre-vingt degrés et placé axialement entre deux gorges d'équilibrage d'effort radial de conduit externe (90). En outre, ledit stator cylindrique (91) est également muni d'un collecteur angulaire entrée-sortie de conduit externe (89) aménagé de façon diamétralement opposée au collecteur angulaire entrée-sortie de conduit interne (44) - également sur un peu moins de cent quatre-vingt degrés - et placé axialement entre deux gorges d'équilibrage d'effort radial de conduit interne (45).

On remarque que la surface externe du stator cylindrique (91) qui est soumise à la pression de l'huile de moteur-pompe (114) que contient le collecteur angulaire entrée-sortie de conduit interne (44) est égale à la surface totale soumise à ladite pression des deux gorges d'équilibrage d'effort radial de conduit interne (45), de sorte que ladite pression ne génère aucun effort radial sur le stator cylindrique (91). Ce principe s'applique de façon similaire au collecteur angulaire entrée-sortie de conduit externe (89).

On note que les douze orifices d'entrée-sortie de rotor central (16) sont chacun reliés à l'un des douze cylindres hydrauliques (14) que comporte le rotor central de moteur-pompe (3), sont angulairement distribués tous les trente degrés dans le cylindre de stator (92) dudit rotor central (3) à l'intérieur duquel ils débouchent, et sont axialement alignés de sorte à toujours rester en regard soit du collecteur angulaire entrée-sortie de conduit interne (44) soit du collecteur angulaire entrée-sortie de conduit externe (89) lorsque le rotor central de moteur-pompe (3) est en rotation, à l'exception de leur bref passage face à une zone de pression intermédiaire (158) que comporte le stator cylindrique (91).

Selon cet exemple de réalisation du moteur-pompe hydraulique (1) selon l'invention, le stator cylindrique (91) réalise avec le cylindre de stator (92) une étanchéité grâce à la précision d'usinage dudit stator (91) et dudit cylindre (92), mais aussi, grâce aux segments de gorge de distributeur (46) que comportent lesdits collecteurs (44, 89) et lesdites gorges d'équilibrage (90, 45) et que comportent également les deux gorges d'étanchéité axiale (93) qui sont respectivement aménagées sur le stator cylindrique (91) à proximité de chacune de ses extrémités axiales.

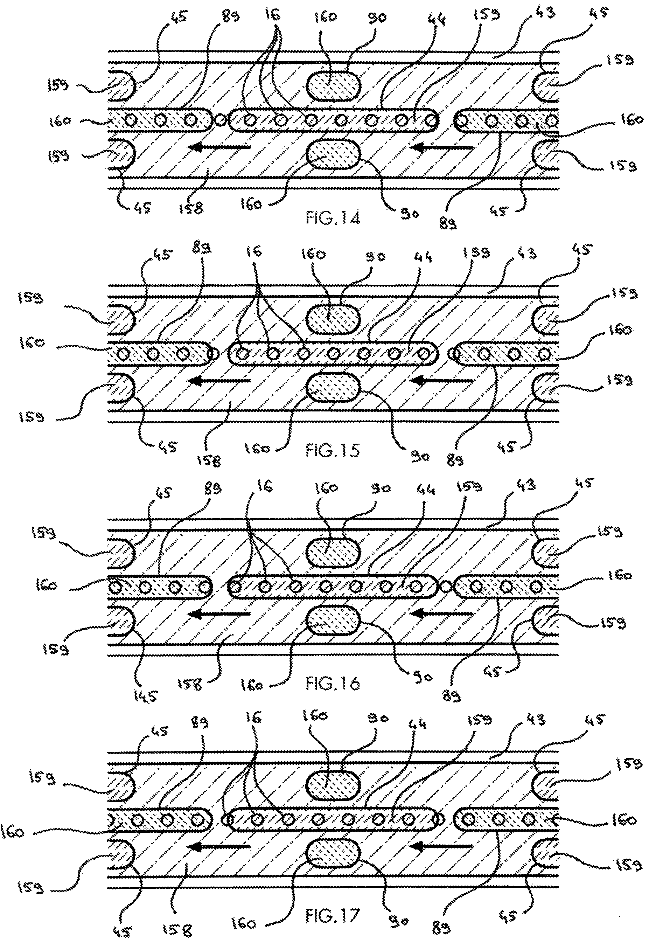

Les figures 14 à 17 montrent de façon schématique la surface développée du stator cylindrique (91) d'un moteur-pompe hydraulique (1) selon l'invention à quinze cylindres hydrauliques (14) angulairement décalés de vingt-quatre degrés. On remarque que les segments de gorge de distributeur (46) définissent trois zones de pression en surface dudit stator (91). La première est une zone haute-pression (159) constituée du collecteur angulaire entrée-sortie de conduit interne (44) et des gorges d'équilibrage d'effort radial de conduit interne (45), tandis que la deuxième est une zone basse-pression (160) constituée du collecteur angulaire entrée-sortie de conduit externe (89) et des gorges d'équilibrage d'effort radial de conduit externe (90), ou inversement, selon que le rotor central de moteur-pompe (3) est menant ou mené, et selon le sens de l'excentration du rotor périphérique de moteur-pompe (29) par rapport audit rotor central (3). La troisième zone est la zone de pression intermédiaire (158). Les figures 14 à 17 étant organisées en séquence, elles montrent que les secteurs angulaires sur lesquels sont respectivement aménagés le collecteur angulaire entrée-sortie de conduit interne (44) et le collecteur angulaire entrée-sortie de conduit externe (89) sont calculés pour que deux orifices d'entrée-sortie de rotor central (16) ne puissent jamais être l'un à cheval entre la zone haute-pression (159) et la zone de pression intermédiaire (158) tandis que l'autre est à cheval entre la zone basse-pression (160) et la zone de pression intermédiaire (158). Cependant, ladite séquence montre aussi que deux orifices d'entrée-sortie de rotor central (16) peuvent se trouver simultanément à cheval entre la zone haute-pression (159) et la zone de pression intermédiaire (158), ou entre la zone basse-pression (160) et la zone de pression intermédiaire (158). Cette configuration autorise le bon fonctionnement du moteur-pompe hydraulique (1) selon l'invention tout en-en limitant les fuites d'huile de moteur-pompe (114) au niveau du distributeur d'entrée-sortie (43) car ladite huile (114) comprise dans la zone haute-pression (159) est toujours séparée de la zone basse-pression (160) et de l'extérieur du stator cylindrique (91) par au moins un segment de gorge de distributeur (46).

Selon l'exemple pris ici pour illustrer le fonctionnement du moteur-pompe hydraulique (1) selon l'invention, le segment de gorge de distributeur (46) est avantageusement constitué - comme montré en figures 12 et 13 - de deux demi-segments (95) réalisés dans un même lopin de matière. Ces demi-segments (95) présentent chacun d'une part, un flanc de segment (94) maintenu en contact axial et/ou tangentiel avec le stator cylindrique (91) par un ressort écarteur de segment (48) et d'autre part, une ligne de contact de segment (49) qui est radialement en contact avec le rotor central de moteur-pompe (3) pour former une étanchéité. Selon cette configuration, ladite ligne (49) est plaquée sur ledit rotor (3) à la fois par la poussée exercée par l'huile de moteur-pompe (114) sous pression que contient le stator cylindrique (91) et par un ressort de fond de gorge de segment (47). On voit sur la figure 12 que les demi-segments (95), du fait de leur épaulement de reprise d'effort de segment (50) qui coopère avec l'épaulement (162) aménagé dans le stator cylindrique (91), sont prévus pour que la ligne de contact de segment (49) qu'ils présentent soit axialement quasiment alignée avec la zone de contact entre le flanc de segment (94) et le stator cylindrique (91), de sorte que la pression de l'huile de moteur-pompe (114) ne dispose que d'une faible surface projetée (161) pour exercer sa poussée sur lesdits demi-segments (95).

La configuration particulière qui vient d'être décrite et illustrée en figures 12 et 13 des segments de gorge de distributeur (46) selon l'invention garantit une bonne étanchéité entre le stator cylindrique (91) et le cylindre de stator (92), sans générer de pertes par frottement et d'usure excessives, même lorsque le moteur-pompe hydraulique (1) selon l'invention fonctionne sous des pressions élevées et/ou avec une huile de moteur-pompe (114) à faible viscosité. Ladite configuration participe ainsi efficacement à conférer audit moteur-pompe (1) un rendement et une durabilité élevés quels que soient la cylindrée, la pression ou le régime de rotation qui caractérisent son fonctionnement.

Les figures 3 et 4 montrent une réalisation du moteur-pompe hydraulique (1) où ce dernier est équipé de deux paliers de rotor central (5) et de deux paliers de rotor périphérique (36). Outre le diamètre important desdits paliers (5, 36), ceux-ci sont potentiellement soumis à de fortes charges car les pistons hydrauliques (13) peuvent exercer un effort radial de forte intensité sur le rotor périphérique de moteur-pompe (29), ledit effort étant simultanément exercé - par réaction - sur le rotor central de moteur-pompe (3). On en déduit que les paliers hydrodynamiques et les roulements à billes ou à rouleau conventionnels peuvent difficilement être retenus pour réaliser lesdits paliers (5, 36), sauf à soulever de sérieux problèmes de rendement et/ou de tenue mécanique. C'est pourquoi les paliers de rotor central (5) et les paliers de rotor périphérique (36) sont conçus - selon l'exemple de réalisation non limitatif exposé en figures 3 et 4 - pour générer des pertes par frottement limitées et pour supporter durablement, soit de fortes charges à grandes vitesses périphériques, soit de fortes charges à vitesses périphériques tellement faibles qu'un palier à coussinets selon l'art antérieur ne pourrait pas maintenir le régime de lubrification hydrodynamique indispensable à son fonctionnement. La description qui suit présente plus en détail le fonctionnement de l'un des deux paliers de rotor périphérique (36), l'homologue de ce dernier ou les paliers de rotor central (5) fonctionnant de manière identique.

Comme l'illustre particulièrement la figure 9, le palier de rotor périphérique (36) est constitué de plusieurs rouleaux de palier de rotor périphérique (37) qui roulent simultanément sur la piste intérieure de palier de rotor périphérique (38) et sur la piste extérieure de palier de rotor périphérique (39). Approximativement la moitié de ces dits rouleaux (37) se répartissent de manière non-équitable la charge radiale à laquelle est soumis le palier de rotor périphérique (36). On remarque que ces dits rouleaux (37) restent constamment à égale distance les uns des autres grâce aux pignons de rouleau (87) qu'ils comportent à chacune de leurs extrémités, lesdits pignons (87) coopérant d'une part, avec les couronnes intérieures de palier de rotor périphérique (40) et d'autre part, avec les couronnes extérieures de palier de rotor périphérique (41). On remarque sur la figure 9 que le maintien en position axiale du rotor périphérique de moteur-pompe (29) et des rouleaux de palier de rotor périphérique (37) par rapport au bâti de moteur-pompe (2) est assuré par le rail de guidage (85) que comportent la piste intérieure de palier de rotor périphérique (38) et la piste extérieure de palier de rotor périphérique (39), ledit rail (85) coopérant avec la gorge de guidage (86) que comportent les rouleaux de palier de rotor périphérique (37).

Les rouleaux de palier de rotor périphérique (37) étant de fort diamètre, la pression de Hertz qu'ils exercent sur la piste intérieure de palier de rotor périphérique (38) et sur la piste extérieure de palier de rotor périphérique (39) peut rester dans les limites de tenue mécanique des matériaux usuellement utilisés par l'homme de l'art pour réaliser les paliers à roulement, tandis que leur vitesse de rotation maximale reste acceptable malgré le fort diamètre du palier de rotor périphérique (36) et la vitesse de rotation potentiellement élevée du rotor périphérique de moteur-pompe (29). En outre, en plus de garantir que les rouleaux de palier de rotor périphérique (37) restent constamment à égale distance les uns des autres, le système d'engrenage que constituent les pignons de rouleau (87), les couronnes intérieures de palier de rotor périphérique (40) et les couronnes extérieures de palier de rotor périphérique (41), impose auxdits rouleaux (37) une trajectoire perpendiculaire à l'axe de rotation du rotor périphérique de moteur-pompe (29). Ces deux fonctions ordinairement confiées dans les paliers à roulements selon l'art antérieur à des cages à billes ou à rouleaux sont ainsi avantageusement assurées par ledit système d'engrenage, lesdites cages étant à la fois moins précises et moins durables que ledit système car elles entrent régulièrement en collision avec les billes ou les rouleaux qu'elles enserrent, et génèrent des pertes par frottement au niveau de leur contact avec lesdites billes ou lesdits rouleaux.

Le moteur de propulsion (123) entraînant en rotation le rotor central de moteur-pompe (3) au moyen de la prise de force de rotor central (4), on remarque tout l'intérêt des rotules obturatrices fixes de conduit (59) par lesquelles est relié le conduit externe d'entrée-sortie (58) avec le distributeur d'entrée-sortie (43) d'une part, et avec le bâti de moteur-pompe (2) d'autre part. En effet, comme on le voit sur les figures 10 et 11, lesdites rotules obturatrices (59) comportent une portée de rotule obturatrice (105) de forme troncosphérique qui repose sur un siège de rotule obturatrice (64) et qui réalise d'une part, une étanchéité et d'autre part, une liaison rotule. Cette dernière autorise le distributeur d'entrée-sortie (43) à suivre les éventuels désalignements ou désaxages auxquels peut être soumis le rotor central de moteur-pompe (3) par rapport au bâti de moteur-pompe (2) ce qui permet permettent notamment de conserver un jeu de fonctionnement faible entre le stator cylindrique (91) et le cylindre de stator (92), ledit jeu faible étant nécessaire pour garantir une bonne étanchéité entre ledit stator (91) et ledit cylindre (92). En effet, ce jeu pouvant être de quelques microns seulement, il ne pourrait pas être obtenu par la seule précision d'usinage de l'ensemble des pièces qui constituent le moteur-pompe hydraulique (1) à cylindrée fixe ou variable selon l'invention.

En outre, lesdites rotules obturatrices (59) reprennent l'effort de traction auquel est longitudinalement soumis le conduit externe d'entrée-sortie (58) et qui résulte de la pression de l'huile de moteur-pompe (114) que contient ledit conduit (58), tout en acceptant les légères variations de diamètre dudit conduit (58) résultant de ladite pression.

Les figures 10 et 11 montrent un conduit interne d'entrée-sortie (57) qui comporte deux demi-rotules obturatrice glissante (107) à chacune de ses extrémités. En alternative, ledit conduit interne (57) peut aussi comporter une rotule obturatrice fixe de conduit (59) coopérant avec une demi-rotule obturatrice glissante (107) coté bâti de moteur-pompe (2), et deux demi-rotule obturatrice glissante (107) coté distributeur d'entrée-sortie (43). Cette variante de réalisation permet audit conduit interne (57) d'être axialement arrimé audit bâti (2). Quelle que soit la configuration choisie, une bonne étanchéité est assurée entre le conduit interne d'entrée-sortie (57) et le conduit externe d'entrée-sortie (58) par la ou les rotule(s) obturatrice(s) fixe(s) de conduit (59) et/ou les demi-rotules obturatrices glissantes (107) à la fois au niveau du bâti de moteur-pompe (2) et au niveau du distributeur d'entrée-sortie (43), quelle que soit la différence de pression positive ou négative entre ledit conduit interne (57) et ledit conduit externe (58), et quels que soient les micro déplacements survenant entre ledit bâti (2) et ledit distributeur (43).

La prise de force de rotor central (4) tournant sous l'action du moteur de propulsion (123), il est possible d'excentrer plus ou moins le rotor périphérique de moteur-pompe (29) par rapport au rotor central de moteur-pompe (3). Pour cela, le calculateur de gestion de moteur-pompe (70) que comporte le dispositif de transmission hydraulique (63) du véhicule automobile (110) peut mettre sous tension le moteur électrique rotatif de servomoteur (30) montré en figures 1 à 6, pour que ce dernier fasse tourner dans un sens ou dans l'autre la couronne de variation de cylindrée (109) solidaire du stator de rotor périphérique (65) au moyen du pignon d'attaque de couronne de variation de cylindrée (108). On remarque que plus l'excentration du rotor périphérique de moteur-pompe (29) est importante, plus la cylindrée du moteur-pompe hydraulique (1) est importante. Si ladite excentration est nulle, la cylindrée dudit moteur-pompe (1) est nulle (figure 5). Si le sens de ladite excentration est inversé, le débit d'huile de moteur-pompe (114) passant dans le conduit interne d'entrée-sortie (57) et le conduit externe d'entrée-sortie (58) change de sens. Ces différentes possibilités couvrent l'ensemble des besoins de contrôle et de réglage du dispositif de transmission hydraulique (63).

La figure 23 présente le schéma de principe du dispositif de transmission hydraulique (63) selon une configuration particulière et non-limitative, tandis que les figures 28 à 31 en montrent divers exemples d'implantation dans le véhicule automobile (110) parmi de nombreuses autres possibles.

Sur le schéma de principe de la figure 23, on voit qu'outre le moteur-pompe hydraulique (1) à cylindrée variable relié au moteur de propulsion (123) et le deuxième moteur-pompe hydraulique (125) à cylindrée variable relié aux roues motrices (124), le dispositif de transmission hydraulique (63) comporte un accumulateur haute-pression (71) et un accumulateur basse-pression (118) pouvant alimenter en huile de moteur-pompe (114) lesdits moteur-pompes (1, 125) à cylindrée variable ou être alimentés par ces derniers en huile de moteur-pompe (114) via la vanne d'accumulateur haute-pression de conduit interne (112) ou la vanne d'accumulateur haute-pression de conduit externe (128) s'agissant de l'accumulateur haute-pression (71) et via la vanne d'accumulateur basse-pression de conduit interne (129) ou la vanne d'accumulateur basse-pression de conduit externe (130) s'agissant de l'accumulateur basse-pression (118).

Toujours sur le schéma de principe de la figure 23, on remarque la vanne de verrouillage d'accumulateur (145) qui peut isoler de façon étanche l'accumulateur haute-pression (71) si le dispositif de transmission hydraulique (63) reste inutilisé durant de longues périodes de temps. En tout état de cause, ladite vanne de verrouillage (145) reste ouverte en permanence quand le dispositif de transmission hydraulique (63) est utilisé. On déduit dudit schéma que si de l'huile de moteur-pompe (114) fuit desdits moteur-pompes (1, 125) durant leur fonctionnement - par exemple au niveau de leur distributeur d'entrée-sortie (43) ou de leurs pistons hydrauliques (13) - ladite huile (114) est récupérée par le réservoir d'huile de moteur-pompe (121) dans lequel elle s'écoule. Ces fuites d'huile de moteur-pompe (114) impliquent un réapprovisionnement par l'accumulateur basse-pression (118) desdits moteur-pompes (1, 125) en dite huile (114) en quantité équivalente via les deux clapets anti-retour d'accumulateur basse-pression (143), la sortie du premier débouchant dans le conduit interne d'entrée-sortie (57) desdits moteur-pompes (1, 125) tandis que la sortie du second débouche dans le conduit externe d'entrée-sortie (58) que comportent lesdits moteur-pompes (1, 125). Le moteur-pompe hydraulique (1) selon l'invention prévoit, selon le schéma de la figure 23, que l'huile de moteur-pompe (114) ayant fuit est périodiquement réintroduite en quantité équivalente dans l'accumulateur basse-pression (118) par la pompe basse-pression (119) à la demande du calculateur de gestion de moteur-pompe (70) non représenté sur ledit schéma, ledit calculateur (70) pouvant - à cette fin - mettre le moteur de pompe basse-pression (120) sous tension.

On remarque que, suivant le mode particulier de réalisation du moteur-pompe hydraulique (1) selon l'invention tel que représenté sur le schéma de principe de la figure 23, le dispositif de transmission hydraulique (63) comporte un échangeur-dissipateur à pertes de charge (126) qui peut être mis en relation avec le moteur-pompe hydraulique (1) à cylindrée variable relié au moteur de propulsion (123) ou avec le deuxième moteur-pompe hydraulique (125) relié aux roues motrices (124) via la vanne d'échangeur-dissipateur de conduit interne (131) ou la vanne d'échangeur-dissipateur de conduit externe (132).

On voit également que des accessoires (165) - ici représentés par un compresseur de climatisation (164) et un alternateur électrique (163) - peuvent être entraînés en rotation par leur moteur hydraulique d'accessoire (127) lorsque ce dernier est mis en relation avec le conduit interne d'entrée-sortie (57) par la vanne de moteur d'accessoire de conduit interne (133) correspondante.

On peut - sur la base du schéma de principe de la figure 23 - décrire de façon non-limitative les principaux modes de fonctionnement du dispositif de transmission hydraulique (63) lorsqu'il est utilisé pour propulser un véhicule automobile (110).

Le véhicule automobile (110) étant à l'arrêt et son moteur de propulsion (123) tournant au ralenti, la cylindrée du moteur-pompe hydraulique (1) à cylindrée variable relié au moteur de propulsion (123) est nulle (figure 5) tandis que par exemple, la cylindrée du deuxième moteur-pompe hydraulique (125) relié aux roues motrices (124) est maximale (figure 6).

Si le conducteur du véhicule automobile (110) enfonce partiellement la pédale d'accélérateur (151), le calculateur de gestion du moteur de propulsion (170) que l'on a montré en figures 28 à 31 augmente la charge et/ou le régime du moteur de propulsion (123) tandis que simultanément, le calculateur de gestion de moteur-pompe (70) pilote le servomoteur de variation de cylindrée (68) du moteur-pompe hydraulique (1) relié au moteur de propulsion (123) de sorte à donner une cylindrée audit moteur-pompe (1), puis à accroître progressivement ladite cylindrée. Entraîné en rotation par le moteur de propulsion (123), le moteur-pompe hydraulique (1) opère en mode « pompe » et aspire de l'huile de moteur pompe (114) à basse-pression dans le conduit externe d'entrée-sortie (58) pour la refouler ensuite sous haute-pression dans le conduit interne d'entrée-sortie (57) tandis que le deuxième moteur-pompe hydraulique (125) opère en mode « moteur » pour entraîner en rotation les roues motrices (124) en admettant ladite huile (114) sous haute-pression depuis le conduit interne d'entrée-sortie (57) pour la refouler sous basse-pression dans le conduit externe d'entrée-sortie (58). Ceci a pour effet de transmettre le travail mécanique produit par le moteur de propulsion (123) aux roues motrices (124), le véhicule automobile (110) se mettant progressivement en mouvement tandis qu'à chaque instant, le rapport entre la cylindrée du moteur-pompe hydraulique (1) relié au moteur de propulsion (123) d'une part, et la cylindrée du deuxième moteur-pompe hydraulique (125) d'autre part, détermine le. rapport de transmission entre ledit moteur (123) et les roues motrices (124), corrigé par exemple du rapport de transmission d'un pont différentiel (171) intercalé entre ledit deuxième moteur-pompe (125) et lesdites roues (124) comme le montre la figure 28.

Le conducteur du véhicule automobile (110) effectuant un parcours ordinaire, le calculateur de gestion de moteur-pompe (70) pilote simultanément la cylindrée du moteur-pompe hydraulique (1) relié au moteur de propulsion (123) et celle du deuxième moteur-pompe hydraulique (125) de sorte que d'une part, le rendement énergétique dudit moteur (123) soit toujours le plus élevé possible - en forçant ledit moteur (123) à fonctionner au plus proche des points de régime et de charge ou sa consommation spécifique effective est la plus faible - et que d'autre part, le rendement énergétique du dispositif de transmission hydraulique (63) soit également le plus élevé possible notamment en retenant le meilleur compromis entre pression et débit de fonctionnement desdits moteur-pompes (1, 125), de sorte à réduire au maximum les pertes énergétiques totales qui sont engendrées par les fuites et/ou les frottements et/ou les pertes de charge que génèrent immanquablement lesdits moteur-pompes (1, 125).

On comprend que dans ce contexte, le calculateur de gestion du moteur de propulsion (170) et le calculateur de gestion de moteur-pompe (70) montrés en figures 28 à 31 coopèrent pour que le rendement combiné du moteur de propulsion (123) et du dispositif de transmission hydraulique (63) soit le plus élevé possible, et que la consommation de carburant du véhicule automobile (110) soit la plus basse possible à même service rendu. On note que la marche arrière du véhicule automobile (110) peut être obtenue - par exemple - en inversant le sens de l'excentration du rotor périphérique de moteur-pompe (29) du deuxième moteur-pompe hydraulique (125), par rapport à son rotor central de moteur-pompe (3).

Si le conducteur enfonce au maximum la pédale d'accélérateur (151) de son véhicule automobile (110), le calculateur de gestion du moteur de propulsion (170) monte immédiatement la charge du moteur de propulsion (123) à son maximum, tandis que le calculateur de gestion de moteur-pompe (70) détermine pour le dispositif de transmission hydraulique (63) un rapport de transmission entre ledit moteur (123) et les roues motrices (124) tel, que ledit moteur (123) se trouve placé à son régime de puissance maximale. Immédiatement ensuite voire simultanément, le calculateur de gestion de moteur-pompe (70) provoque l'accélération du véhicule automobile (110) par réduction progressive du rapport de transmission du dispositif de transmission hydraulique (63) tout en exploitant toute la puissance du moteur de propulsion (123). Ceci est obtenu en pilotant la cylindrée du moteur-pompe hydraulique (1) et/ou celle du deuxième moteur-pompe hydraulique (125). Du fait de la puissance maximale permanente délivrée par le moteur de propulsion (123) durant cette accélération, et du fait de l'absence de discontinuité dans la traction du véhicule automobile (110), l'accélération effective dudit véhicule (110) est plus vive que si ce dernier était équipé d'une boîte de vitesses à rapports discrets, qu'il s'agisse d'une boîte de vitesses manuelle ou robotisée, à simple ou à double embrayage, ou d'une boîte de vitesses automatique à trains épicycloïdaux accouplée au moteur de propulsion (123) par un embrayage à disque(s) ou par un convertisseur hydro cinétique.

Lorsque le conducteur veut ralentir la vitesse de son véhicule automobile (110), il en relâche la pédale d'accélérateur (151) montrée en figure 32. Le dispositif de transmission hydraulique (63) peut alors récupérer une part de l'énergie cinétique dudit véhicule (110). Pour cela, le calculateur de gestion du moteur de propulsion (170) met par exemple immédiatement le moteur de propulsion (123) au ralenti, tandis que le calculateur de gestion de moteur-pompe (70) pilote le servomoteur de variation de cylindrée (68) du moteur-pompe hydraulique (1) relié audit moteur (123) pour que la cylindrée dudit moteur-pompe (1) soit nulle, comme montré en figure 5. Parallèlement, le calculateur de gestion de moteur-pompe (70) ouvre simultanément la vanne d'accumulateur basse-pression de conduit interne (129) et la vanne d'accumulateur haute-pression de conduit externe (128) de sorte que le deuxième moteur-pompe hydraulique (125) opère en mode « pompe » étant entraîné pour cela par les roues motrices (124), et aspire de l'huile de moteur pompe (114) à basse-pression dans le conduit interne d'entrée-sortie (57) puis refoule ladite huile (114) sous haute-pression dans le conduit externe d'entrée-sortie (58). Ce faisant, ledit deuxième moteur-pompe (125) transfère de l'huile de moteur pompe (114) depuis l'accumulateur basse-pression (118) vers l'accumulateur haute-pression (71). En conséquence, la pression de l'huile de moteur pompe (114) contenue dans l'accumulateur basse-pression (118) baisse tandis que la pression de l'huile de moteur pompe (114) contenue dans l'accumulateur haute-pression (71) monte du fait de la raideur respective desdits accumulateurs (118, 71) qui résulte de la raideur de l'azote que contient leur compartiment à gaz (116). Selon cet exemple de réalisation, la pression dans l'accumulateur basse-pression (118) varie par exemple entre trois bar lorsque le piston séparateur d'accumulateur (72) dudit accumulateur (118) est au point mort bas, et six bar lorsque ledit piston (72) est au point mort haut, tandis que s'agissant de l'accumulateur haute-pression (71), ces valeurs de pression peuvent être - à titre d'exemple non limitatif - respectivement de mille et deux mille bar. On remarque que durant la décélération du véhicule automobile (110), le calculateur de gestion de moteur-pompe (70) adapte en permanence la cylindrée du deuxième moteur-pompe hydraulique (125) de sorte d'une part, à régler l'intensité de ladite décélération et de sorte d'autre part, à tenir compte de la raideur de l'accumulateur basse-pression (118) et de celle de l'accumulateur haute-pression (71). Ainsi, durant une décélération de constante intensité, la pression de l'huile de moteur pompe (114) en sortie du deuxième moteur-pompe hydraulique (125) tend à augmenter avec la distance parcourue par le véhicule automobile (110), tandis que la pression de l'huile de moteur pompe (114) en entrée dudit deuxième moteur-pompe (125) tend à baisser.

On remarque qu'outre relâcher la pédale d'accélérateur (151) de son véhicule automobile (110) pour ralentir ce dernier, le conducteur dudit véhicule (110) peut également appuyer sur la pédale de frein (150) dudit véhicule (110) montrée en figure 32 pour que la décélération de ce dernier soit plus vive. En ce cas, le dispositif de transmission hydraulique (63) peut se substituer en tout ou partie aux freins à disque (172) dudit véhicule (110) que l'on a montrés en figures 28 à 31, pour qu'une partie au moins de l'énergie cinétique dudit véhicule (110) ne soit pas dissipée sous forme de chaleur par lesdits freins (172), mais stockée dans l'accumulateur haute-pression (71) sous forme - par exemple - d'azote comprimé. Dans ce contexte, au moins un capteur non représenté peut renseigner le calculateur de gestion de moteur-pompe (70) sur la position de la pédale de frein (150) et/ou sur l'effort que le conducteur exerce sur ladite pédale (150), de sorte que si la puissance du deuxième moteur-pompe hydraulique (125) et la capacité de stockage en huile de moteur pompe (114) de l'accumulateur haute-pression (71) le permettent, le véhicule automobile (110) est prioritairement freiné par ledit deuxième moteur-pompe (125) avant que lesdits freins (172) n'interviennent en complément ou en substitution du freinage opéré par ledit deuxième moteur-pompe (125). En tout état de cause, cette configuration requiert une pédale de frein (150) dite « intelligente » opérant selon un principe similaire à celui du concept dit de « pédale de frein découplée » développé conjointement par les sociétés « Renault » et « Bosch » pour le véhicule électrique « Zoé © » produit par « Renault ».

On note que le freinage du véhicule automobile (110) n'est pas la seule source de travail mécanique qui permet de stocker de l'énergie dans l'accumulateur haute-pression (71). En effet, le travail mécanique produit par le moteur de propulsion (123) peut être stocké de manière similaire. Par exemple, le véhicule automobile (110) roulant, une partie du débit d'huile de moteur-pompe (114) sortant du moteur-pompe hydraulique (1) relié audit moteur (123) peut entraîner les roues motrices (124) dudit véhicule (110) tandis qu'une autre partie peut être stockée dans l'accumulateur haute-pression (71). Pour cela, le calculateur de gestion de moteur-pompe (70) ouvre simultanément la vanne d'accumulateur basse-pression de conduit externe (130) et la vanne d'accumulateur haute-pression de conduit interne (112), et pilote à la fois la cylindrée du moteur-pompe hydraulique (1) relié audit moteur (123) et celle du deuxième moteur-pompe hydraulique (125), de sorte à pouvoir propulser le véhicule automobile (110) comme le souhaite le conducteur dudit véhicule (110) d'une part, et à remplir l'accumulateur haute-pression (71) en tenant compte de la raideur de l'azote que contient le compartiment à gaz (116) de ce dernier d'autre part.

Cette stratégie permet - dans certains cas - de faire fonctionner le moteur de propulsion (123) sous charge plus élevée que celle nécessaire pour propulser le véhicule automobile (110) de sorte que ledit moteur (123) développe un meilleur rendement. L'excédent de travail produit par ledit moteur (123) est ainsi stocké dans l'accumulateur haute-pression (71) qui pourra ultérieurement alimenter le deuxième moteur-pompe hydraulique (125) en huile moteur-pompe (114) pour propulser ledit véhicule (110) sans qu'il ne soit nécessaire de recourir au moteur de propulsion (123). En outre, il est possible de charger le moteur de propulsion (123) par intermittence pour mouvoir le véhicule automobile (110) en alternant des phases brèves de fonctionnement dudit moteur (123) à rendement maximum et charge relativement élevée durant lesquelles ledit moteur (123) assure à la fois la propulsion dudit véhicule (110) et le remplissage de l'accumulateur haute-pression (71), avec des phases de ralenti dudit moteur (123) durant lesquelles seul ledit accumulateur (71) fournit l'énergie nécessaire à la propulsion dudit véhicule (110) via le deuxième moteur-pompe hydraulique (125). Suivant cette dernière stratégie, le véhicule automobile (110) peut être équipé d'un émetteur acoustique (173) tel que représenté en figures 28 à 30 qui reproduit - par un mélange adapté des ondes acoustiques qui se propagent dans l'habitacle du véhicule automobile (110) - le bruit du moteur de propulsion (123) fonctionnant en continu et ceci, afin d'offrir aux passagers dudit véhicule (110) le meilleur confort possible. On note que le remplissage de l'accumulateur haute-pression (71) en huile moteur-pompe (114) par le moteur de propulsion (123) peut également s'opérer lorsque le véhicule automobile (110) est à l'arrêt.

Une fois le véhicule automobile (110) rendu à vitesse réduite ou mis à l'arrêt, l'énergie cinétique du véhicule automobile (110) et/ou le travail mécanique produit par le moteur de propulsion (123) stockée sous forme d'azote sous pression dans l'accumulateur haute-pression (71) est réutilisable pour servir diverses stratégies. Par exemple, il est possible de mouvoir le véhicule automobile (110) sur quelques mètres ou dizaines de mètres sans recourir au moteur de propulsion (123) si celui-ci est à l'arrêt. Pour cela, le calculateur de gestion de moteur-pompe (70) ouvre simultanément la vanne d'accumulateur basse-pression de conduit externe (130) et la vanne d'accumulateur haute-pression de conduit interne (112) et règle la cylindrée du deuxième moteur-pompe hydraulique (125) pour répondre au besoin en déplacement du véhicule automobile (110), tout en donnant à la cylindrée du moteur-pompe hydraulique (1) relié audit moteur (123) une valeur nulle (figure 5). Il est aussi possible de démarrer le moteur de propulsion (123) sans recourir à un démarreur électrique. Pour cela, le calculateur de gestion de moteur-pompe (70) ouvre simultanément la vanne d'accumulateur basse-pression de conduit interne (129) et la vanne d'accumulateur haute-pression de conduit externe (128) et règle la cylindrée du moteur-pompe hydraulique (1) relié audit moteur (123) au juste nécessaire pour démarrer ledit moteur (123), tout en donnant à la cylindrée du deuxième moteur-pompe hydraulique (125) une valeur nulle (figure 5).

En outre, pour propulser le véhicule automobile (110), l'énergie stockée dans l'accumulateur haute-pression (71) peut venir en renfort de celle produite sous forme mécanique par le moteur de propulsion (123). Cette stratégie peut se justifier en cas de très forte accélération du véhicule automobile (110) où il est avantageux d'ajouter la puissance dudit accumulateur haute-pression (71) à celle dudit moteur (123). Pour cela, le calculateur de gestion du moteur de propulsion (170) ayant monté la charge du moteur de propulsion (123) à son maximum et ledit moteur (123) se trouvant placé à son régime de puissance maximale, le calculateur de gestion de moteur-pompe (70) ouvre simultanément la vanne d'accumulateur basse-pression de conduit externe (130) et la vanne d'accumulateur haute-pression de conduit interne (112) de sorte que l'accumulateur haute-pression (71) délivre un débit d'huile de moteur-pompe (114) qui s'ajoute à celui produit par le moteur-pompe hydraulique (1) relié audit moteur (123). La somme des deux débits est ainsi transformée en travail mécanique par le deuxième moteur-pompe hydraulique (125) dont la cylindrée est ajustée en conséquence par le calculateur de gestion de moteur-pompe (70), ledit travail étant transmis aux roues motrices (124) du véhicule automobile (110).

L'échangeur-dissipateur à pertes de charge (126) représenté sur le schéma de principe de la figure 23 participe aussi à l'optimisation du bilan énergétique du véhicule automobile (110), en plus de potentiellement concourir à en réduire le coût et la maintenance des freins à disque (172) et à en améliorer le confort de conduite du conducteur.

Ledit échangeur-dissipateur (126) peut par exemple être utilisé pour accélérer la montée en température du moteur de propulsion (123). Pour cela, le véhicule automobile (110) roulant ou non, le calculateur de gestion du moteur de propulsion (170) augmente la charge et/ou le régime dudit moteur (123) tandis que simultanément, le calculateur de gestion de moteur-pompe (70) ouvre la vanne d'échangeur-dissipateur de conduit interne (131) ce qui a pour effet de forcer de l'huile de moteur-pompe (114) expulsée dans le conduit interne d'entrée-sortie (57) par le moteur-pompe hydraulique (1) relié au moteur de propulsion (123) à passer dans les conduits internes d'échangeur-dissipateur (135) et dans les étranglements (166), ces derniers coopérant à constituer une perte de charge. La charge additionnelle imposée par le calculateur de gestion du moteur de propulsion (170) au moteur de propulsion (123) est ainsi convertie en un débit additionnel d'huile de moteur-pompe (114) sous pression qui est converti en chaleur à l'intérieur dudit échangeur-dissipateur (126) sous l'effet de la perte de charge que constituent les conduits internes d'échangeur-dissipateur (135) et les étranglements (166) et ceci, avant de retourner - via le clapet anti-retour de dissipateur (169) - à l'admission du moteur-pompe hydraulique (1) relié au moteur de propulsion (123), pour y être ré aspirée. L'huile de moteur-pompe (114) s'étant échauffée en passant dans les conduits internes d'échangeur-dissipateur (135) et les étranglements (166), ladite huile (114) cède ensuite une part de sa chaleur à une eau que contient un circuit de refroidissement que comporte le moteur de propulsion (123), via la surface externe d'échange thermique de dissipateur (136). Ladite eau se réchauffe rapidement tandis que l'huile de lubrification du moteur de propulsion (123) se fluidifie également rapidement, ce qui limite les pertes par frottement et les pertes thermiques générées par ledit moteur (123). Par ailleurs, la charge dudit moteur (123) étant élevée, la température de ses gaz d'échappement est également élevée, ce qui permet une montée en température rapide de son catalyseur 3-voies de sorte à potentiellement réduire la quantité de polluants émis par ledit moteur (123). En outre, le compartiment des passagers du véhicule automobile (110) que propulse ledit moteur (123) est chauffé rapidement en période hivernale, ce qui favorise le confort desdits passagers.

Pour ralentir voire arrêter le véhicule automobile (110), l'échangeur-dissipateur à pertes de charge (126) peut avantageusement se substituer au frein moteur que peut produire le moteur de propulsion (123) quand il est entraîné par les roues motrices (124) et/ou aux freins à disque (172), particulièrement lorsque l'accumulateur haute-pression (71) ne peut plus admettre d'huile de moteur-pompe (114) sous pression car il est plein.

A ce titre, lorsque le conducteur relâche la pédale d'accélérateur (151) ou appuie sur la pédale de frein (150), le calculateur de gestion du moteur de propulsion (170) met par exemple le moteur de propulsion (123) au ralenti, tandis que le calculateur de gestion de moteur-pompe (70) place la cylindrée du moteur-pompe hydraulique (1) relié audit moteur (123) à valeur nulle (figure 5). Parallèlement, le calculateur de gestion de moteur-pompe (70) ouvre la vanne d'échangeur-dissipateur de conduit externe (132) de sorte que le deuxième moteur-pompe hydraulique (125) opère en mode « pompe » étant entraîné pour cela par les roues motrices (124), et aspire de l'huile de moteur pompe (114) à basse-pression dans le conduit interne d'entrée-sortie (57) puis refoule ladite huile (114) sous haute-pression à l'entrée de l'échangeur-dissipateur à pertes de charge (126). Ladite huile (114) passe au travers puis ressort dudit échangeur-dissipateur (126) après s'y être échauffée puis refroidie, puis retourne dans le conduit interne d'entrée-sortie (57) via le clapet anti-retour de dissipateur (169) correspondant pour y être aspirée à nouveau par le deuxième moteur-pompe hydraulique (125).

La stratégie qui vient d'être décrite permet d'utiliser l'énergie cinétique et/ou gravitationnelle du véhicule automobile (110) pour en réchauffer efficacement le moteur et/ou l'habitacle des passagers. Ladite stratégie permet en outre de limiter l'usure et l'échauffement des freins à disque (172) par exemple lors de longues descentes, et de prévoir éventuellement des freins à disque (172) de moindres dimensions.

La figure 31 illustre l'une des applications les plus remarquables du dispositif de transmission hydraulique (63) qui consiste en son couplage avec un turbomoteur basse-pression à combustion interne (174) selon la configuration décrite dans la demande de brevet français N° FR 12 59827 appartenant au demandeur, ledit turbomoteur (174) constituant alors le moteur de propulsion (123) en lieu et place du moteur thermique à combustion interne alternatif et à allumage commandé pris précédemment pour illustrer le fonctionnement du moteur-pompe hydraulique (1) à cylindrée fixe ou variable suivant l'invention.

Suivant cette application, l'arbre de sortie de puissance de réducteur multi-turbines (175) du groupe multi-turbines (176) que comporte le turbomoteur basse-pression à combustion interne (174) est relié à la prise de force de rotor central (4) pour pouvoir entraîner en rotation le rotor central de moteur-pompe (3) du moteur-pompe hydraulique (1) à cylindrée variable que comprend le dispositif de transmission hydraulique (63). On retrouve sur la figure 31 les principaux composants du turbomoteur basse-pression à combustion interne (174) décrits et/ou revendiqués dans la demande de brevet français N° FR 12 59827 que sont une bouche d'admission d'air de turbomoteur (177) et son filtre à air d'admission de turbomoteur (178), un turbocompresseur basse-pression (179), un refroidisseur intermédiaire de turbocompresseur (180), un turbocompresseur haute-pression (181), un échangeur air/mélange à contre-courant de régénération (182), une chambre de combustion continue (183), un catalyseur de post-traitement des polluants (184), un conduit d'admission gaz-vapeur de turbine motrice de détente (185), des turbines motrices de détente (186) faisant partie du groupe multi-turbines (176) et dont l'arbre de turbine motrice de détente (187) entraîne une couronne de réducteur multi-turbines (188) via un pignon d'attaque de turbine (189), un collecteur d'échappement de turbines de détente (190), un conduit d'échappement gaz-vapeur de turbine motrice de détente (191), une ligne d'échappement (192), et une sortie de ligne d'échappement (193).

Dans ce contexte, le dispositif de transmission hydraulique (63) permet de rendre le turbomoteur basse-pression à combustion interne (174) compatible avec la conduite du véhicule automobile (110). En effet, ledit dispositif (63) permet de stocker dans l'accumulateur haute-pression (71) une grande partie de l'énergie cinétique des turbines motrices de détente (186) lors des variations de vitesse de ces dernières, et de s'accommoder du temps de réponse desdites turbines (186) en utilisant ou non l'énergie stockée dans ledit accumulateur (71) pour relancer le véhicule automobile (110) sans conséquences pour le confort de conduite dudit véhicule (110). En outre les particularités propres à la demande de brevet français N° FR 12 59827 et à celles du moteur-pompe hydraulique (1) à cylindrée fixe ou variable suivant l'invention permettent de s'accommoder de la plage de régime de rotation relativement faible sur laquelle les turbines motrices de détente (186) délivrent leur meilleur rendement. En effet, cette particularité est gérée d'une part, par le groupe multi-turbines (176) qui prévoit un rapport de démultiplication entre chaque turbine motrice de détente (186) et l'arbre de sortie de puissance de réducteur multi-turbines (175) adapté à chaque dite turbine (186) ledit rapport étant fixé par la couronne de réducteur multi-turbines (188) et le pignon d'attaque de turbine (189) associé à chaque dite turbine (186), et d'autre part, par le dispositif de transmission hydraulique (63) qui peut transmettre à tout moment la puissance produite par la ou les turbine(s) motrice(s) de détente (186) aux roues motrices (124) quel que soit le régime de ces dernières par rapport à celui de la ou desdites turbine(s) (186).

Les caractéristiques du turbomoteur basse-pression à combustion interne (174) selon la demande de brevet français N° FR 12 59827 combinées avec celles du dispositif de transmission hydraulique (63) tel que prévu par le moteur-pompe hydraulique (1) à cylindrée fixe ou variable suivant l'invention permettent ainsi de réaliser des véhicules automobiles (110) à très basse consommation de carburant.

Les figures 25 à 27 illustrent le fonctionnement de l'accumulateur haute-pression (71) et/ou de l'accumulateur basse-pression (118) dont le compartiment à huile (117) est agencé de sorte à pouvoir stocker en toute sécurité de l'huile de moteur-pompe (114) sous très forte pression, par exemple deux mille bar. On remarque que lesdits accumulateurs (71, 118) ne peuvent jamais se vider totalement de leur huile ce qui n'est pas nouveau en soi. Toutefois, le moteur-pompe hydraulique (1) à cylindrée fixe ou variable suivant l'invention prévoit que lorsque le piston séparateur d'accumulateur (72) - du fait du vidage de l'accumulateur haute-pression (71) et/ou de l'accumulateur basse-pression (118) de son huile de moteur-pompe 114 - est entré en contact avec le poussoir de ressort à forte raideur (77) comme montré en figure 26 puis a continué sa course en direction du clapet de fermeture d'accumulateur (73), ledit piston (72) a ensuite plaqué ledit clapet (73) sur le siège de clapet d'accumulateur (74) par l'intermédiaire du ressort de clapet à forte raideur (76) interposé entre ledit poussoir (77) et ledit clapet (73). Cet agencement particulier a pour effet de fermer le compartiment à huile (117) lorsque ce dernier est en grande partie vidé de l'huile de moteur-pompe (114) qu'il contient tout en conservant une différence de pression faible entre ledit compartiment à huile (117) et le compartiment à gaz (116) de sorte que le piston séparateur d'accumulateur (72) ne subit jamais de forte pression différentielle. Cette particularité permet de réaliser ledit piston (72) en matériau léger avec un joint de piston d'accumulateur (122) simple, sans encourir ni risque de destruction dudit piston (72) ni risque d'importantes fuites d'huile de moteur-pompe (114) entre le compartiment à huile (117) et le compartiment à gaz (116).

Les possibilités du moteur-pompe hydraulique (1) à cylindrée fixe ou variable suivant l'invention ne s'en limitent pas aux applications qui viennent d'être décrites et il doit d'ailleurs être entendu que la description qui précède n'a été donnée qu'à titre d'exemple et qu'elle ne limite nullement le domaine de ladite invention dont on ne sortirait pas en remplaçant les détails d'exécution décrits par tout autre équivalent.

## Revendications

1. Moteur-pompe hydraulique à cylindrée fixe ou variable, comprenant:
• Au moins un rotor central de moteur-pompe (3) qui comporte une prise de force de rotor central (4) et qui est logé sur ou dans un bâti de moteur-pompe (2), ledit rotor (3) pouvant tourner dans au moins un palier de rotor central (5) que comprend ledit bâti (2) tout en restant en contact le plus étanche possible avec au moins un distributeur d'entrée-sortie (43) maintenu approximativement fixe par rapport audit bâti (2) **caractérisé en ce que** ledit distributeur (43) pouvant relier au moins un cylindre hydraulique (14) aménagé radialement ou tangentiellement dans ledit rotor (3) avec au moins un conduit interne d'entrée-sortie (57) et au moins un conduit externe d'entrée-sortie (58) via respectivement un canal interne d'entrée-sortie de rotor central (15) et un orifice d'entrée-sortie de rotor central (16) aménagés dans le rotor central de moteur-pompe (3), l'une des extrémités desdits conduits (57, 58) étant arrimée directement ou indirectement et de façon étanche dans le bâti de moteur-pompe (2) tandis que l'autre extrémité desdits conduits (57, 58) est arrimée de façon étanche dans le distributeur d'entrée-sortie (43) ;
et **en ce que** le moteur-pompe hydraulique à cylindrée fixe ou variable comprend:
• Au moins un piston hydraulique (13) pouvant se mouvoir en translation dans le cylindre hydraulique (14) et pouvant pousser un poussoir guidé de piston hydraulique (18) ou pouvant être poussé par ce dernier, ledit poussoir (18) étant guidé en translation par un guide de poussoir (19) aménagé radialement ou tangentiellement dans le rotor central de moteur-pompe (3) ;
• Au moins un bras tangentiel (22) dont l'une des extrémités est articulée dans le rotor central de moteur-pompe (3) tandis que l'autre extrémité comporte une face d'appui de bras tangentiel sur poussoir (23) qui peut exercer un effort sur une ligne d'action de poussoir sur bras tangentiel (21) que comporte le poussoir guidé de piston hydraulique (18), la direction dudit effort étant approximativement tangentielle à l'axe de rotation dudit bras (22) ;
• Au moins un rotor périphérique de moteur-pompe (29) constitué d'au moins un carter cylindrique de rotor périphérique (32) dont l'une des extrémités au moins est terminée par un flasque de rotor périphérique (35), ledit rotor périphérique (29) pouvant tourner dans au moins un palier de rotor périphérique (36) porté par un stator de rotor périphérique (65) qui est directement ou indirectement solidaire du bâti de moteur-pompe (2), le rotor central de moteur-pompe (3) étant en tout ou partie logé à l'intérieur dudit rotor périphérique (29);
• Au moins des moyens antifriction (196) que comporte le bras tangentiel (22) sur sa face située à l'opposé de la face d'appui de bras tangentiel sur poussoir (23) lesdits moyens (196) prenant appui sur la surface interne du carter cylindrique de rotor périphérique (32).

2. Moteur-pompe hydraulique à cylindrée fixe ou variable suivant la revendication 1, **caractérisé en ce que** le rotor périphérique de moteur-pompe (29) est forcé à tourner à la même vitesse que le rotor central de moteur-pompe (3) par une couronne de synchronisation angulaire de rotor périphérique (42) rendue solidaire en rotation d'une couronne de synchronisation angulaire de rotor central (11) que comporte le rotor central de moteur pompe (3) par au moins un pignon de synchronisation angulaire (12) tournant autour d'au moins un axe de pignon de synchronisation angulaire (81) que comprend le bâti de moteur-pompe (2).

3. Moteur-pompe hydraulique à cylindrée fixe ou variable suivant les revendications 1 et 2, **caractérisé en ce que** les moyens antifriction (196) sont constitués d'au moins un rouleau antifriction de bras tangentiel (28) qui peut rouler d'une part, sur une piste de roulement de bras tangentiel (26) que comporte le bras tangentiel (22) sur sa face située à l'opposé de la face d'appui de bras tangentiel sur poussoir (23) et d'autre part, sur une piste de roulement de rotor périphérique (33) que comporte la surface interne du carter cylindrique de rotor périphérique (32), ledit rouleau (28) étant limité dans son déplacement simultanément par rapport à la piste de roulement de bras tangentiel (26) et par rapport à la piste de roulement de rotor périphérique (33) par au moins une crémaillère de rouleau de bras tangentiel (27) que comporte la piste de roulement de bras tangentiel (26) et par au moins une couronne de rouleau de rotor périphérique (34) que comporte la piste de roulement de rotor périphérique (33), ladite crémaillère (27) et ladite couronne (34) coopérant simultanément avec au moins un pignon de rouleau (87) que comporte ledit rouleau (28).

4. Moteur-pompe hydraulique à cylindrée fixe ou variable suivant la revendication 1, **caractérisé en ce que** les moyens antifriction (196) sont constitués d'au moins un patin de friction de bras tangentiel (194) que comporte le bras tangentiel (22) sur sa face située à l'opposé de la face d'appui de bras tangentiel sur poussoir (23), ledit patin (194) pouvant entrer en contact avec une piste de friction de rotor périphérique (195) que comporte la surface interne du carter cylindrique de rotor périphérique (32).

5. Moteur-pompe hydraulique à cylindrée fixe ou variable suivant la revendication 1, **caractérisé en ce que** le piston hydraulique (13) comprend une rotule d'appui de poussoir sur piston hydraulique (17) sur sa face circulaire qui est la plus éloignée du rotor central de moteur-pompe (3), ladite rotule (17) étant constituée d'une forme troncosphérique en creux ou en relief qui coopère avec une rotule d'appui de piston hydraulique sur poussoir (20) que comprend le poussoir guidé de piston hydraulique (18) ladite rotule (20) étant également constituée d'une forme troncosphérique en creux ou en relief, tandis que les deux formes troncosphériques sont complémentaires et constituent une liaison rotule entre ledit piston (13) et ledit poussoir (18).

6. Moteur-pompe hydraulique à cylindrée fixe ou variable suivant la revendication 1, **caractérisé en ce que** le poussoir guidé de piston hydraulique (18) comprend une jambe de force (82) placée dans le prolongement du piston hydraulique (13), et une traverse de force (83) montée solidairement de ladite jambe (82) et perpendiculairement à cette dernière, ladite traverse (83) portant la ligne d'action de poussoir sur bras tangentiel (21) tandis que chacune de ses deux extrémités peut coulisser dans le guide de poussoir (19).

7. Moteur-pompe hydraulique à cylindrée fixe ou variable suivant la revendication 1, **caractérisé en ce que** le rotor central de moteur-pompe (3) comporte un logement cylindrique d'axe (84) dans le quel est logé un axe de bras tangentiel (24) tandis que le bras tangentiel (22) est traversé par ledit axe (24) afin de s'articuler dans le rotor central de moteur-pompe (3).

8. Moteur-pompe hydraulique à cylindrée fixe ou variable suivant la revendication 1, **caractérisé en ce que** le rotor central de moteur-pompe (3) comporte un ressort de rappel de bras tangentiel (25) qui prend appui d'une part, sur ledit rotor (3) et d'autre part, sur le bras tangentiel (22).

9. Moteur-pompe hydraulique à cylindrée fixe ou variable suivant la revendication 3, **caractérisé en ce que** la piste de roulement de rotor périphérique (33) comporte au moins un rail de guidage (85) en creux ou en saillie qui coopère avec au moins une gorge de guidage (86) en creux ou en saillie que comporte le rouleau antifriction de bras tangentiel (28).

10. Moteur-pompe hydraulique à cylindrée fixe ou variable suivant la revendication 1, **caractérisé en ce que** le palier de rotor central (5) comprend d'une part, une piste intérieure de palier de rotor central (7) munie d'au moins une couronne intérieure de palier de rotor central (9) ladite piste (7) étant solidaire du rotor central de moteur-pompe (3) et d'autre part, une piste extérieure de palier de rotor central (8) munie d'au moins une couronne extérieure de palier de rotor central (10) ladite piste (8) étant solidaire du bâti de moteur-pompe (2), tandis qu'au moins trois rouleaux de palier de rotor central (6) peuvent rouler simultanément sur la piste intérieure de palier de rotor central (7) et sur la piste extérieure de palier de rotor central (8) et restent à distance constante les uns par rapport aux autres grâce à au moins un pignon de rouleau (87) que comporte chaque rouleau de palier de rotor central (6) et qui coopère avec lesdites couronnes intérieure (9) et extérieure (10).

11. Moteur-pompe hydraulique à cylindrée fixe ou variable suivant la revendication 10, **caractérisé en ce que** la piste intérieure de palier de rotor central (7) et/ou la piste extérieure de palier de rotor central (8) comporte au moins un rail de guidage (85) en creux ou en saillie qui coopère avec au moins une gorge de guidage (86) en creux ou en saillie que comportent les rouleaux de palier de rotor central (6).

12. Moteur-pompe hydraulique à cylindrée fixe ou variable suivant la revendications 1, **caractérisé en ce que** le palier de rotor périphérique (36) comprend d'une part, une piste intérieure de palier de rotor périphérique (38) munie d'au moins une couronne intérieure de palier de rotor périphérique (40) ladite piste (38) étant solidaire du rotor périphérique de moteur-pompe (29) et d'autre part, une piste extérieure de palier de rotor périphérique (39) munie d'au moins une couronne extérieure de palier de rotor périphérique (41) ladite piste (39) étant solidaire du stator de rotor périphérique (65), tandis qu'au moins trois rouleaux de palier de rotor périphérique (37) peuvent rouler simultanément sur la piste intérieure de palier de rotor périphérique (38) et sur la piste extérieure de palier de rotor périphérique (39) et restent à distance constante les uns par rapport aux autres grâce à au moins un pignon de rouleau (87) que comporte chaque rouleau de palier de rotor périphérique (37) et qui coopère avec lesdites couronnes intérieure (40) et extérieure (41).

13. Moteur-pompe hydraulique à cylindrée fixe ou variable suivant la revendication 12, **caractérisé en ce que** la piste intérieure de palier de rotor périphérique (38) et/ou la piste extérieure de palier de rotor périphérique (39) comporte au moins un rail de guidage (85) en creux ou en saillie qui coopère avec au moins une gorge de guidage (86) en creux ou en saillie que comportent les rouleaux de palier de rotor périphérique (37).

14. Moteur-pompe hydraulique à cylindrée fixe ou variable suivant la revendication 1, **caractérisé en ce que** le distributeur d'entrée-sortie (43) est empêché de tourner avec le rotor central de moteur-pompe (3) et est maintenu en rotation par rapport au bâti de moteur-pompe (2) par au moins un ergot ou biellette directement ou indirectement fixé au bâti de moteur-pompe (2).

15. Moteur-pompe hydraulique à cylindrée fixe ou variable suivant la revendication 1, **caractérisé en ce que** le distributeur d'entrée-sortie (43) est un stator cylindrique (91) logé avec un faible jeu dans un cylindre de stator (92) aménagé au centre du rotor central de moteur-pompe (3) et coaxialement à ce dernier, ledit stator (91) renfermant une chambre de conduit interne (55) qui communique d'une part, avec le conduit interne d'entrée-sortie (57) et d'autre part, avec un collecteur angulaire entrée-sortie de conduit interne (44) que comporte ledit stator (91) en sa périphérie via un canal interne d'entrée-sortie de distributeur (53), tandis que ledit stator (91) renferme également une chambre de conduit externe (56) qui communique d'une part, avec le conduit externe d'entrée-sortie (58) et d'autre part, avec un collecteur angulaire entrée-sortie de conduit externe (89) que comporte également ledit stator (91) en sa périphérie via un autre canal interne d'entrée-sortie de distributeur (53).

16. Moteur-pompe hydraulique à cylindrée fixe ou variable suivant la revendication 15, **caractérisé en ce que** le stator cylindrique (91) comporte, à côté du collecteur angulaire entrée-sortie de conduit interne (44), au moins une gorge d'équilibrage d'effort radial de conduit externe (90) qui communique avec la chambre de conduit externe (56) via un canal interne d'équilibrage de distributeur (54) tandis que ledit stator (91) comporte également au moins une gorge d'équilibrage d'effort radial de conduit interne (45) qui communique avec la chambre de conduit interne (55) via un autre canal interne d'équilibrage de distributeur (54), ladite gorge (45) étant située à côté du collecteur angulaire entrée-sortie de conduit externe (89).

17. Moteur-pompe hydraulique à cylindrée fixe ou variable suivant la revendication 15, **caractérisé en ce que** le stator cylindrique (91) comporte une gorge d'étanchéité axiale (93) à proximité de l'une au moins de ses extrémités axiales.

18. Moteur-pompe hydraulique à cylindrée fixe ou variable suivant la revendication 1, **caractérisé en ce que** le distributeur d'entrée-sortie (43) est un stator axial (96) constitué d'un flasque de distribution (97) et d'un flasque d'équilibrage (98) placés axialement de part et d'autre du rotor central de moteur-pompe (3) en regard respectivement d'une face de distribution (103) et d'une face d'équilibrage (104) aménagées sur ledit rotor (3) lesdits flasques (97, 98) étant mécaniquement reliés entre eux par un moyeu central de stator axial (99) qui traverse axialement ledit rotor central (3) via un cylindre de stator (92) aménagé au centre dudit rotor central (3) et coaxialement à ce dernier, ledit stator (96) renfermant une chambre de conduit interne (55) qui communique d'une part, avec le conduit interne d'entrée-sortie (57) et d'autre part, avec un collecteur angulaire entrée-sortie de conduit interne (44) aménagé axialement sur la face interne du flasque de distribution (97) via un canal interne d'entrée-sortie de distributeur (53), tandis que ledit stator (96) renferme également une chambre de conduit externe (56) qui communique d'une part, avec le conduit externe d'entrée-sortie (58) et d'autre part, avec un collecteur angulaire entrée-sortie de conduit externe (89) également aménagé axialement sur la face interne du flasque de distribution (97) via un autre canal interne d'entrée-sortie de distributeur (53).

19. Moteur-pompe hydraulique à cylindrée fixe ou variable suivant la revendication 18, **caractérisé en ce que** la chambre de conduit interne (55) communique avec une gorge d'équilibrage d'effort axial de conduit interne (100) aménagée axialement sur la face interne du flasque d'équilibrage (98) via un canal interne d'équilibrage de distributeur (54), tandis que la chambre de conduit externe (56) communique avec une gorge d'équilibrage d'effort axial de conduit externe (101) également aménagée axialement sur la face interne du flasque d'équilibrage (98) via un autre canal interne d'équilibrage de distributeur (54).

20. Moteur-pompe hydraulique à cylindrée fixe ou variable suivant la revendication 18, **caractérisé en ce que** le flasque de distribution (97) et/ou le flasque d'équilibrage (98) comporte une gorge d'étanchéité radiale (102) à l'une au moins de ses extrémités radiales.

21. Moteur-pompe hydraulique à cylindrée fixe ou variable suivant la revendication 18, **caractérisé en ce que** le moyeu central de stator axial (99) comporte une gorge d'étanchéité axiale (93) à l'une au moins de ses extrémités axiales ou en un point quelconque de sa longueur.

22. Moteur-pompe hydraulique à cylindrée fixe ou variable suivant l'une quelconque des revendications 15, 16, 17, 18, 19, 20 ou 21 **caractérisé en ce que** tout ou partie du collecteur angulaire entrée-sortie de conduit interne (44), du collecteur angulaire entrée-sortie de conduit externe (89), de la gorge d'équilibrage d'effort radial de conduit externe (90), de la gorge d'équilibrage d'effort radial de conduit interne (45), de la gorge d'étanchéité axiale (93), de la gorge d'équilibrage d'effort axial de conduit interne (100), de la gorge d'équilibrage d'effort axial de conduit externe (101) ou de la gorge d'étanchéité radiale (102), est muni d'un segment de gorge de distributeur (46).

23. Moteur-pompe hydraulique à cylindrée fixe ou variable suivant la revendication 22, **caractérisé en ce que** le segment de gorge de distributeur (46) présente au moins un flanc de segment (94) qui établit latéralement une étanchéité avec le stator cylindrique (91) ou le stator axial (96), et au moins une ligne de contact de segment (49) qui d'une part, entre en contact avec le rotor central de moteur-pompe (3) pour former une étanchéité et qui d'autre part, est soumise à un effort qui tend à la plaquer sur ledit rotor (3) du fait de la poussée exercée par une huile de moteur-pompe (114) sous pression que contient le stator cylindrique (91) ou le stator axial (96) sur le segment de gorge de distributeur (46), ledit effort étant limité du fait d'une faible surface projetée (161) soumise à la pression de ladite huile (114) qu'offre ledit segment (46) qui résulte d'un épaulement de reprise d'effort de segment (50) que comporte ledit segment (46) qui coopère avec un autre épaulement (162) aménagé dans le stator cylindrique (91) ou dans le stator axial (96).

24. Moteur-pompe hydraulique à cylindrée fixe ou variable suivant la revendication 22, **caractérisé en ce que** le segment de gorge de distributeur (46) est maintenu en contact avec le rotor central de moteur-pompe (3) par un ressort de fond de gorge de segment (47).

25. Moteur-pompe hydraulique à cylindrée fixe ou variable suivant la revendication 22, **caractérisé en ce que** le segment de gorge de distributeur (46) est constitué de deux demi-segments (95) qui présentent chacun au moins un flanc de segment (94) maintenu en contact avec le stator cylindrique (91) ou avec le stator axial (96) par un ressort écarteur de segment (48).

26. Moteur-pompe hydraulique à cylindrée fixe ou variable suivant la revendication 1, **caractérisé en ce que** le conduit interne d'entrée-sortie (57) est arrimé dans le distributeur d'entrée-sortie (43) et/ou dans le bâti de moteur-pompe (2) par l'une ou l'autre des extrémités dudit conduit (57) au moyen d'au moins une rotule obturatrice fixe de conduit (59) et/ou d'au moins une rotule obturatrice glissante de conduit (60), ladite rotule (59, 60) présentant une portée de rotule obturatrice (105) qui peut reposer sur un siège de rotule obturatrice (64).

27. Moteur-pompe hydraulique à cylindrée fixe ou variable suivant la revendication 26, **caractérisé en ce que** la rotule obturatrice fixe de conduit (59) est maintenue en contact avec son siège de rotule obturatrice (64) par un ressort de rotule obturatrice qui prend appui d'une part, sur le distributeur d'entrée-sortie (43) ou sur le bâti de moteur-pompe (2) ou sur une rotule obturatrice glissante de conduit (60), et d'autre part, directement ou non sur ladite rotule obturatrice fixe (59).

28. Moteur-pompe hydraulique à cylindrée fixe ou variable suivant la revendication 26, **caractérisé en ce que** la rotule obturatrice glissante de conduit (60) est constituée d'au moins une demi-rotule obturatrice glissante (107) traversée axialement par le conduit interne d'entrée-sortie (57) ladite demi-rotule (107) pouvant translater axialement et de façon étanche par rapport audit conduit interne (57), tandis que ladite demi-rotule (107) est maintenue au contact de son siège de rotule obturatrice (64) par un ressort de rotule obturatrice (106) qui prend appui d'une part, sur le distributeur d'entrée-sortie (43) ou sur le bâti de moteur-pompe (2) ou sur une autre demi-rotule obturatrice glissante (107) et d'autre part, directement ou non sur ladite demi-rotule obturatrice glissante (107).

29. Moteur-pompe hydraulique à cylindrée fixe ou variable suivant la revendication 1, **caractérisé en ce que** le conduit externe d'entrée-sortie (58) est arrimé dans le distributeur d'entrée-sortie (43) et/ou dans le bâti de moteur-pompe (2) par l'une ou l'autre des extrémités dudit conduit (58) au moyen d'au moins une rotule obturatrice fixe de conduit (59), ladite rotule (59, 60) présentant une portée de rotule obturatrice (105) qui peut reposer sur un siège de rotule obturatrice (64).

30. Moteur-pompe hydraulique à cylindrée fixe ou variable suivant l'une quelconque des revendications 15 ou 18, **caractérisé en ce que** la chambre de conduit interne (55) est fermée par un bouchon de conduit interne (66).

31. Moteur-pompe hydraulique à cylindrée fixe ou variable suivant l'une quelconque des revendications 15 ou 18, **caractérisé en ce que** la chambre de conduit externe (56) est fermée par un bouchon de conduit externe (67) lequel est traversé par le conduit externe d'entrée-sortie (58).

32. Moteur-pompe hydraulique à cylindrée fixe ou variable suivant la revendication 1, **caractérisé en ce que** le conduit interne d'entrée-sortie (57) est logé en tout ou partie à l'intérieur du conduit externe d'entrée-sortie (58).

33. Moteur-pompe hydraulique à cylindrée fixe ou variable suivant la revendication 1, **caractérisé en ce que** le bâti de moteur-pompe (2) comprend un satellite de raccordement (62) dans lequel sont arrimés le conduit interne d'entrée-sortie (57) et/ou le conduit externe d'entrée-sortie (58).

34. Moteur-pompe hydraulique à cylindrée fixe ou variable suivant les revendications 1 et 2, **caractérisé en ce que** le stator de rotor périphérique (65) s'articule sur l'axe de pignon de synchronisation angulaire (81) autour duquel il peut tourner sous l'action d'un servomoteur de variation de cylindrée (68).

35. Moteur-pompe hydraulique à cylindrée fixe ou variable suivant la revendication 34, **caractérisé en ce que** le servomoteur de variation de cylindrée (68) est un moteur électrique rotatif de servomoteur (30) qui peut faire tourner - dans un sens ou dans un autre et par l'intermédiaire d'un réducteur de servomoteur (31) - un pignon d'attaque de couronne de variation de cylindrée (108), ledit pignon (108) pouvant tourner dans un palier aménagé dans le bâti de moteur-pompe (2) et pouvant entraîner en rotation une couronne de variation de cylindrée (109) solidaire du stator de rotor périphérique (65), le cercle primitif de ladite couronne (109) étant centré sur l'axe de pignon de synchronisation angulaire (81).

36. Moteur-pompe hydraulique à cylindrée fixe ou variable suivant les revendications 2 et 34, **caractérisé en ce que** des moyens de re-phasage (197) sont intercalés entre la couronne de synchronisation angulaire de rotor périphérique (42) et la couronne de synchronisation angulaire de rotor central (11).

37. Moteur-pompe hydraulique à cylindrée fixe ou variable suivant la revendication 36, **caractérisé en ce que** les moyens de re-phasage (197) sont constitués d'au moins un engrenage intermédiaire de re-phasage (198) comportant au moins une roue dentée de re-phasage (199) tournant autour d'au moins un axe de re-phasage (200) solidaire du stator de rotor périphérique (65), ledit engrenage (198) étant intercalé entre la couronne de synchronisation angulaire de rotor périphérique (42) et le pignon de synchronisation angulaire (12).

38. Moteur-pompe hydraulique à cylindrée fixe ou variable suivant la revendication 1, **caractérisé en ce que** le conduit interne d'entrée-sortie (57) et le conduit externe d'entrée-sortie (58) sont directement ou indirectement respectivement reliés avec l'entrée ou la sortie d'au moins un deuxième moteur-pompe hydraulique (125) à cylindrée fixe ou variable, le moteur-pompe hydraulique (1) à cylindrée fixe ou variable et le deuxième moteur-pompe hydraulique (125) à cylindrée fixe ou variable constituant communément un dispositif de transmission hydraulique (63).

39. Moteur-pompe hydraulique à cylindrée fixe ou variable suivant la revendication 38, **caractérisé en ce que** la prise de force de rotor central (4) du moteur-pompe (1) à cylindrée fixe ou variable est mécaniquement reliée à au moins un moteur de propulsion (123) que comporte un véhicule automobile (110) tandis que le deuxième moteur-pompe hydraulique (125) à cylindrée fixe ou variable est mécaniquement relié à au moins une roue ou chenille motrice (124) que comporte ledit véhicule (110), ou inversement.

40. Moteur-pompe hydraulique à cylindrée fixe ou variable suivant l'une quelconque des revendications 38 ou 39, **caractérisé en ce que** le conduit interne d'entrée-sortie (57) peut être mis en relation avec au moins un accumulateur haute-pression (71) par au moins une vanne d'accumulateur haute-pression de conduit interne (112).

41. Moteur-pompe hydraulique à cylindrée fixe ou variable suivant l'une quelconque des revendications 38 ou 39, **caractérisé en ce que** le conduit externe d'entrée-sortie (58) peut être mis en relation avec au moins un accumulateur haute-pression (71) par au moins une vanne d'accumulateur haute-pression de conduit externe (128).

42. Moteur-pompe hydraulique à cylindrée fixe ou variable suivant l'une quelconque des revendications 38 ou 39, **caractérisé en ce que** le conduit interne d'entrée-sortie (57) peut être mis en relation avec au moins un accumulateur basse-pression (118) par au moins une vanne d'accumulateur basse-pression de conduit interne (129).

43. Moteur-pompe hydraulique à cylindrée fixe ou variable suivant l'une quelconque des revendications 38 ou 39, **caractérisé en ce que** le conduit externe d'entrée-sortie (58) peut être mis en relation avec au moins un accumulateur basse-pression (118) par au moins une vanne d'accumulateur basse-pression de conduit externe (130).

44. Moteur-pompe hydraulique à cylindrée fixe ou variable suivant l'une quelconque des revendications 40, 41, 42 et 43 **caractérisé en ce que** l'accumulateur haute-pression (71) et/ou l'accumulateur basse-pression (118) comprend au moins un piston séparateur d'accumulateur (72) pouvant se déplacer de façon étanche dans un cylindre borgne d'accumulateur (113), ledit piston (72) délimitant avec ledit cylindre (113) un compartiment à gaz (116) contenant un gaz sous pression (115) et un compartiment à huile (117) contenant une huile de moteur-pompe (114), ce dernier compartiment (117) pouvant être mis en relation avec le conduit interne d'entrée-sortie (57) et/ou le conduit externe d'entrée-sortie (58).

45. Moteur-pompe hydraulique à cylindrée fixe ou variable suivant la revendication 44, **caractérisé en ce que** le compartiment à huile (117) comporte un clapet de fermeture d'accumulateur (73) que le piston séparateur d'accumulateur (72) peut plaquer sur un siège de clapet d'accumulateur (74) en poussant sur un ressort de clapet à forte raideur (76) interposé entre ledit piston (72) et ledit clapet (73), de sorte à isoler de façon étanche ledit compartiment (117) du conduit interne d'entrée-sortie (57) et/ou du conduit externe d'entrée-sortie (58), ledit clapet (73) coopérant - à l'opposé du ressort de clapet à forte raideur (76) - avec un ressort de clapet à faible raideur (75) qui tend à éloigner ledit clapet (73) dudit siège (74).

46. Moteur-pompe hydraulique à cylindrée fixe ou variable suivant la revendication 45, **caractérisé en ce que** le piston séparateur d'accumulateur (72) peut pousser sur le ressort de clapet à forte raideur (76) par l'intermédiaire d'un poussoir de ressort à forte raideur (77) qui est guidé en translation longitudinale par un guide de clapet et poussoir (78) solidaire de l'accumulateur haute-pression (71) et/ou de l'accumulateur basse-pression (118), ledit guide de clapet (78) guidant également le clapet de fermeture d'accumulateur (73) et comportant une butée d'arrêt de poussoir (79) qui détermine le déplacement maximal du poussoir de ressort à forte raideur (77) en direction du piston séparateur d'accumulateur (72).

47. Moteur-pompe hydraulique à cylindrée fixe ou variable suivant la revendication 46, **caractérisé en ce que** le guide de clapet et poussoir (78) comporte au moins un orifice radial de guide de clapet (80) qui relie le compartiment à huile (117) avec le siège de clapet d'accumulateur (74) de sorte à permettre à l'huile de moteur-pompe (114) de circuler entre le conduit interne d'entrée-sortie (57) et/ou le conduit externe d'entrée-sortie (58) et ledit compartiment à huile (117).

48. Moteur pompe hydraulique à cylindrée fixe ou variable suivant l'une quelconque des revendications 36, 37, 38 et 39 **caractérisé en ce que** l'accumulateur haute-pression (71) et/ou l'accumulateur basse-pression (118) est relié au conduit interne d'entrée-sortie (57) et/ou au conduit externe d'entrée-sortie (58) par l'intermédiaire d'une vanne de verrouillage d'accumulateur (145) qui peut isoler de façon étanche ledit accumulateur (71, 118) dudit conduit interne (57) et/ou dudit conduit externe (58).

49. Moteur-pompe hydraulique à cylindrée fixe ou variable suivant l'une quelconque des revendications 42 ou 43, **caractérisé en ce que** l'accumulateur basse-pression (118) est alimenté avec une huile de moteur-pompe (114) par au moins une pompe basse-pression (119) entraînée par un moteur de pompe basse-pression (120), le conduit d'admission de ladite pompe (119) étant relié à un réservoir d'huile de moteur-pompe (121) tandis que son conduit de refoulement est relié avec ledit accumulateur (118).

50. Moteur-pompe hydraulique à cylindrée fixe ou variable suivant l'une quelconque des revendications 38 ou 39, **caractérisé en ce que** le conduit interne d'entrée-sortie (57) peut être mis en relation par une vanne d'échangeur-dissipateur de conduit interne (131) avec au moins un conduit interne d'échangeur-dissipateur (135) que comporte un échangeur-dissipateur à pertes de charge (126), ledit conduit (135) comprenant au moins une surface externe d'échange thermique de dissipateur (136) qui est en contact avec un gaz de refroidissement ou un liquide refroidissement.

51. Moteur-pompe hydraulique à cylindrée fixe ou variable suivant l'une quelconque des revendications 38 ou 39, **caractérisé en ce que** le conduit externe d'entrée-sortie (58) peut être mis en relation par une vanne d'échangeur-dissipateur de conduit externe (132) avec au moins un conduit interne d'échangeur-dissipateur (135) que comporte un échangeur-dissipateur à pertes de charge (126), ledit conduit (135) comprenant au moins une surface externe d'échange thermique de dissipateur (136) qui est en contact avec un gaz de refroidissement ou un liquide refroidissement.

52. Moteur-pompe hydraulique à cylindrée fixe ou variable suivant l'une quelconque des revendications 38 ou 39, **caractérisé en ce que** le conduit interne d'entrée-sortie (57) peut être mis en relation avec un moteur hydraulique d'accessoire (127) par une vanne de moteur d'accessoire de conduit interne (133).

53. Moteur-pompe hydraulique à cylindrée fixe ou variable suivant l'une quelconque des revendications 38 ou 39, **caractérisé en ce que** le conduit externe d'entrée-sortie (58) peut être mis en relation avec un moteur hydraulique d'accessoire (127) par une vanne de moteur d'accessoire de conduit externe.

54. Moteur-pompe hydraulique à cylindrée fixe ou variable suivant l'une quelconque des revendications 52 ou 53, **caractérisé en ce que** le moteur hydraulique d'accessoire (127) est constitué d'au moins une turbine hydraulique (137) montée sur un arbre de turbine hydraulique (138) qui comporte au moins une aube de turbine hydraulique (139) sur laquelle au moins un injecteur de turbine hydraulique (140) peut projeter axialement et/ou radialement un jet d'une huile de moteur-pompe (114).

55. Moteur-pompe hydraulique à cylindrée fixe ou variable suivant l'une quelconque des revendications 34, 38, 39, 40, 41, 42, 43, 48, 49, 50, 51, 52 et 53 **caractérisé en ce qu**'il comporte un calculateur de gestion de moteur-pompe (70) qui commande le servomoteur de variation de cylindrée (68) pour piloter la cylindrée du moteur-pompe hydraulique (1) à cylindrée fixe ou variable γ-compris celui constitutif du dispositif de transmission hydraulique (63) que ce dernier soit intégré au véhicule automobile (110) ou non, ledit calculateur (70) pouvant également commander la vanne d'accumulateur haute-pression de conduit interne (112), et/ou la vanne d'accumulateur haute-pression de conduit externe (128), et/ou la vanne d'accumulateur basse-pression de conduit interne (129), et/ou la vanne d'accumulateur basse-pression de conduit externe (130), et/ou la vanne de verrouillage d'accumulateur (145) et/ou le moteur de pompe basse-pression (120) et/ou la vanne d'échangeur-dissipateur de conduit interne (131) et/ou la vanne d'échangeur-dissipateur de conduit externe (132) et/ou la vanne de moteur d'accessoire de conduit interne (133) et/ou la vanne de moteur d'accessoire de conduit externe.

56. Moteur-pompe hydraulique à cylindrée fixe ou variable suivant la revendication 55 **caractérisé en ce que** le calculateur de gestion de moteur-pompe (70) est relié par des moyens de transmission de l'information filaires, lumineux ou électromagnétiques à au moins un levier de passage de vitesses (146) et/ou au moins une palette de passage de vitesses (147) et/ou au moins un bouton de passage de vitesses (148) et/ou une pédale d'embrayage (149) et/ou une pédale de frein (150) et/ou une pédale d'accélérateur (151) que comporte un poste de conduite (152) que comprend le véhicule automobile (110).

57. Moteur-pompe hydraulique à cylindrée fixe ou variable suivant les revendications 39 et 55, **caractérisé en ce que** le calculateur de gestion de moteur-pompe (70) est relié par des moyens de transmission de l'information filaires, lumineux ou électromagnétiques à au moins un bouton ou molette de configuration de transmission (153) et/ou un écran de configuration de transmission (154) et/ou un microphone de configuration de transmission (155) et/ou un haut-parleur de configuration de transmission (156) que comporte un poste de conduite (152) que comprend le véhicule automobile (110).

## Patentansprüche

1. Hydraulische Motorpumpe mit festem oder variablem Hubraum, umfassend:
• mindestens einen zentralen Rotor (3) der Motorpumpe, der eine Zapfwelle (4) des zentralen Rotors umfasst und der auf oder in einem Rahmen (2) der Motorpumpe angeordnet ist, wobei sich der Rotor (3) in mindestens einem Lager (5) des zentralen Rotors drehen kann, das der Rahmen (2) umfasst, wobei er in dichtestmöglichem Kontakt mit mindestens einem Einlass-Auslass-Verteiler (43) bleibt, der in Bezug auf den Rahmen (2) annähernd fest gehalten wird;
**dadurch gekennzeichnet, dass** wobei der Verteiler (43) mindestens einen hydraulischen Zylinder (14), der radial oder tangential in dem Rotor (3) angebracht ist, mit mindestens einer inneren Einlass-Auslass-Leitung (57) und mindestens einer äußeren Einlass-Auslass-Leitung (58) über jeweils einen inneren Einlass-Auslass-Kanal (15) des zentralen Rotors und eine Einlass-Auslass-Öffnung (16) des zentralen Rotors verbinden kann, die in dem zentralen Rotor (3) der Motorpumpe angebracht sind, wobei eines der Enden der Leitungen (57, 58) direkt oder indirekt und dicht in dem Rahmen (2) der Motorpumpe untergebracht ist, während das andere Ende der Leitungen (57, 58) dicht in dem Einlass-Auslass-Verteiler (43) untergebracht ist;
und dass die hydraulische Motorpumpe mit festem oder variablem Hubraum umfasst:
• mindestens einen hydraulischen Kolben (13), der sich translatorisch in dem hydraulischen Zylinder (14) bewegen kann und einen geführten Schieber (18) des hydraulischen Kolbens schieben kann oder von dem Letzteren geschoben werden kann, wobei der Schieber (18) translatorisch von einer Schieberführung (19) geführt wird, die radial oder tangential in dem zentralen Rotor (3) der Motorpumpe angebracht ist;
• mindestens einen tangentialen Arm (22), wobei eines seiner Enden in dem zentralen Rotor (3) der Motorpumpe angelenkt ist, während das andere Ende eine Auflagefläche des tangentialen Arms auf dem Schieber (23) umfasst, die einen Druck auf eine Wirkungslinie (21) des Schiebers auf den tangentialen Arm ausüben kann, die der von dem hydraulischen Kolben (18) geführte Schieber umfasst, wobei die Richtung des Drucks annähernd tangential zur Drehachse des Arms (22) ist;
• mindestens einen peripheren Rotor (29) der Motorpumpe, der aus mindestens einem zylindrischen Gehäuse (32) des peripheren Rotors besteht, wobei eines seiner Enden mindestens durch einen Flansch (35) des peripheren Rotors abgeschlossen wird, wobei sich der periphere Rotor (29) in mindestens einem Lager (36) des peripheren Rotors drehen kann, das von einem Stator (65) des peripheren Rotors getragen wird, der direkt oder indirekt fest mit dem Rahmen (2) der Motorpumpe verbunden ist, wobei der zentrale Rotor (3) der Motorpumpe ganz oder teilweise im Inneren (29) des peripheren Rotors angeordnet ist;
• mindestens Antifriktionsmittel (196), die der tangentiale Arm (22) auf seiner Fläche umfasst, die gegenüber der Auflagefläche des tangentialen Arms auf dem Schieber (23) angeordnet ist, wobei die Mittel (196) auf der Innenfläche des zylindrischen Gehäuses (32) des peripheren Rotors aufliegen.

2. Hydraulische Motorpumpe mit festem oder variablem Hubraum nach Anspruch 1, **dadurch gekennzeichnet, dass** der periphere Rotor (29) der Motorpumpe dazu gebracht wird, sich mit derselben Geschwindigkeit zu drehen wie der zentrale Rotor (3) der Motorpumpe, durch einen Winkelsynchronisationskranz (42) des peripheren Rotors, welcher in Rotation mit einem Winkelsynchronisationskranz (11) des zentralen Rotors, den der zentrale Rotor (3) der Motorpumpe umfasst, durch mindestens ein Winkelsynchronisationszahnrad (12) fest verbunden wird, das sich um mindestens eine Achse (81) des Winkelsynchronisationszahnrads dreht, die der Rahmen (2) der Motorpumpe umfasst.

3. Hydraulische Motorpumpe mit festem oder variablem Hubraum nach den Ansprüchen 1 und 2, **dadurch gekennzeichnet, dass** die Antifriktionsmittel (196) aus mindestens einer Antifriktionsrolle (28) des tangentialen Arms bestehen, die einerseits auf einer Rollbahn (26) des tangentialen Arms rollen kann, welche der tangentiale Arm (22) auf seiner Fläche umfasst, die gegenüber der Auflagefläche des tangentialen Arms auf dem Schieber (23) angeordnet ist, und andererseits auf einer Rollbahn (33) des peripheren Rotors, welche die Innenfläche des zylindrischen Gehäuses (32) des peripheren Rotors umfasst, wobei die Rolle (28) in ihrer Bewegung gleichzeitig in Bezug auf die Rollbahn (26) des tangentialen Arms und in Bezug auf die Rollbahn (33) des peripheren Rotors durch mindestens eine Rollenzahnplatte (27) des tangentialen Arms eingeschränkt wird, welche die Rollbahn (26) des tangentialen Arms umfasst, und durch mindestens einen Rollenkranz (34) des peripheren Rotors, den die Rollbahn (33) des peripheren Rotors umfasst, wobei die Zahnplatte (27) und der Kranz (34) gleichzeitig mit mindestens einem Zahnrad (87) der Rolle zusammenwirken, das die Rolle (28) umfasst.

4. Hydraulische Motorpumpe mit festem oder variablem Hubraum nach Anspruch 1, **dadurch gekennzeichnet, dass** die Antifriktionsmittel (196) aus mindestens einer Reibungsbacke (194) des tangentialen Arms bestehen, die der tangentiale Arm (22) auf seiner Fläche umfasst, welche gegenüber der Auflagefläche des tangentialen Arms auf dem Schieber (23) angeordnet ist, wobei die Backe (194) mit einer Reibungsbahn (195) des peripheren Rotors in Kontakt gelangen kann, welche die Innenfläche des zylindrischen Gehäuses (32) des peripheren Rotors umfasst.

5. Hydraulische Motorpumpe mit festem oder variablem Hubraum nach Anspruch 1, **dadurch gekennzeichnet, dass** der hydraulische Kolben (13) ein Kugelgelenk (17) zur Auflage des Schiebers auf dem hydraulischen Kolben auf seiner kreisförmigen Fläche umfasst, die von dem zentralen Rotor (3) der Motorpumpe am weitesten entfernt ist, wobei das Kugelgelenk (17) aus einer vertieften oder erhabenen Kegelstumpfform gebildet ist, die mit einem Kugelgelenk (20) zur Auflage des hydraulischen Kolbens auf dem Schieber zusammenwirkt, das der geführte Schieber (18) des hydraulischen Kolbens umfasst, wobei das Kugelgelenk (20) auch aus einer vertieften oder erhabenen Kegelstumpfform gebildet ist, während die beiden Kegelstumpfformen komplementär sind und eine Kugelgelenkverbindung zwischen dem Kolben (13) und dem Schieber (18) bilden.

6. Hydraulische Motorpumpe mit festem oder variablem Hubraum nach Anspruch 1, **dadurch gekennzeichnet, dass** der geführte Schieber (18) des hydraulischen Kolbens eine Stützstrebe (82) umfasst, die in der Verlängerung des hydraulischen Kolbens (13) platziert ist, und eine Stütztraverse (83), die mit der Strebe (82) fest verbunden und senkrecht zu dieser ist, wobei die Traverse (83) die Wirkungslinie (21) des Schiebers auf den tangentialen Arm trägt, während jedes ihrer beiden Enden in der Führung (19) des Schiebers gleiten kann.

7. Hydraulische Motorpumpe mit festem oder variablem Hubraum nach Anspruch 1, **dadurch gekennzeichnet, dass** der zentrale Rotor (3) der Motorpumpe eine zylindrische Aufnahme (84) einer Achse umfasst, in der eine Achse (24) des tangentialen Arms angeordnet ist, während der tangentiale Arm (22) von der Achse (24) durchquert wird, um in den zentralen Rotor (3) der Motorpumpe zu schwenken.

8. Hydraulische Motorpumpe mit festem oder variablem Hubraum nach Anspruch 1, **dadurch gekennzeichnet, dass** der zentrale Rotor (3) der Motorpumpe eine Rückholfeder (25) des tangentialen Arms umfasst, die einerseits auf dem Rotor (3) und andererseits auf dem tangentialen Arm (22) aufliegt.

9. Hydraulische Motorpumpe mit festem oder variablem Hubraum nach Anspruch 3, **dadurch gekennzeichnet, dass** die Rollbahn (33) des peripheren Rotors mindestens eine vertiefte oder erhabene Führungsschiene (85) umfasst, die mit mindestens einem vertieften oder erhabenen Führungshals (86) zusammenwirkt, den die Antifriktionsrolle (28) des tangentialen Arms umfasst.

10. Hydraulische Motorpumpe mit festem oder variablem Hubraum nach Anspruch 1, **dadurch gekennzeichnet, dass** das Lager (5) des zentralen Rotors einerseits eine innere Bahn (7) des Lagers des zentralen Rotors umfasst, die mit mindestens einem inneren Kranz (9) des Lagers des zentralen Rotors versehen ist, wobei die Bahn (7) mit dem zentralen Rotor (3) der Motorpumpe fest verbunden ist, und andererseits eine äußere Bahn (8) des Lagers des zentralen Rotors, die mit mindestens einem äußeren Kranz (10) des Lagers des zentralen Rotors versehen ist, wobei die Bahn (8) mit dem Rahmen (2) der Motorpumpe fest verbunden ist, während mindestens drei Rollen (6) des Lagers des zentralen Rotors gleichzeitig auf der inneren Bahn des Lagers des zentralen Rotors (7) und auf der äußeren Bahn (8) des Lagers des zentralen Rotors rollen können und dank mindestens eines Zahnrads (87) der Rolle in einer konstanten Distanz voneinander bleiben, das jede Rolle (6) des Lagers des zentralen Rotors umfasst und das mit dem inneren Kranz (9) und mit dem äußeren Kranz (10) zusammenwirkt.

11. Hydraulische Motorpumpe mit festem oder variablem Hubraum nach Anspruch 10, **dadurch gekennzeichnet, dass** die innere Bahn (7) des Lagers des zentralen Rotors und/oder die äußere Bahn (8) des Lagers des zentralen Rotors mindestens eine vertiefte oder erhabene Führungsschiene (85) umfasst, die mit mindestens einem vertieften oder erhabenen Führungshals (86) zusammenwirkt, den die Rollen (6) des Lagers des zentralen Rotors umfassen.

12. Hydraulische Motorpumpe mit festem oder variablem Hubraum nach Anspruch 1, **dadurch gekennzeichnet, dass** das Lager (36) des peripheren Rotors einerseits eine innere Bahn (38) des Lagers des peripheren Rotors umfasst, die mit mindestens einem inneren Kranz (40) des Lagers des peripheren Rotors versehen ist, wobei die Bahn (38) mit dem peripheren Rotor (29) der Motorpumpe fest verbunden ist, und andererseits eine äußere Bahn (39) des Lagers des peripheren Rotors, die mit mindestens einem äußeren Kranz (41) des Lagers des peripheren Rotors versehen ist, wobei die Bahn (39) mit dem Stator (65) des peripheren Rotors fest verbunden ist, während mindestens drei Rollen (37) des Lagers des peripheren Rotors gleichzeitig auf der inneren Bahn (38) des Lagers des peripheren Rotors und auf der äußeren Bahn (39) des Lagers des peripheren Rotors rollen können und dank mindestens eines Zahnrads (87) der Rolle in einer konstanten Distanz voneinander bleiben, das jede Rolle (37) des Lagers des peripheren Rotors umfasst und das mit dem inneren Kranz (40) und dem äußeren Kranz (41) zusammenwirkt.

13. Hydraulische Motorpumpe mit festem oder variablem Hubraum nach Anspruch 12, **dadurch gekennzeichnet, dass** die innere Bahn (38) des Lagers des peripheren Rotors und/oder die äußere Bahn (39) des Lagers des peripheren Rotors mindestens eine vertiefte oder erhabene Führungsschiene (85) umfasst/umfassen, die mit mindestens einem vertieften oder erhabenen Führungshals (86) zusammenwirkt, den die Rollen (37) des Lagers des peripheren Rotors umfassen.

14. Hydraulische Motorpumpe mit festem oder variablem Hubraum nach Anspruch 1, **dadurch gekennzeichnet, dass** der Einlass-Auslass-Verteiler (43) daran gehindert wird, sich mit dem zentralen Rotor (3) der Motorpumpe zu drehen und in Rotation in Bezug auf den Rahmen (2) der Motorpumpe durch mindestens einen Nocken oder eine Schubstange gehalten wird, der oder die direkt oder indirekt an dem Rahmen (2) der Motorpumpe befestigt ist.

15. Hydraulische Motorpumpe mit festem oder variablem Hubraum nach Anspruch 1, **dadurch gekennzeichnet, dass** der Einlass-Auslass-Verteiler (43) ein zylindrischer Stator (91) ist, der mit geringem Spiel in einem Statorzylinder (92) angeordnet ist, welcher im Zentrum des zentralen Rotors (3) der Motorpumpe und koaxial mit diesem Letzteren angebracht ist, wobei der Stator (91) eine innere Leitungskammer (55) umfasst, die einerseits mit der inneren Einlass-Auslass-Leitung (57) und andererseits mit einem Einlass-Auslass-Winkelkollektor (44) der inneren Leitung kommuniziert, die der Stator (91) an seinem Rand über einen inneren Einlass-Auslass-Kanal (53) des Verteilers umfasst, während der Stator (91) auch eine äußere Leitungskammer (56) umfasst, die einerseits mit der äußeren Einlass-Auslass-Leitung (58) und andererseits mit einem Einlass-Auslass-Winkelkollektor (89) der äußeren Leitung kommuniziert, den der Stator (91) auch an seinem Rand über einen anderen inneren Einlass-Auslass-Kanal (53) des Verteilers umfasst.

16. Hydraulische Motorpumpe mit festem oder variablem Hubraum nach Anspruch 15, **dadurch gekennzeichnet, dass** der zylindrische Stator (91), neben dem Einlass-Auslass-Winkelkollektor (44) der inneren Leitung, mindestens einen Ausgleichshals (90) für den radialen Druck der äußeren Leitung umfasst, der mit der Kammer (56) der äußeren Leitung über einen inneren Ausgleichskanal (54) des Verteilers kommuniziert, während der Stator (91) auch mindestens einen Ausgleichshals (45) für den radialen Druck der inneren Leitung umfasst, der mit der Kammer (55) der inneren Leitung über einen anderen inneren Ausgleichskanal (54) des Verteilers kommuniziert, wobei der Hals (45) neben dem Einlass-Auslass-Winkelkollektor (89) der äußeren Leitung angeordnet ist.

17. Hydraulische Motorpumpe mit festem oder variablem Hubraum nach Anspruch 15, **dadurch gekennzeichnet, dass** der zylindrische Stator (91) einen axialen Dichtungshals (93) in der Nähe mindestens eines seiner axialen Enden umfasst.

18. Hydraulische Motorpumpe mit festem oder variablem Hubraum nach Anspruch 1, **dadurch gekennzeichnet, dass** der Einlass-Auslass-Verteiler (43) ein axialer Stator (96) ist, der aus einem Verteilerflansch (97) und einem Ausgleichsflansch (98) besteht, die axial auf beiden Seiten des zentralen Rotors (3) der Motorpumpe jeweils in Bezug auf eine Verteilungsfläche (103) und eine Ausgleichsfläche (104) platziert sind, welche an dem Rotor (3) angebracht sind, wobei die Flansche (97, 98) mechanisch durch eine zentrale Nabe (99) des axialen Stators miteinander verbunden sind, die den zentralen Rotor (3) über einen Zylinder (92) des Stators durchquert, der im Zentrum des zentralen Rotors (3) und koaxial mit diesem Letzteren angebracht ist, wobei der Stator (96) eine Kammer (55) einer inneren Leitung umfasst, die einerseits mit der inneren Einlass-Auslass-Leitung (57) und andererseits mit einem Einlass-Auslass-Winkelkollektor (44) der inneren Leitung kommuniziert, der axial auf der Innenfläche des Verteilerflansches (97) über einen inneren Einlass-Auslass-Kanal (53) des Verteilers angebracht ist, während der Stator (96) auch eine Kammer (56) einer äußeren Leitung umfasst, die einerseits mit der äußeren Einlass-Auslass-Leitung (58) und andererseits mit einem Einlass-Auslass-Winkelkollektor (89) der äußeren Leitung kommuniziert, der auch axial auf der Innenfläche des Verteilerflansches (97) über einen anderen inneren Einlass-Auslass-Kanal (53) des Verteilers angebracht ist.

19. Hydraulische Motorpumpe mit festem oder variablem Hubraum nach Anspruch 18, **dadurch gekennzeichnet, dass** die Kammer (55) der inneren Leitung mit einem Ausgleichshals (100) für axialen Druck der inneren Leitung kommuniziert, der axial auf der Innenfläche des Ausgleichsflansches (98) über einen inneren Ausgleichskanal (54) des Verteilers angebracht ist, während die Kammer (56) der äußeren Leitung mit einem Ausgleichshals (101) für axialen Druck der äußeren Leitung kommuniziert, der auch axial auf der Innenfläche des Ausgleichsflansches (98) über einen anderen inneren Ausgleichskanal (54) des Verteilers angebracht ist.

20. Hydraulische Motorpumpe mit festem oder variablem Hubraum nach Anspruch 18, **dadurch gekennzeichnet, dass** der Verteilerflansch (97) und/oder der Ausgleichsflansch (98) einen radialen Dichtungshals (102) an mindestens einem ihrer radialen Enden umfasst/umfassen.

21. Hydraulische Motorpumpe mit festem oder variablem Hubraum nach Anspruch 18, **dadurch gekennzeichnet, dass** die zentrale Nabe (99) des axialen Stators einen axialen Dichtungshals (93) an mindestens einem ihrer axialen Enden oder an einem beliebigen Punkt ihrer Länge umfasst.

22. Hydraulische Motorpumpe mit festem oder variablem Hubraum nach einem der Ansprüche 15, 16, 17, 18, 19, 20 oder 21, **dadurch gekennzeichnet, dass** der gesamte oder ein Teil von dem Einlass-Auslass-Winkelkollektor (44) der inneren Leitung, dem Einlass-Auslass-Winkelkollektor (89) der äußeren Leitung, dem Ausgleichshals (90) für radialen Druck der äußeren Leitung, dem Ausgleichshals (45) für radialen Druck der inneren Leitung, dem axialen Dichtungshals (93), dem Ausgleichshals (100) für axialen Druck der inneren Leitung, dem Ausgleichshals (101) für axialen Druck der äußeren Leitung oder dem radialen Dichtungshals (102) mit einem Segment (46) des Halses des Verteilers versehen ist.

23. Hydraulische Motorpumpe mit festem oder variablem Hubraum nach Anspruch 22, **dadurch gekennzeichnet, dass** das Segment (46) des Halses des Verteilers mindestens eine Flanke (94) des Segments aufweist, die lateral eine Dichtheit mit dem zylindrischen Stator (91) oder dem axialen Stator (96) herstellt, und mindestens eine Kontaktlinie (49) des Segments, die einerseits mit dem zentralen Rotor (3) der Motorpumpe in Kontakt gelangt, um eine Dichtheit herzustellen, und die andererseits einem Druck ausgesetzt wird, der dazu tendiert, sie auf den Rotor (3) aufgrund des Schubs zu drücken, der von einem druckbeaufschlagten Öl (114) der Motorpumpe, das der zylindrische Stator (91) oder der axiale Stator (96) enthält, auf das Segment (46) des Halses des Verteilers ausgeübt wird, wobei der Druck aufgrund einer geringfügig vorstehenden Fläche (161) begrenzt wird, die dem Druck des Öls (114) ausgesetzt wird und die das Segment (46) aufweist, was zu einer Schulter (50) zur Übertragung des Drucks des Segments führt, die das Segment (46) umfasst und die mit einer anderen Schulter (162) zusammenwirkt, welche in dem zylindrischen Stator (91) oder in dem axialen Stator (96) angebracht ist.

24. Hydraulische Motorpumpe mit festem oder variablem Hubraum nach Anspruch 22, **dadurch gekennzeichnet, dass** das Segment (46) des Halses des Verteilers mit dem zentralen Rotor (3) der Motorpumpe durch eine Feder (47) am Boden des Halses des Segments in Kontakt gehalten wird.

25. Hydraulische Motorpumpe mit festem oder variablem Hubraum nach Anspruch 22, **dadurch gekennzeichnet, dass** das Segment (46) des Halses des Verteilers aus zwei Halbsegmenten (95) besteht, die jeweils mindestens eine Flanke (94) des Segments aufweisen, welche mit dem zylindrischen Stator (91) oder mit dem axialen Stator (96) durch eine Bremsspreizfeder (48) des Segments in Kontakt gehalten wird.

26. Hydraulische Motorpumpe mit festem oder variablem Hubraum nach Anspruch 1, **dadurch gekennzeichnet, dass** die innere Einlass-Auslass-Leitung (57) in dem Einlass-Auslass-Verteiler (43) und/oder in dem Rahmen (2) der Motorpumpe durch eines der Enden der Leitung (57) mittels mindestens eines festen Verschlusskugellagers (59) der Leitung und/oder mindestens eines gleitenden Verschlusskugellagers (60) der Leitung aufgenommen ist, wobei das Kugellager (59, 60) eine Auflagefläche (105) des Verschlusskugellagers aufweist, die auf einem Sitz (64) des Verschlusskugellagers liegen kann.

27. Hydraulische Motorpumpe mit festem oder variablem Hubraum nach Anspruch 26, **dadurch gekennzeichnet, dass** das feste Verschlusskugellager (59) der Leitung mit seinem Sitz (64) des Verschlusskugellagers durch eine Feder des Verschlusskugellagers in Kontakt gehalten wird, der einerseits auf dem Einlass-Auslass-Verteiler (43) oder auf dem Rahmen (2) der Motorpumpe oder auf einem gleitenden Verschlusskugellager (60) der Leitung und andererseits direkt oder nicht auf dem festen Verschlusskugellager (59) aufliegt.

28. Hydraulische Motorpumpe mit festem oder variablem Hubraum nach Anspruch 26, **dadurch gekennzeichnet, dass** das gleitende Verschlusskugellager (60) der Leitung aus mindestens einem halben gleitenden Verschlusskugellager (107) besteht, das von der inneren Einlass-Auslass-Leitung (57) axial durchquert wird, wobei das halbe Kugellager (107) sich axial und dicht in Bezug auf die innere Leitung (57) translatorisch bewegen kann, während das halbe Kugellager (107) mit seinem Sitz (64) des Verschlusskugellagers durch eine Feder (106) des Verschlusskugellagers in Kontakt gehalten wird, die einerseits auf dem Einlass-Auslass-Verteiler (43) oder auf dem Rahmen (2) der Motorpumpe oder auf einem anderen halben gleitenden Verschlusskugellager (107) und andererseits direkt oder nicht auf dem halben gleitenden Verschlusskugellager (107) aufliegt.

29. Hydraulische Motorpumpe mit festem oder variablem Hubraum nach Anspruch 1, **dadurch gekennzeichnet, dass** die äußere Einlass-Auslass-Leitung (58) in dem Einlass-Auslass-Verteiler (43) und/oder in dem Rahmen (2) der Motorpumpe durch eines der Enden der Leitung (58) mittels mindestens eines festen Verschlusskugellagers (59) der Leitung aufgenommen ist, wobei das Kugellager (59, 60) eine Auflagefläche (105) des Verschlusskugellagers aufweist, die auf einem Sitz (64) des Verschlusskugellagers liegen kann.

30. Hydraulische Motorpumpe mit festem oder variablem Hubraum nach einem der Ansprüche 15 oder 18, **dadurch gekennzeichnet, dass** die Kammer (55) der inneren Leitung durch einen Stopfen (66) der inneren Leitung verschlossen ist.

31. Hydraulische Motorpumpe mit festem oder variablem Hubraum nach einem der Ansprüche 15 oder 18, **dadurch gekennzeichnet, dass** die Kammer (56) der äußeren Leitung durch einen Stopfen (67) der äußeren Leitung verschlossen ist, die von der äußeren Einlass-Auslass-Leitung (58) durchquert wird.

32. Hydraulische Motorpumpe mit festem oder variablem Hubraum nach Anspruch 1, **dadurch gekennzeichnet, dass** die innere Einlass-Auslass-Leitung (57) gänzlich oder teilweise im Inneren der äußeren Einlass-Auslass-Leitung (58) angeordnet ist.

33. Hydraulische Motorpumpe mit festem oder variablem Hubraum nach Anspruch 1, **dadurch gekennzeichnet, dass** der Rahmen (2) der Motorpumpe ein Verbindungsplanetenrad (62) umfasst, in dem die innere Einlass-Auslass-Leitung (57) und/oder die äußere Einlass-Auslass-Leitung (58) aufgenommen sind.

34. Hydraulische Motorpumpe mit festem oder variablem Hubraum nach den Ansprüche 1 und 2, **dadurch gekennzeichnet, dass** der Stator (65) des peripheren Rotors an der Achse (81) des Winkelsynchronisationszahnrads angelenkt ist, um die er sich unter der Einwirkung eines Servomotors (68) zur Hubraumvariation drehen kann.

35. Hydraulische Motorpumpe mit festem oder variablem Hubraum nach Anspruch 34, **dadurch gekennzeichnet, dass** der Servomotor (68) zur Hubraumvariation ein Servomotor-Drehelektromotor (30) ist, der ein Ritzel (108) mit einem Kranz zur Hubraumvariation - in eine Richtung oder in eine andere Richtung und mit Hilfe eines Servomotor-Untersetzungsgetriebes (31) - drehen kann, wobei sich das Ritzel (108) in einem Lager drehen kann, das in dem Rahmen (2) der Motorpumpe aufgenommen ist, und in Rotation einen Kranz (109) zur Hubraumvariation mitführen kann, der mit dem Stator (65) des peripheren Rotors fest verbunden ist, wobei der Teilkreis des Kranzes (109) auf die Achse (81) des Winkelsynchronisationszahnrads zentriert ist.

36. Hydraulische Motorpumpe mit festem oder variablem Hubraum nach den Ansprüchen 2 und 34, **dadurch gekennzeichnet, dass** Phasenkorrekturmittel (197) zwischen dem Winkelsynchronisationskranz (42) des peripheren Rotors und dem Winkelsynchronisationskranz (11) des zentralen Rotors angeordnet sind.

37. Hydraulische Motorpumpe mit festem oder variablem Hubraum nach Anspruch 36, **dadurch gekennzeichnet, dass** die Phasenkorrekturmittel (197) aus mindestens einem Phasenkorrektur-Zahnradvorgelege (198) bestehen, das mindestens ein Phasenkorrekturzahnrad (199) umfasst, welches sich um mindestens eine Phasenkorrekturachse (200) dreht, fest verbunden mit dem Stator (65) des peripheren Rotors, wobei das Zahnradvorgelege (198) zwischen dem Winkelsynchronisationskranz (42) des peripheren Rotors und dem Winkelsynchronisationszahnrad (12) angeordnet ist.

38. Hydraulische Motorpumpe mit festem oder variablem Hubraum nach Anspruch 1, **dadurch gekennzeichnet, dass** die innere Einlass-Auslass-Leitung (57) und die äußere Einlass-Auslass-Leitung (58) jeweils direkt oder indirekt mit dem Einlass oder dem Auslass mindestens einer zweiten hydraulischen Motorpumpe (125) mit festem oder variablem Hubraum verbunden sind, wobei die hydraulische Motorpumpe (1) mit festem oder variablem Hubraum und die zweite hydraulische Motorpumpe (125) mit festem oder variablem Hubraum gemeinsam eine hydraulische Getriebevorrichtung (63) bilden.

39. Hydraulische Motorpumpe mit festem oder variablem Hubraum nach Anspruch 38, **dadurch gekennzeichnet, dass** die Zapfwelle (4) des zentralen Rotors der Motorpumpe (1) mit festem oder variablem Hubraum mechanisch mit mindestens einem Antriebsmotor (123) verbunden ist, den ein Automobilfahrzeug (110) umfasst, während die zweite hydraulische Motorpumpe (125) mit festem oder variablem Hubraum mechanisch mit mindestens einem Antriebsrad oder einer Antriebskette (124) verbunden ist, die das Fahrzeug (110) umfasst, oder umgekehrt.

40. Hydraulische Motorpumpe mit festem oder variablem Hubraum nach einem der Ansprüche 38 oder 39, **dadurch gekennzeichnet, dass** die innere Einlass-Auslass-Leitung (57) mit mindestens einem Hochdruckakkumulator (71) durch mindestens ein Hochdruckakkumulatorventil (112) der inneren Leitung verbunden werden kann.

41. Hydraulische Motorpumpe mit festem oder variablem Hubraum nach einem der Ansprüche 38 oder 39, **dadurch gekennzeichnet, dass** die äußere Einlass-Auslass-Leitung (58) mit mindestens einem Hochdruckakkumulator (71) durch mindestens ein Hochdruckakkumulatorventil (128) der äußeren Leitung verbunden werden kann.

42. Hydraulische Motorpumpe mit festem oder variablem Hubraum nach einem der Ansprüche 38 oder 39, **dadurch gekennzeichnet, dass** die innere Einlass-Auslass-Leitung (57) mit mindestens einem Niederdruckakkumulator (118) durch mindestens ein Niederdruckakkumulatorventil (129) der inneren Leitung verbunden werden kann.

43. Hydraulische Motorpumpe mit festem oder variablem Hubraum nach einem der Ansprüche 38 oder 39, **dadurch gekennzeichnet, dass** die äußere Einlass-Auslass-Leitung (58) mit mindestens einem Niederdruckakkumulator (118) durch mindestens ein Niederdruckakkumulatorventil (130) der äußeren Leitung verbunden werden kann.

44. Hydraulische Motorpumpe mit festem oder variablem Hubraum nach einem der Ansprüche 40, 41, 42 und 43, **dadurch gekennzeichnet, dass** der Hochdruckakkumulator (71) und/oder der Niederdruckakkumulator (118) mindestens einen Akkumulatortrennkolben (72) umfasst/umfassen, der sich dicht in einem Akkumulatorblindzylinder (113) bewegen kann, wobei der Kolben (72) mit dem Zylinder (113) eine Gaskammer (116), die ein druckbeaufschlagtes Gas (115) enthält, und eine Ölkammer (117), die ein Öl (114) der Motorpumpe enthält, abgrenzt, wobei diese letztere Kammer (117) mit der inneren Einlass-Auslass-Leitung (57) und/oder der äußeren Einlass-Auslass-Leitung (58) verbunden werden kann.

45. Hydraulische Motorpumpe mit festem oder variablem Hubraum nach Anspruch 44, **dadurch gekennzeichnet, dass** die Ölkammer (117) eine Akkumulatorverschlussklappe (73) umfasst, die der Akkumulatortrennkolben (72) auf einen Sitz (74) der Akkumulatorklappe setzen kann, indem er auf eine Klappenfeder (76) mit großer Steifheit drückt, die zwischen dem Kolben (72) und der Klappe (73) angeordnet ist, um die Kammer (117) der inneren Einlass-Auslass-Leitung (57) und/oder der äußeren Einlass-Auslass-Leitung (58) dicht zu isolieren, wobei die Klappe (73) - gegen die Klappenfeder (76) mit großer Steifheit - mit einer Klappenfeder (75) mit geringer Steifheit zusammenwirkt, die gespannt ist, die Klappe (73) vom Sitz (74) zu entfernen.

46. Hydraulische Motorpumpe mit festem oder variablem Hubraum nach Anspruch 45, **dadurch gekennzeichnet, dass** der Akkumulatortrennkolben (72) auf die Klappenfeder (76) mit hoher Steifheit mit Hilfe eines Schiebers (77) der Feder mit großer Steifheit drücken kann, der translatorisch in Längsrichtung von einer Führung (78) der Klappe und des Schiebers geführt wird, fest verbunden mit dem Hochdruckakkumulator (71) und/oder dem Niederdruckakkumulator (118), wobei die Klappenführung (78) auch die Akkumulatorverschlussklappe (73) führt und einen Schieberanschlag (79) umfasst, der die maximale Bewegung des Schiebers (77) der Feder mit großer Steifheit in die Richtung des Akkumulatortrennkolbens (72) definiert.

47. Hydraulische Motorpumpe mit festem oder variablem Hubraum nach Anspruch 46, **dadurch gekennzeichnet, dass** die Führung (78) der Klappe und des Schiebers mindestens eine radiale Öffnung (80) der Klappenführung umfasst, welche die Ölkammer (117) mit dem Sitz der Akkumulatorklappe (74) derart verbindet, dass es dem Öl (114) der Motorpumpe gestattet wird, zwischen der inneren Einlass-Auslass-Leitung (57) und/oder der äußeren Einlass-Auslass-Leitung (58) und der Ölkammer (117) zu zirkulieren.

48. Hydraulische Motorpumpe mit festem oder variablem Hubraum nach einem der Ansprüche 36, 37, 38 und 39, **dadurch gekennzeichnet, dass** der Hochdruckakkumulator (71) und/oder der Niederdruckakkumulator (118) mit der inneren Einlass-Auslass-Leitung (57) und/oder der äußeren Einlass-Auslass-Leitung (58) mit Hilfe eines Akkumulatorverriegelungsventils (145) verbunden ist/sind, das dicht den Akkumulator (71, 118) gegen die innere Leitung (57) und/oder gegen die äußere Leitung (58) isolieren kann.

49. Hydraulische Motorpumpe mit festem oder variablem Hubraum nach einem der Ansprüche 42 oder 43, **dadurch gekennzeichnet, dass** der Niederdruckakkumulator (118) mit einem Öl (114) der Motorpumpe durch mindestens eine Niederdruckpumpe (119) versorgt wird, die von einem Niederdruckpumpenmotor (120) angetrieben wird, wobei die Einlassleitung der Pumpe (119) mit einem Motorpumpen-Ölbehälter (121) verbunden ist, während ihre Auslassleitung mit dem Akkumulator (118) verbunden ist.

50. Hydraulische Motorpumpe mit festem oder variablem Hubraum nach einem der Ansprüche 38 oder 39, **dadurch gekennzeichnet, dass** die innere Einlass-Auslass-Leitung (57) durch ein Tauscher-Kühler-Ventil (131) der inneren Leitung mit mindestens einer inneren Tauscher-Kühler-Leitung (135) verbunden sein kann, die einen Ladungsverlust-Tauscher-Kühler (126) umfasst, wobei die Leitung (135) mindestens eine äußere Kühler-Wärmetauschfläche (136) umfasst, die mit einem Kühlgas oder einer Kühlflüssigkeit in Kontakt steht.

51. Hydraulische Motorpumpe mit festem oder variablem Hubraum nach einem der Ansprüche 38 oder 39, **dadurch gekennzeichnet, dass** die äußere Einlass-Auslass-Leitung (58) durch ein Tauscher-Kühler-Ventil (132) der äußeren Leitung mit mindestens einer inneren Tauscher-Kühler-Leitung (135) verbunden sein kann, die einen Ladungsverlust-Tauscher-Kühler (126) umfasst, wobei die Leitung (135) mindestens eine äußere Kühler-Wärmetauschfläche (136) umfasst, die mit einem Kühlgas oder einer Kühlflüssigkeit in Kontakt steht.

52. Hydraulische Motorpumpe mit festem oder variablem Hubraum nach einem der Ansprüche 38 oder 39, **dadurch gekennzeichnet, dass** die innere Einlass-Auslass-Leitung (57) mit einem hydraulischen Hilfsmotor (127) durch ein Ventil (133) des Hilfsmotors der inneren Leitung verbunden sein kann.

53. Hydraulische Motorpumpe mit festem oder variablem Hubraum nach einem der Ansprüche 38 oder 39, **dadurch gekennzeichnet, dass** die äußere Einlass-Auslass-Leitung (58) mit einem hydraulischen Hilfsmotor (127) durch ein Ventil des Hilfsmotors der äußeren Leitung verbunden sein kann.

54. Hydraulische Motorpumpe mit festem oder variablem Hubraum nach einem der Ansprüche 52 oder 53, **dadurch gekennzeichnet, dass** der hydraulische Hilfsmotor (127) aus mindestens einer hydraulischen Turbine (137) besteht, die auf einer Welle der hydraulischen Turbine (138) montiert ist und die mindestens eine Schaufel (139) der hydraulischen Turbine umfasst, auf welche mindestens ein Injektor (140) der hydraulischen Turbine axial und/oder radial einen Strahl eines Öls (114) der Motorpumpe ausstoßen kann.

55. Hydraulische Motorpumpe mit festem oder variablenm Hubraum nach einem der Ansprüche 34, 38, 39, 40, 41, 42, 43, 48, 49, 50, 51, 52 und 53, **dadurch gekennzeichnet, dass** diese einen Rechner (70) zur Steuerung der Motorpumpe umfasst, der den Servomotor (68) zur Hubraumvariation steuert, um den Hubraum der hydraulischen Motorpumpe (1) mit festem oder variablem Hubraum zu steuern, einschließlich jener, die Bestandteil der hydraulischen Getriebevorrichtung (63) ist, egal ob diese Letztere in dem Automobilfahrzeug (110) integriert ist oder nicht, wobei der Rechner (70) auch das Ventil (112) des Hochdruckakkumulators der inneren Leitung und/oder das Ventil (128) des Hochdruckakkumulators der äußeren Leitung und/oder das Ventil (129) des Niederdruckakkumulators der inneren Leitung und/oder das Ventil (130) des Niederdruckakkumulators der äußeren Leitung und/oder das Akkumulatorverriegelungsventil (145) und/oder den Niederdruckpumpenmotor (120) und/oder das Ventil (131) des Tauscher-Kühlers der inneren Leitung und/oder das Ventil (132) des Tauscher-Kühlers der äußeren Leitung und/oder das Ventil (133) des Hilfsmotors der inneren Leitung und/oder das Ventil des Hilfsmotors der äußeren Leitung steuern kann.

56. Hydraulische Motorpumpe mit festem oder variablem Hubraum nach Anspruch 55, **dadurch gekennzeichnet, dass** der Rechner zur Steuerung der Motorpumpe (70) durch verdrahtete, leuchtende oder elektromagnetische Informationsübertragungsmittel mit mindestens einem Schalthebel (146) und/oder mindestens einem Schaltpaddel (147) und/oder mindestens einem Schaltknopf (148) und/oder einem Kupplungspedal (149) und/oder einem Bremspedal (150) und/oder einem Gaspedal (151) verbunden ist, die ein Cockpit (152) umfasst, welches das Automobilfahrzeug (110) umfasst.

57. Hydraulische Motorpumpe mit festem oder variablem Hubraum nach Anspruch 39 und 55, **dadurch gekennzeichnet, dass** der Rechner (70) zur Steuerung der Motorpumpe durch verdrahtete, leuchtende oder elektromagnetische Informationsübertragungsmittel mit mindestens einem Knopf oder Regler (153) zur Übertragungsauslegung und/oder einem Bildschirm (154) zur Übertragungsauslegung und/oder einem Mikrophon (155) zur Übertragungsauslegung und/oder einem Lautsprecher (156) zur Übertragungsauslegung verbunden ist, die ein Cockpit (152) umfasst, welches das Automobilfahrzeug (110) umfasst.

## Claims

1. Hydraulic motor-pump unit with fixed or variable displacement, comprising:
• at least one central motor-pump rotor (3) which comprises a central rotor power take-off (4) and which is housed on or in a motor-pump casing (2), the said rotor (3) being able to rotate in at least one central rotor bearing (5) that the said casing (2) comprises while remaining in the most fluidtight possible contact with at least one inlet-outlet distributor (43) kept approximately stationary with respect to the said casing (2), **characterized in that the** said distributor (43) being able to connect at least one hydraulic cylinder (14) formed radially or tangentially in the said rotor (3) with at least one inlet-outlet internal duct (57) and at least one inlet-outlet external duct (58) via a central rotor inlet-outlet internal passage (15) and a central rotor inlet-outlet orifice (16) respectively, these being formed in the motor-pump central rotor (3), one of the ends of the said ducts (57, 58) being anchored directly or indirectly and in a fluidtight manner in the motor-pump casing (2) while the other end of the said ducts (57, 58) is anchored in a fluidtight manner in the inlet-outlet distributor (43);
and **in that** the hydraulic motor-pump unit with fixed or variable displacement comprises:
• at least one hydraulic piston (13) able to move translationally in the hydraulic cylinder (14) and able to push a hydraulic piston guided tappet (18) or being able to be pushed by the latter, the said tappet (18) being guided in translation by a tappet guide (19) formed radially or tangentially in the motor-pump central rotor (3);
• at least one tangential arm (22) of which one of the ends is articulated in the motor-pump central rotor (3) while the other end comprises a tangentialarm-on-tappet bearing face (23) which can exert a force on a tappet-on-tangential-arm line of action (21) that the hydraulic piston guided tappet (18) comprises, the direction of the said force being approximately tangential to the axis of rotation of the said arm (22);
• at least one motor-pump peripheral rotor (29) made up of at least one peripheral rotor cylindrical case (32) of which one of the ends at least ends in a peripheral rotor flange (35), the said peripheral rotor (29) being able to rotate in at least one peripheral rotor bearing (36) borne by a peripheral rotor stator (65) which is directly or indirectly secured to the motor-pump casing (2), the motor-pump central rotor (3) being fully or partially housed inside the said peripheral rotor (29);
• at least antifriction means (196) that the tangential arm (22) comprises on its face situated opposite to the tangential-arm-on-tappet bearing face (23), the said means (196) bearing on the internal surface of the peripheral rotor cylindrical case (32).

2. Hydraulic motor-pump unit with fixed or variable displacement according to Claim 1, **characterized in that the** motor-pump peripheral rotor (29) is forced to rotate at the same speed as the motor-pump central rotor (3) by a peripheral rotor angular synchronization ring gear (42) secured in terms of rotation to a central rotor angular synchronization ring gear (11) that the motor-pump central rotor (3) comprises by at least one angular synchronization pinion (12) rotating about at least one angular synchronization pinion spindle (81) that the motor-pump casing (2) comprises.

3. Hydraulic motor-pump unit with fixed or variable displacement according to Claims 1 and 2, **characterized in that the** antifriction means (196) are made up of at least one tangential arm antifriction roller (28) which can roll, on the one hand, along a tangential arm runway track (26) that the tangential arm (22) comprises on its face situated opposite to the tangential-arm-on-tappet bearing face (23) and, on the other hand, along a peripheral rotor runway track (33) that the internal surface of the peripheral rotor cylindrical case (32) comprises, the said roller (28) being limited in its movement both with respect to the tangential arm runway track (26) and with respect to the peripheral rotor runway track (33) by at least one tangential arm roller rack (27) that the tangential arm runway track (26) comprises and by at least one peripheral rotor roller ring gear (34) that the peripheral roller runway track (33) comprises, the said rack (27) and the said ring gear (34) collaborating simultaneously with at least one roller pinion (87) that the said roller (28) comprises.

4. Hydraulic motor-pump unit with fixed or variable displacement according to Claim 1, **characterized in that the** antifriction means (196) are made up of at least one tangential arm friction pad (194) that the tangential arm (22) comprises on its face situated opposite to the tangential-arm-on-tappet bearing face (23), the said pad (194) being able to come into contact with a peripheral rotor friction track (195) that the internal surface of the peripheral rotor cylindrical case (32) comprises.

5. Hydraulic motor-pump unit with fixed or variable displacement according to Claim 1, **characterized in that the** hydraulic piston (13) comprises a tappet-on-hydraulic-piston bearing ball joint component (17) on its circular face that is furthest from the motor-pump central rotor (3), the said ball joint component (17) being made up of a recessed or raised truncated spherical shape which collaborates with a hydraulic-piston-on-tappet bearing ball joint component (20) that the hydraulic piston guided tappet (18) comprises, the said ball joint component (20) also being made up of a recessed or raised truncated spherical shape, while the two truncated spherical shapes complement one another and make a ball-jointed connection between the said piston (13) and the said tappet (18).

6. Hydraulic motor-pump unit with fixed or variable displacement according to Claim 1, **characterized in that the** hydraulic piston guided tappet (18) comprises a strut (82) positioned in the continuation of the hydraulic piston (13) and a crossbrace (83) mounted securely to the said strut (82) and at right angles thereto, the said crossbrace (83) carrying the tappet-on-tangential-arm line of action (21) while each of its two ends may slide in the tappet guide (19).

7. Hydraulic motor-pump unit with fixed or variable displacement according to Claim 1, **characterized in that the** motor-pump central rotor (3) comprises a cylindrical spindle housing (84) in which is housed a tangential arm spindle (24) while the tangential arm (22) has the said spindle (24) passing through it so as to be articulated in the motor-pump central rotor (3).

8. Hydraulic motor-pump unit with fixed or variable displacement according to Claim 1, **characterized in that the** motor-pump central rotor (3) comprises a tangential arm return spring (25) which bears, on the one hand, on the said rotor (3) and, on the other hand, on the tangential arm (22).

9. Hydraulic motor-pump unit with fixed or variable displacement according to Claim 3, **characterized in that the** peripheral rotor runway track (33) comprises at least one recessed or projecting guiderail (85) which collaborates with at least one recessed or projecting guide groove (86) that the tangential arm antifriction roller (28) comprises.

10. Hydraulic motor-pump unit with fixed or variable displacement according to Claim 1, **characterized in that the** central rotor bearing (5) comprises, on the one hand, a central rotor bearing inner track (7) provided with at least one central rotor bearing inner ring gear (9), the said track (7) being secured to the motor-pump central rotor (3) and, on the other hand, a central rotor bearing outer track (8) provided with at least one central rotor bearing outer ring gear (10), the said track (8) being secured to the motor-pump casing (2), while at least three central rotor bearing rollers (6) can roll simultaneously on the central rotor bearing inner track (7) and on the central rotor bearing outer track (8) and remain a constant distance apart by virtue of at least one roller pinion (87) that each central rotor bearing roller (6) comprises and which collaborates with the said inner (9) and outer (10) ring gears.

11. Hydraulic motor-pump unit with fixed or variable displacement according to Claim 10, **characterized in that the** central rotor bearing inner track (7) and/or the central rotor bearing outer track (8) comprises at least one recessed or projecting guiderail (85) which collaborates with at least one recessed or projecting guide groove (86) that the central rotor bearing rollers (6) comprise.

12. Hydraulic motor-pump unit with fixed or variable displacement according to Claim 1, **characterized in that the** peripheral rotor bearing (36) comprises, on the one hand, a peripheral rotor bearing inner track (38) provided with at least one peripheral rotor bearing inner ring gear (40), the said track (38) being secured to the motor-pump peripheral rotor (29) and, on the other hand, a peripheral rotor bearing outer track (39) equipped with at least one peripheral rotor bearing outer ring gear (41), the said track (39) being secured to the peripheral rotor stator (65), while at least three peripheral rotor bearing rollers (37) can roll simultaneously along the peripheral rotor bearing inner track (38) and along the peripheral rotor bearing outer track (39) and remain a constant distance apart by virtue of at least one roller pinion (87) that each peripheral rotor bearing roller (37) comprises and which collaborates with the said inner (40) and outer (41) ring gears.

13. Hydraulic motor-pump unit with fixed or variable displacement according to Claim 12, **characterized in that the** peripheral rotor bearing inner track (38) and/or the peripheral rotor bearing outer track (39) comprises at least one recessed or projecting guiderail (85) which collaborates with at least one recessed or projecting guide groove (86) that the peripheral rotor bearing rollers (37) comprise.

14. Hydraulic motor-pump unit with fixed or variable displacement according to Claim 1, **characterized in that the** inlet-outlet distributor (43) is prevented from rotating with the motor-pump central rotor (3) and is restrained in terms of rotation with respect to the motor-pump casing (2) by at least one lug or link directly or indirectly fixed to the motor-pump casing (2).

15. Hydraulic motor-pump unit with fixed or variable displacement according to Claim 1, **characterized in that the** inlet-outlet distributor (43) is a cylindrical stator (91) housed with a small clearance in a stator cylinder (92) formed at the centre of the motor-pump central rotor (3) and coaxial therewith, the said stator (91) enclosing an internal duct chamber (55) which communicates, on the one hand, with the inlet-outlet internal duct (57) and, on the other hand, with an internal duct inlet-outlet angular manifold (44) that the said stator (91) comprises at its periphery via a distributor inlet-outlet internal passage (53), whereas the said stator (91) also encloses an external duct chamber (56) which communicates, on the one hand, with the inlet-outlet external duct (58) and, on the other hand, with an external duct inlet-outlet angular manifold (89) that the said stator (91) also comprises at its periphery via another distributor inlet-outlet internal passage (53).

16. Hydraulic motor-pump unit with fixed or variable displacement according to Claim 15, **characterized in that the** cylindrical stator (91) comprises, next to the internal duct inlet-outlet angular manifold (44), at least one external duct radial force equalizing groove (90) which communicates with the external duct chamber (56) via a distributor equalizing internal passage (54) while the said stator (91) also comprises at least one internal duct radial force equalizing groove (45) which communicates with the internal duct chamber (55) via another distributor equalizing internal passage (54), the said groove (45) being situated next to the external duct inlet-outlet angular manifold (89).

17. Hydraulic motor-pump unit with fixed or variable displacement according to Claim 15, **characterized in that the** cylindrical stator (91) comprises an axial sealing groove (93) near at least one of its axial ends.

18. Hydraulic motor-pump unit with fixed or variable displacement according to Claim 1, **characterized in that the** inlet-outlet distributor (43) is an axial stator (96) made up of a distribution flange (97) and of an equalizing flange (98), which flanges are positioned axially one on each side of the motor-pump central rotor (3) respectively facing a distribution face (103) and an equalizing face (104) formed on the said rotor (3), the said flanges (97, 98) being mechanically connected to one another by an axial stator central hub (99) which passes axially through the said central rotor (3) via a stator cylinder (92) formed at the centre of the said central rotor (3) and coaxial therewith, the said stator (96) enclosing an internal duct chamber (55) which communicates on the one hand with the inlet-outlet internal duct (57) and, on the other hand, with an internal duct inlet-outlet angular manifold (44) formed axially on the internal face of the distribution flange (97) via a distributor inlet-outlet internal passage (53), while the said stator (96) also encloses an external duct chamber (56) which communicates on the one hand with the inlet-outlet external duct (58) and, on the other hand, with an external duct inlet-outlet angular manifold (89) also formed axially on the internal face of the distribution flange (97) via another distributor inlet-outlet internal passage (53).

19. Hydraulic motor-pump unit with fixed or variable displacement according to Claim 18, **characterized in that the** internal duct chamber (55) communicates with an internal duct axial force equalizing groove (100) formed axially on the internal face of the equalizing flange (98) via a distributor equalizing internal passage (54), while the external duct chamber (56) communicates with an external duct axial force equalizing groove (101) likewise formed axially on the internal face of the equalizing flange (98) via another distributor equalizing internal passage (54).

20. Hydraulic motor-pump unit with fixed or variable displacement according to Claim 18, **characterized in that the** distribution flange (97) and/or the equalizing flange (98) comprises a radial sealing groove (102) at least at one of its radial ends.

21. Hydraulic motor-pump unit with fixed or variable displacement according to Claim 18, **characterized in that** the axial stator central hub (99) comprises an axial sealing groove (93) at least at one of its axial ends or at some point along its length.

22. Hydraulic motor-pump unit with fixed or variable displacement according to any one of Claims 15, 16, 17, 18, 19, 20 or 21, **characterized in that** all or part of the internal duct inlet-outlet angular manifold (44), of the external duct inlet-outlet angular manifold (89), of the external duct radial force equalizing groove (90), of the internal duct radial force equalizing groove (45), of the axial sealing groove (93), of the internal duct axial force equalizing groove (100), of the external duct axial force equalizing groove (101) or of the radial sealing groove (102) is equipped with a distributor groove sealing ring (46).

23. Hydraulic motor-pump unit with fixed or variable displacement according to Claim 22, **characterized in that the** distributor groove sealing ring (46) has at least one sealing ring flank (94) which laterally establishes sealing with the cylindrical stator (91) or the axial stator (96), and at least one sealing ring line of contact (49) which, on the one hand, comes into contact with the motor-pump central rotor (3) to form a seal and which, on the other hand, is subjected to a force that tends to press it firmly against the said rotor (3) because of the thrust exerted by a pressurized motor-pump oil (114) that the cylindrical stator (91) or the axial stator (96) contains on the distributor groove sealing ring (46), the said force being limited on account of the small projected surface area (161) subjected to the pressure of the said oil (114) that the said sealing ring (46) presents, which results from a sealing ring load reacting shoulder (50) that the said sealing ring (46) comprises collaborating with another shoulder (162) formed in the cylindrical stator (91) or in the axial stator (96).

24. Hydraulic motor-pump unit with fixed or variable displacement according to Claim 22, **characterized in that the** distributor groove sealing ring (46) is kept in contact with the motor-pump central rotor (3) by a sealing ring groove bottom spring (47).

25. Hydraulic motor-pump unit with fixed or variable displacement according to Claim 22, **characterized in that** the distributor groove sealing ring (46) consists of two half-sealing-rings (95), each of which have at least one sealing ring flank (94) kept in contact with the cylindrical stator (91) or with the axial stator (96) by a sealing ring spreader spring (48).

26. Hydraulic motor-pump unit with fixed or variable displacement according to Claim 1, **characterized in that** the inlet-outlet internal duct (57) is anchored into the inlet-outlet distributor (43) and/or into the motor-pump casing (2) via one or other of the ends of the said duct (57) by means of at least one duct fixed shutoff ball joint component (59) and/or at least one duct sliding shutoff ball joint component (60), the said ball joint component (59, 60) having a shutoff ball joint component land (105) that can rest on a shutoff ball joint component seat (64).

27. Hydraulic motor-pump unit with fixed or variable displacement according to Claim 26, **characterized in that the** duct fixed shutoff ball joint component (59) is kept in contact with its shutoff ball joint component seat (64) by a shutoff ball joint component spring which bears on the one hand on the inlet-outlet distributor (43) or on the motor-pump casing (2) or on a duct sliding shutoff ball joint component (60) and, on the other hand, directly or otherwise against the said fixed shutoff ball joint component (59).

28. Hydraulic motor-pump unit with fixed or variable displacement according to Claim 26, **characterized in that the** duct sliding shutoff ball joint component (60) is made up of at least one sliding shutoff half ball joint component (107) through which the inlet-outlet internal duct (57) passes axially, the said half ball joint component (107) being capable of an axial translational movement that is fluidtight with respect to the said internal duct (57), whereas the said half ball joint component (107) is kept in contact with its shutoff ball joint component seat (64) by a shutoff ball joint component spring (106) which bears on the one hand on the inlet-outlet distributor (43) or on the motor-pump casing (2) or on another sliding shutoff half ball joint component (107) and, on the other hand, directly or otherwise on the said sliding shutoff half ball joint component (107).

29. Hydraulic motor-pump unit with fixed or variable displacement according to Claim 1, **characterized in that the** inlet-outlet external duct (58) is anchored in the inlet-outlet distributor (43) and/or in the motor-pump casing (2) via one or other of the ends of the said duct (58) by means of at least one duct fixed shutoff ball joint component (59), the said ball joint component (59, 60) having a shutoff ball joint component land (105) which can rest on a shutoff ball joint component seat (64).

30. Hydraulic motor-pump unit with fixed or variable displacement according to either one of Claims 15 and 18, **characterized in that the** internal duct chamber (55) is closed by an internal duct plug (66).

31. Hydraulic motor-pump unit with fixed or variable displacement according to either one of Claims 15 and 18, **characterized in that the** external duct chamber (56) is closed by an external duct plug (67) through which the inlet-outlet external duct (58) passes.

32. Hydraulic motor-pump unit with fixed or variable displacement according to Claim 1, **characterized in that the** inlet-outlet internal duct (57) is housed completely or partially inside the inlet-outlet external duct (58).

33. Hydraulic motor-pump unit with fixed or variable displacement according to Claim 1, **characterized in that the** motor-pump casing (2) comprises a connection satellite (62) in which the inlet-outlet internal duct (57) and/or the inlet-outlet external duct (58) are anchored.

34. Hydraulic motor-pump unit with fixed or variable displacement according to Claims 1 and 2, **characterized in that the** peripheral rotor stator (65) is articulated to the angular synchronization pinion spindle (81) about which it can turn under the action of a displacement-variation servomotor (68).

35. Hydraulic motor-pump unit with fixed or variable displacement according to Claim 34, **characterized in that the** displacement-variation servomotor (68) is a servomotor rotary electric motor (30) which can make a displacement variation ring gear attack pinion (108) turn - in one direction or the other and via a servomotor reduction gear (31) -, the said pinion (108) being able to turn in a bearing formed in the motor-pump casing (2) and being able to drive the rotation of a displacement-variation ring gear (109) secured to the peripheral rotor stator (65), the pitch circle of the said ring gear (109) being centred on the angular synchronization pinion spindle (81).

36. Hydraulic motor-pump unit with fixed or variable displacement according to Claims 2 and 34, **characterized in that** re-phasing means (197) are interposed between the peripheral rotor angular synchronization ring gear (42) and the central rotor angular synchronization ring gear (11).

37. Hydraulic motor-pump unit with fixed or variable displacement according to Claim 36, **characterized in that the** re-phasing means (197) consist of at least one re-phasing intermediate gear (198) comprising at least one re-phasing gearwheel (199) rotating about at least one re-phasing spindle (200) secured to the peripheral rotor stator (65), the said gear (198) being interposed between the peripheral rotor angular synchronization ring gear (42) and the angular synchronization pinion (12).

38. Hydraulic motor-pump unit with fixed or variable displacement according to Claim 1, **characterized in that the** inlet-outlet internal duct (57) and the inlet-outlet external duct (58) are directly or indirectly and respectively connected to the inlet or the outlet of at least one second hydraulic motor-pump unit (125) with fixed or variable displacement, the hydraulic motor-pump unit (1) with fixed or variable displacement and the second hydraulic motor-pump unit (125) with fixed or variable displacement together constituting a hydraulic transmission device (63).

39. Hydraulic motor-pump unit with fixed or variable displacement according to Claim 38, **characterized in that the** central rotor power take-off (4) of the motor-pump unit (1) with fixed or variable displacement is mechanically connected to at least one propulsion engine (123) that a motor vehicle (110) comprises while the second hydraulic motor-pump unit (125) with fixed or variable displacement is mechanically connected to at least one driven wheel or caterpillar track (124) that the said vehicle (110) comprises, or vice versa.

40. Hydraulic motor-pump unit with fixed or variable displacement according to either one of Claims 38 and 39, **characterized in that the** inlet-outlet internal duct (57) may be placed in communication with at least one high-pressure accumulator (71) via at least one internal duct high-pressure accumulator valve (112).

41. Hydraulic motor-pump unit with fixed or variable displacement according to either one of Claims 38 and 39, **characterized in that the** inlet-outlet external duct (58) may be placed in communication with at least one high-pressure accumulator (71) via at least one external duct high-pressure accumulator valve (128).

42. Hydraulic motor-pump unit with fixed or variable displacement according to either one of Claims 38 and 39, **characterized in that the** inlet-outlet internal duct (57) can be placed in communication with at least one low-pressure accumulator (118) via at least one internal duct low-pressure accumulator valve (129).

43. Hydraulic motor-pump unit with fixed or variable displacement according to either one of Claims 38 and 39, **characterized in that the** inlet-outlet external duct (58) can be placed in communication with at least one low-pressure accumulator (118) via at least one external duct low-pressure accumulator valve (130).

44. Hydraulic motor-pump unit with fixed or variable displacement according to any one of Claims 40, 41, 42 and 43, **characterized in that the** high-pressure accumulator (71) and/or the low-pressure accumulator (118) comprises at least one accumulator dividing piston (72) able to move in fluidtight fashion inside an accumulator blind cylinder (113), the said piston (72) with the said cylinder (113) delimiting a gas compartment (116) containing a pressurized gas (115) and an oil compartment (117) containing a motor-pump oil (114), the latter compartment (117) being able to be placed in communication with the inlet-outlet internal duct (57) and/or the inlet-outlet external duct (58).

45. Hydraulic motor-pump unit with fixed or variable displacement according to Claim 44, **characterized in that the** oil compartment (117) comprises an accumulator closure valve shutter (73) that the accumulator dividing piston (72) can press firmly against an accumulator valve seat (74) by pushing against a high stiffness valve shutter spring (76) interposed between the said piston (72) and the said valve shutter (73) so as to isolate the said compartment (117) in a fluidtight manner from the inlet-outlet internal duct (57) and/or from the inlet-outlet external duct (58), the said valve shutter (73) collaborating - on the opposite side from the high-stiffness valve shutter spring (76) - with a low-stiffness valve shutter spring (75) which tends to move the said valve shutter (73) away from the said seat (74).

46. Hydraulic motor-pump unit with fixed or variable displacement according to Claim 45, **characterized in that the** accumulator dividing piston (72) can push against the high-stiffness valve shutter spring (76) by means of a high-stiffness spring pushrod (77) which is guided in longitudinal translation by a pushrod and valve shutter guide (78) secured to the high-pressure accumulator (71) and/or to the low-pressure accumulator (118), the said valve shutter guide (78) also guiding the accumulator closure valve shutter (73) and comprising a pushrod end stop (79) which determines the maximum travel of the high-stiffness spring pushrod (77) towards the accumulator dividing piston (72).

47. Hydraulic motor-pump unit with fixed or variable displacement according to Claim 46, **characterized in that the** pushrod and valve shutter guide (78) comprises at least one valve shutter guide radial orifice (80) which connects the oil compartment (117) to the accumulator valve shutter seat (74) so as to allow the motor-pump oil (114) to flow between the inlet-outlet internal duct (57) and/or the inlet-outlet external duct (58) and the said oil compartment (117).

48. Hydraulic motor-pump unit with fixed or variable displacement according to any one of Claims 36, 37, 38 and 39, **characterized in that the** high-pressure accumulator (71) and/or the low-pressure accumulator (118) is connected to the inlet-outlet internal duct (57) and/or to the inlet-outlet external duct (58) by an accumulator locking valve (145) which can isolate the said accumulator (71, 118) in a fluidtight manner from the said internal duct (57) and/or the said external duct (58).

49. Hydraulic motor-pump unit with fixed or variable displacement according to either one of Claims 42 and 43, **characterized in that the** low-pressure accumulator (118) is supplied with a motor-pump oil (114) by at least one low-pressure pump (119) driven by a low-pressure pump motor (120), the intake duct of the said pump (119) being connected to a motor-pump oil reservoir (121) whereas its delivery duct is connected to the said accumulator (118).

50. Hydraulic motor-pump unit with fixed or variable displacement according to either one of Claims 38 and 39, **characterized in that the** inlet-outlet internal duct (57) can be placed in communication via an internal duct exchanger-dissipater valve (131) with at least one exchanger-dissipater internal duct (135) that a pressure-drop exchanger-dissipater (126) comprises, the said duct (135) comprising at least one dissipater heat exchange external surface (136) which is in contact with a cooling gas or a cooling liquid.

51. Hydraulic motor-pump unit with fixed or variable displacement according to either one of Claims 38 and 39, **characterized in that the** inlet-outlet external duct (58) can be placed in communication via an external duct exchanger-dissipater valve (132) with at least one exchanger-dissipater internal duct (135) that a pressure-drop exchanger-dissipater (126) comprises, the said duct (135) comprising at least one dissipater heat exchange external surface (136) which is in contact with a cooling gas or a cooling liquid.

52. Hydraulic motor-pump unit with fixed or variable displacement according to either one of Claims 38 and 39, **characterized in that the** inlet-outlet internal duct (57) can be placed in communication with an ancillary hydraulic motor (127) via an internal duct ancillary motor valve (133).

53. Hydraulic motor-pump unit with fixed or variable displacement according to either one of Claims 38 and 39, **characterized in that the** inlet-outlet external duct (58) can be placed in communication with an ancillary hydraulic motor (127) via an external duct ancillary motor valve.

54. Hydraulic motor-pump unit with fixed or variable displacement according to either one of Claims 52 and 53, **characterized in that the** ancillary hydraulic motor (127) consists of at least a hydraulic turbine (137) mounted on a hydraulic turbine shaft (138) which comprises at least one hydraulic turbine blade (139) onto which at least one hydraulic turbine injector (140) can spray a jet of a motor-pump oil (114) axially and/or radially.

55. Hydraulic motor-pump unit with fixed or variable displacement according to any one of Claims 34, 38, 39, 40, 41, 42, 43, 48, 49, 50, 51, 52 and 53, **characterized in that** it comprises a motor-pump management computer (70) which controls the displacement-variation servomotor (68) to alter the displacement of the hydraulic motor-pump unit (1) with fixed or variable displacement, even the one that makes up the hydraulic transmission device (63) whether the latter be incorporated into the motor vehicle (110) or not, the said computer (70) also being able to control the internal duct high-pressure accumulator valve (112) and/or the external duct high-pressure accumulator valve (128), and/or the internal duct low-pressure accumulator valve (129), and/or the external duct low-pressure accumulator valve (130), and/or the accumulator locking valve (145) and/or the low-pressure pump motor (120) and/or the internal duct exchanger-dissipater valve (131) and/or the external duct exchanger-dissipater valve (132) and/or the internal duct ancillary motor valve (133) and/or the external duct ancillary motor valve.

56. Hydraulic motor-pump unit with fixed or variable displacement according to Claim 55, **characterized in that the** motor-pump management computer (70) is connected by wired, optical or electromagnetic data transmission means to at least one gearshift lever (146) and/or at least one gearshift paddle (147) and/or at least one gearshift button (148) and/or a clutch pedal (149) and/or a brake pedal (150) and/or an accelerator pedal (151) that a driving position (152) that the motor vehicle (110) comprises possesses.

57. Hydraulic motor-pump unit with fixed or variable displacement according to Claims 39 and 55, **characterized in that the** motor-pump management computer (70) is connected by wired, optical or electromagnetic data transmission means to at least one transmission configuration button or knob (153) and/or transmission configuration screen (154) and/or transmission configuration microphone (155) and/or transmission configuration loudspeaker (156) that a driving position (152) that the motor vehicle (110) comprises possesses.
